(19) Europäisches Patentamt
European Patent Office
Office européen des brevets

(11) **EP 1 971 209 B1**

(12) **FASCICULE DE BREVET EUROPEEN**

(45) Date de publication et mention de la délivrance du brevet:
**20.09.2017 Bulletin 2017/38**

(21) Numéro de dépôt: **07717686.5**

(22) Date de dépôt: **08.01.2007**

(51) Int Cl.:
*A23C 1/00* *(2006.01)*   *A23C 9/123* *(2006.01)*

(86) Numéro de dépôt international:
**PCT/FR2007/000024**

(87) Numéro de publication internationale:
**WO 2007/077401 (12.07.2007 Gazette 2007/28)**

(54) **POUDRE DE LAIT FERMENTÉ OU YAOURT À HAUTE DENSITÉ EN FERMENTS LACTIQUES**

FERMENTIERTES MILCH- ODER JOGHURTPULVER MIT HOHER DICHTE AN MILCHFERMENTEN

FERMENTED MILK OR YOGHURT POWDER WITH A HIGH DENSITY OF LACTIC FERMENTS

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**RS**

(30) Priorité: **06.01.2006 FR 0600130**

(43) Date de publication de la demande:
**24.09.2008 Bulletin 2008/39**

(73) Titulaire: **Intercontinental Great Brands LLC East Hanover, NJ 07936 (US)**

(72) Inventeurs:
 • MARCHAL, Laurent
   F-91360 Villemoisson Sur Orge (FR)
 • AYMARD, Pierre
   F-92160 ANTONY (FR)
 • GEYSELS, Yvo
   B-3950 Bocholot (BE)
 • DAVAL, Christophe
   F-94600 Choisy le Roi (FR)
 • JESSENNE, Pierre
   F-59299 Boeschepe (FR)
 • LECROIX, Francis
   F-59270 Godewaersvelde (FR)

(74) Mandataire: **Desaix, Anne et al
Ernest Gutmann - Yves Plasseraud S.A.S.
3, rue Auber
75009 Paris (FR)**

(56) Documents cités:
   **EP-A- 0 518 096   FR-A- 2 609 044**

   FR-A- 2 793 257

• BIELECKA M ET AL: "SURVIVAL OF SYNERGISTIC SETS OF STREPTOCOCCUS SALIVARIUS SUBSP. THERMOPHILUS AND LACTOBACILLUS DELBRUECKII SUBSP. BULGARICUS CULTURES DURING SPRAY DRYING OF YOGURT" POLISH JOURNAL OF FOOD AND NUTRITION SCIENCES, POLSKA AKADEMIA NAUK, OLSZTYN-KORTOWO, PL, vol. 7, no. 2, 1998, pages 267-274, XP008067804 ISSN: 1230-0322
• BIELECKA M ET AL: "EFFECT OF SPRAY DRYING TEMPERATURE OF YOGHURT ON THE SURVIVAL OF STARTER CULTURES, MOISTURE CONTENT AND SENSORIC PROPERTIES OF YOGHURT POWDER" NAHRUNG - FOOD, VCH VERLAGSGESELLSCHAFT, WEINHEIM, XX, vol. 44, no. 4, 2000, pages 257-260, XP008067749 ISSN: 0027-769X
• RYBKA S ET AL: "THE SURVIVAL OF CULTURE BACTERIA IN FRESH AND FREEZE-DRIED AB YOGHURTS" AUSTRALIAN JOURNAL OF DAIRY TECHNOLOGY, DAIRY INDUSTRY ASSOCIATION OF AUSTRALIA, MELBOURNE, AU, vol. 50, no. 2, 1 novembre 1995 (1995-11-01), pages 51-57, XP000543353 ISSN: 0004-9433
• KUMAR P ET AL: "YOGHURT POWDER - A REVIEW OF PROCESS TECHNOLOGY, STORAGE AND UTILIZATION" FOOD AND BIOPRODUCTS PROCESSING, INSTITUTION OF CHEMICAL ENGINEERS, RUGBY, GB, vol. 82, no. C02, juin 2004 (2004-06), pages 133-142, XP008067798 ISSN: 0960-3085

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- ANONYMOUS: "YOGURT CULTURE DOES LIVE PERFORMANCE" PREPARED FOODS, GORMAN PUB., CHICAGO, IL, US, vol. 160, no. 7, juin 1991 (1991-06), page 53, XP008067799 ISSN: 0747-2536
- RAO, D.R.; REDDY, A.V.; PULUSANI, S.R., CORNWELL, P.E.: "Biosynthesis and Utilisation of Folic Acid and" J DAIRY SCI, vol. 67, 1984, pages 1169-1174, XP008087823
- RAO D R ET AL: "Vitamin content of cultured milk products" CULTURED DAIRY PRODUCTS JOURNAL, XX, XX, vol. 22 (1), février 1987 (1987-02), pages 6-10, XP008087812
- SMID E J; STARRENBERG M J C; MIERAU I; SYBESMA W; HUGENHOLTZ J: "Increase of folate levels in fermented foods." MILK & DAIRY PRODUCTS, vol. 10, 2001, pages 13-15, XP008087821 GB

Remarques:
    Le dossier contient des informations techniques présentées postérieurement au dépôt de la demande et ne figurant pas dans le présent fascicule.

**Description**

Domaine technique

La demande et l'invention relèvent de l'industrie laitière et de l'industrie alimentaire.

Elles sont relatives à une poudre de lait fermenté ou yaourt qui comprend au moins une souche de Streptococcus thermophilus et au moins une souche de Lactobacillus bulgaricus, et qui est à haute concentration en ferments lactiques vivants ou viables.

Elles sont également relatives à des moyens pour produire une telle poudre, et plus particulièrement à un procédé pour la production de yaourts ou laits fermentés à haute concentration en ferments lactiques vivants ou viables, à un procédé pour la production de ladite poudre à partir de tels yaourts ou laits fermentés, et aux produits intermédiaires et finaux mis en oeuvre ou obtenus lors de la mise en oeuvre de ces procédés.

Elles sont en outre relatives aux applications de la poudre selon la demande ou l'invention dans le domaine alimentaire, et plus particulièrement dans le domaine des produits laitiers, des biscuits, et confiseries.

Arrière-plan technologique

De nombreux essais de production de poudre de lait fermenté ou yoghourt ont été réalisés dans l'art antérieur.

Les solutions de l'art antérieur ne mettent pas en oeuvre une symbiose S. thermophilus - L. bulgaricus, exercée sur substrat laitier de sorte à ce que ce substrat se transforme en un produit sous forme de poudre qui soit adapté à une consommation humaine, et qui réponde à l'appellation de lait fermenté ou yoghourt, avec une population en ferments lactiques, et notamment en S. thermophilus, au moins égale à $5.10^8$ ufc/g, et/ou avec une population de L. bulgaricus d'au moins $1.10^4$ ufc/g.

En effet, les solutions de l'art antérieur décrivent généralement la pulvérisation de milieux qui sont des milieux de culture. Ces milieux de culture ne peuvent conduire à un produit qui réponde à l'appellation de lait fermenté ou yoghourt. Ils sont en outre généralement non administrable à l'homme.

Plusieurs solutions de l'art antérieur préconisent également de concentrer les milieux de culture avant pulvérisation, voire de mélanger ce concentré de milieux de culture à d'autres composés avant de le pulvériser.

C'est par exemple le cas des solutions décrites dans les brevets EP 0 924 993 B1 (Société des Produits Nestlé S.A.), qui divulgue un aliment déshydraté qui contient des bactéries lactiques, et du brevet EP 0 818 529 B1, qui divulgue un procédé de séchage par pulvérisation (Société des Produits Nestlé S.A.).

Dans les deux cas, les bactéries lactiques sont apportées sous forme de milieu de culture pré-concentré. Le produit alimentaire obtenu en suivant l'enseignement de ce type d'art antérieur est un aliment qui n'est pas un aliment fermenté. Bielecka et al (Polish Journal of Food and Nutrition Sciences, vol. 7, no. 2, 1998 , p. 267-274) décrivent des ensembles synergiques de bactéries lactiques pour le séchage par pulvérisation de yaourt.

La demande et l'invention proposent une poudre de lait fermenté ou yaourt qui répond elle-même à l'appellation de lait fermenté ou yaourt, c'est-à-dire une poudre de lait fermenté ou yaourt à haute teneur en S. thermophilus et L. bulgaricus vivants ou viables. La poudre selon la demande ou l'invention résulte d'une symbiose lactique, et parvient à de hautes teneurs en S. thermophilus et L. bulgaricus, sans qu'il soit nécessaire d'ajouter des ferments lactiques vivants après l'inoculation pour fermentation.

La poudre selon la demande ou l'invention présente des teneurs particulièrement élevées en S. thermophilus et L. bulgaricus : elles sont en fait bien supérieures au seuil légal pour l'appellation de lait fermenté ou yoghourt, et présente de remarquables propriétés de conservation.

Résumé

La demande décrit :

- un procédé de production de yaourt ou lait fermenté à haute concentration en bactéries lactiques,
- un procédé de production de poudre de lait fermenté ou yaourt, ladite poudre étant obtenue à partir d'un yaourt ou lait fermenté à haute concentration en bactéries lactiques, et étant elle-même à haute concentration en bactéries lactiques,
- un substrat laitier ensemencé, susceptible d'être obtenu comme produit intermédiaire lors de la mise en oeuvre du procédé de yaourt ou lait fermenté selon la demande et/ou lors de la mise en oeuvre du procédé de production de poudre selon la demande,
- un yaourt ou lait fermenté, susceptible d'être obtenu comme produit final du procédé de production de yaourt ou lait fermenté selon la demande, et/ou comme produit intermédiaire lors de la mise en oeuvre du procédé de poudre selon la demande,

- un produit final obtenu à l'issu du procédé de production de poudre selon la demande, à savoir une poudre de lait fermenté ou yaourt,
- des compositions, et plus particulièrement des aliments, tels que biscuits, confiserie, contenant au moins une poudre selon la demande.

L'invention est relative à :

- un procédé de production de lait fermenté ou de yoghourt contenant S. thermophilus à une concentration d'au moins $5.10^8$ ufc/g et L. bulgaricus à une concentration d'au moins $1.10^7$ ufc/g,
- un procédé de production d'une poudre de lait fermenté ou de yoghourt, permettant d'obtenir une poudre à haute densité en ferments lactiques Streptococcus thermophilus et Lactobacillus bulgaricus, sans avoir à ajouter de bactéries lactiques S. thermophilus et L. bulgaricus autres que celles ayant participé à la fermentation lactique, ladite poudre présentant en outre de très bonnes propriétés de conservation des ferments Streptococcus thermophilus et Lactobacillus bulgaricus qu'elle contient,
- un produit intermédiaire qui est susceptible d'être produit au cours de la mise en oeuvre du procédé de production de poudre selon l'invention, et qui est constitué d'un lait fermenté ou yoghourt,
- un produit intermédiaire qui est susceptible d'être produit au cours de la mise en oeuvre d'un procédé selon l'invention, et qui est constitué de substrat laitier ensemencé ou d'un lait fermenté ou yoghourt, ledit substrat laitier ensemencé, ou, le cas échéant, ledit lait fermenté ou yoghourt, présentant une teneur en matières sèches de 25 à 60%, préférentiellement de 28 à 55%, plus préférentiellement de 38 à 45%,
- une poudre de lait fermenté ou de yoghourt, susceptible d'être obtenue par le procédé de production de poudre de l'invention, et à
- des produits alimentaires contenant une poudre selon l'invention.

La poudre de lait fermenté ou yaourt selon la demande ou l'invention est hautement concentrée en ferments lactiques vivants ou viables, et plus particulièrement en S. thermophilus et L. bulgaricus.
Elle résulte d'une activité symbiotique entre S. thermophilus et L. bulgaricus : elle ne correspond pas à une juxtaposition de souches qui seraient simplement ajoutées dans un milieu puis pulvérisées, mais bien à la pulvérisation conservatrice d'un lait après fermentation lactique symbiotique exercée par S. thermophilus et L. bulgaricus.
Le fait que la poudre selon la demande ou l'invention présente de hautes teneurs en S. thermophilus et L. bulgaricus, et qu'elle résulte de l'exercice d'une symbiose lactique entre S. thermophilus et L. bulgaricus, conduit à ce que la poudre selon la demande ou l'invention réponde elle-même à l'appellation de lait fermenté ou yoghourt.
A la connaissance de la Demanderesse, les poudres de l'art antérieur n'ont pas une composition et des teneurs en ferments lactiques, qui leur conféreraient l'appellation de yaourt ou lait fermenté. En effet, les poudres de yaourt commerciales possèdent le plus souvent une flore lactique résiduelle très faible, ce qui, dans l'art antérieur, est considéré comme avantageux du point de vue technologique car cela confère une plus grande stabilité organoleptique. Certaines poudres commerciales possèdent des teneurs en ferments lactiques plus élevés, mais en utilisant un procédé d'enrichissement après séchage (apport de bactéries exogènes). D'autres possèdent des teneurs élevées en S. thermophilus, mais des teneurs à peine mesurables en L. bulgaricus. Enfin d'autres poudres de yaourt sont déclarées comme contenant des teneurs élevées en ferments lactiques, voire avec une qualité stable pendant 6 mois à température ambiante ; mais les mesures effectuées par la Demanderesse sur ces poudres, détaillées plus loin (cf. exemples 12 et 13 ci-dessous), montrent que la population initiale réelle est inférieure à celle annoncée, et que ces poudres ne présentent pas une stabilité suffisante lors du stockage, ce qui conduit à une diminution significative de la flore lactique.
La poudre selon la demande ou l'invention, présente quant à elle des propriétés remarquables de conservation, tant à 5°C qu'à 20°C. Par exemple, au bout de 4 mois de conservation à 20°C, aucune diminution substantielle des populations en S. thermophilus et L. bulgaricus vivants ou viables n'est observée.
A 35°C, on observe une diminution progressive de la flore lactique, mais avec une vitesse généralement comparable à celle des poudres commerciales conservées à 5°C ou 20°C, conditions de conservation considérées comme idéales par l'homme de l'art.
A la connaissance de la Demanderesse, aucune des poudres de l'art antérieur n'a à la fois :

- une teneur en S. thermophilus et L. bulgaricus aussi haute, et
- d'aussi bonnes propriétés de conservation,

que la poudre selon la demande ou l'invention (cf. exemples 12 et 13 ci-dessous).
Dans la demande et l'invention, ST (ou St) signifie Streptococcus thermophilus, et LB (ou Lb) signifie Lactobacillus bulgaricus.

Brève description des figures

La figure 1 présente les trois grands types de courbes d'écoulement obtenues par application sur un modèle de lait fermenté d'un gradient croissant puis décroissant de cisaillement: courbe du haut, milieu à forte viscosité (souches lactiques de type filant) ; courbe du milieu, milieu à viscosité moyenne (souches lactiques de type texturant), courbe du bas, milieu à faible viscosité (souches lactiques de type cassant).

La figure 2 illustre la détermination de la viscosité d'un modèle de lait fermenté à partir de la partie descendante d'une courbe d'écoulement obtenue par application d'un gradient croissant puis décroissant de cisaillement (viscosité = pente de la droite de régression de la partie descendante de la courbe d'écoulement, avec en abscisse la racine carrée du gradient de cisaillement et en ordonnée la racine carrée de la contrainte).

La figure 3 présente un schéma de dispositif d'atomisation douce adapté à la production d'une poudre conforme à la demande et l'invention.

La figure 4 présente deux cinétiques d'acidification :

- courbe du bas : cinétique d'acidification obtenue par inoculation d'un substrat laitier par une souche de ST à hauteur de $2{,}7.10^9$ ufc/g et par une souche de LB à hauteur de $1{,}4.10^7$ ufc/g (inoculation conforme à la demande et l'invention, conduisant à un yaourt conforme à la demande et l'invention), et
- courbe du haut : cinétique d'acidification obtenue par inoculation d'un substrat laitier identique par les mêmes souches de ST et LB, mais à des doses inférieures à celles préconisées par la demande et l'invention (inoculation de ST à $1.10^7$ ufc/g, et de LB à $5.10^4$ ufc/g).

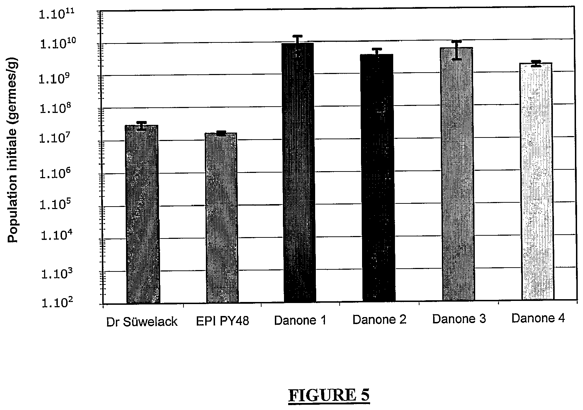

La figure 5 illustre les différences de population initiale en ferments (dans cette figure, « Danone 1 », « Danone 2 » « Danone 3 » et « Danone 4 » sont des poudres de la demande et de l'invention, tandis que « Dr. Süwelack M/A 5.4 Active», « EPI PY48 » sont des poudres de l'art antérieur).

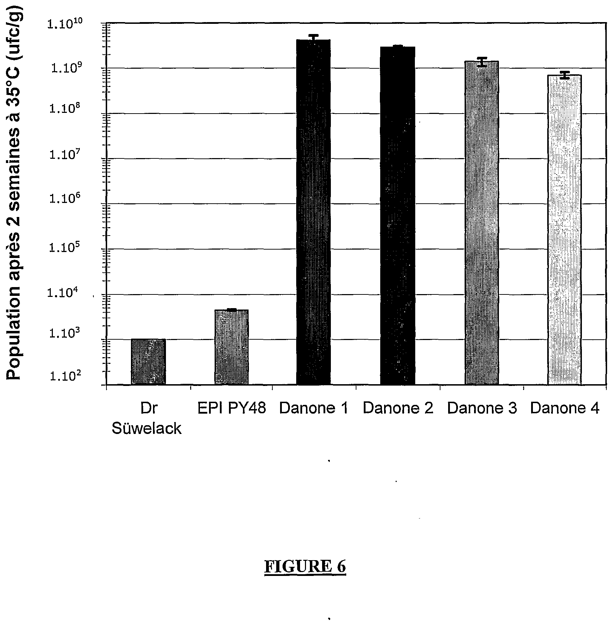

La figure 6 illustre la stabilité des ferments dans les poudres de la demande et de l'invention conservées à 35°C pendant 2 semaines (en figure 6, « DANONE 1 », « DANONE 2 » « DANONE 3 » et « DANONE 4 » sont des poudres de la demande et de l'invention).

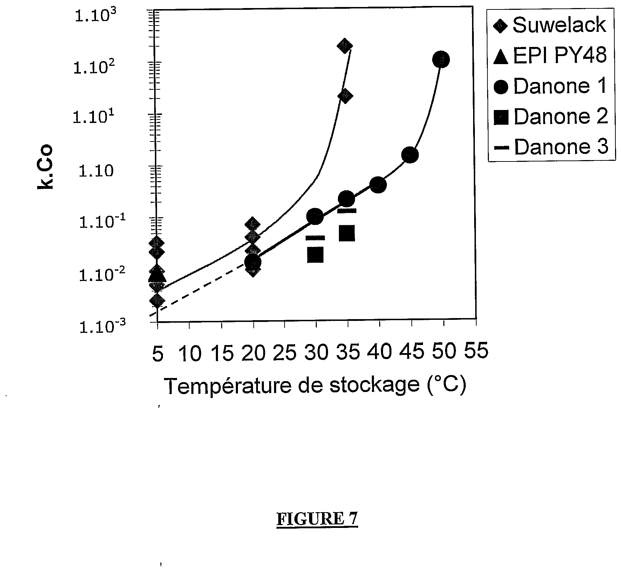

La figure 7 présente l'évolution de la constante de vitesse (produit $k \times C_o$) en fonction de la température de stockage. En figure 7, « DANONE 1 », « DANONE 2 » et « DANONE 3 » sont des poudres de la demande et de l'invention, tandis que « Suwelack » (=« Dr. Süwelack M/A 5.4 Active ») et « EPI PY48 » sont des poudres de l'art antérieur.

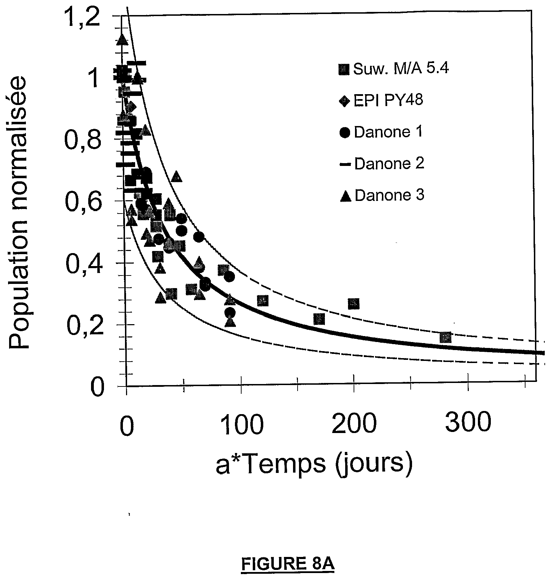

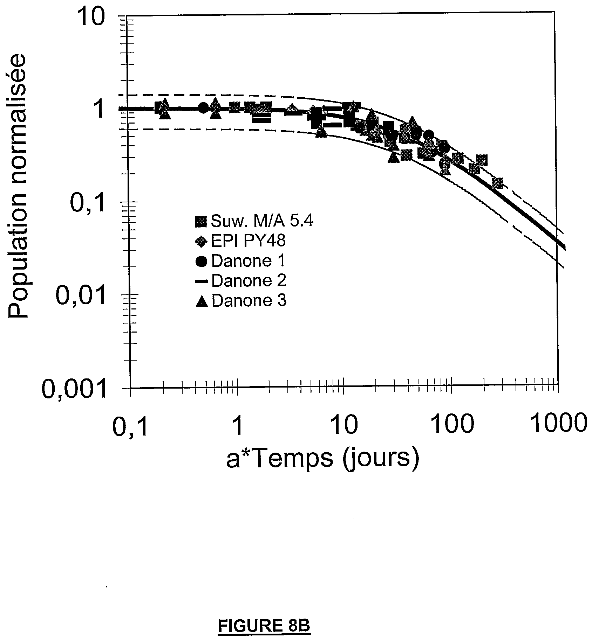

Les figures 8A et 8B présentent l'évolution de la population normalisée en ferments lactiques au cours du temps pour des poudres du commerce, et pour des poudres selon la demande et l'invention. Les poudres de la demande et de l'invention sont « DANONE 1 », «DANONE 2» et «DANONE 3», tandis que « Suw. M/A 5.4 Active» (=« Dr. Süwelack M/A 5.4 Active ») et « EPI PY48 » sont des poudres de l'art antérieur.

Figure 8A : courbe maîtresse en coordonnées linéaires (ligne continue épaisse = ordre 2 ; lignes pointillées = ordre 2 plus ou moins 20%)

Figure 8B : courbe maîtresse en coordonnées logarithmiques (ligne continue épaisse = ordre 2 ; lignes pointillées = ordre 2 plus ou moins 20%)

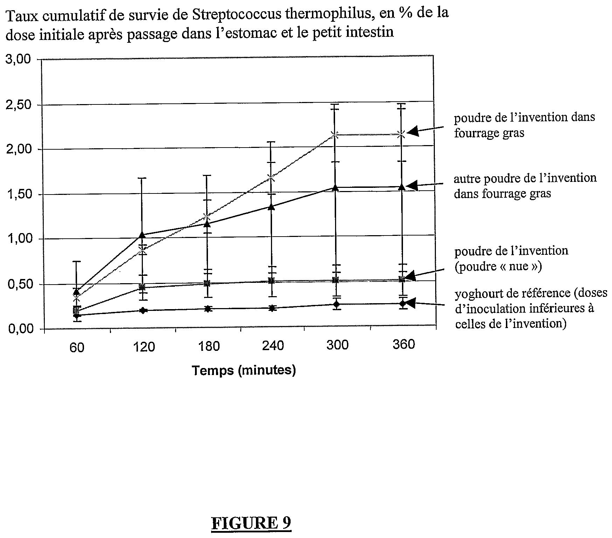

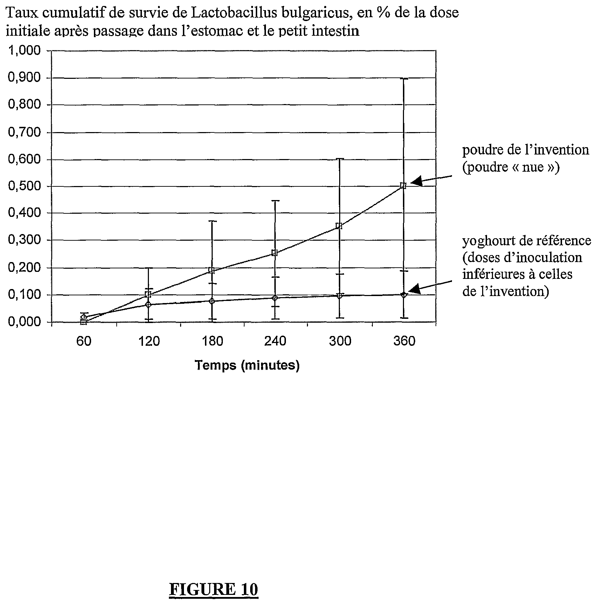

Les figures 9 et 10 présentent des taux cumulatifs de survie de ST (figure 9) et LB (figure 10), en pourcentage de la dose initiale après passage dans l'estomac et le petit intestin.

Figure 9 (ST) : poudre de la demande et de l'invention nue ou en fourrage (les trois courbes du haut), comparée à un yoghourt de référence (courbe du bas) obtenu à partir de doses d'inoculation inférieures à celles préconisées par la demande et l'invention.

Figure 10 (LB) : poudre de la demande et de l'invention -poudre nue- (courbe du haut), comparée à un yoghourt de référence (courbe du bas) obtenu à partir de doses d'inoculation inférieures à celles préconisées par la demande et l'invention.

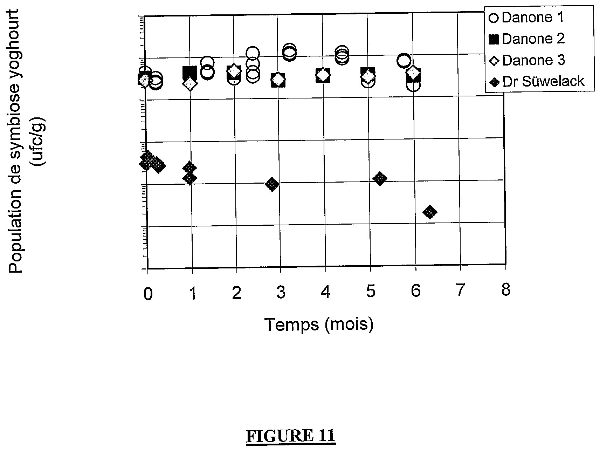

La figure 11 présente les taux de survie ST+LB mesurées au cours de la conservation à une température de 20°C de poudres de la demande et de l'invention (« Danone 1 », « Danone 2 » et « Danone 3 »), et d'une poudre disponible dans le commerce (« Dr Süwelack » = « Dr. Süwelack M/A 5.4 Active »).

Description détaillée

La demande et l'invention proposent une solution technique pour produire :

- un lait fermenté ou yaourt à haute concentration en ferments lactiques, sous forme vivante ou viable, sans qu'il soit nécessaire de procéder à un ajout de bactéries lactiques qui ne participeraient pas à la fermentation lactique et/ou qui seraient ajoutées postérieurement à l'inoculation, et sans qu'il ne soit nécessaire de concentrer la masse fermentée, et
- une poudre de lait fermenté ou yoghourt à haute concentration en ferments lactiques, sous forme vivante ou viable, qui peut être obtenue à partir d'un tel lait fermenté ou yaourt à haute concentration en ferments lactiques, et sans ajout de ferment(s) lactique(s) à la poudre.

La poudre selon la demande ou l'invention répond elle-même à l'appellation de lait fermenté ou yoghourt.

A cette fin, la demande propose :

- la mise en oeuvre d'au moins une souche de S. thermophilus, et d'au moins une souche de L. bulgaricus pour fermentation d'un substrat laitier,
- en inoculant ces souches à une hauteur bien supérieure à celle généralement pratiquée pour la fabrication de yaourt,
- en sélectionnant de préférence les souches de S. thermophilus qui sont des souches cassantes,
- en incorporant au moins une souche de L. bulgaricus à une hauteur non négligeable, de sorte à développer une symbiose S. thermophilus - L. bulgaricus,
- en séchant le lait fermenté ou yoghourt obtenu dans des conditions suffisamment douces pour maintenir une population totale de S. thermophilus et de L. bulgaricus qui est d'au moins $1.10^7$ ufc/L, préférentiellement d'au moins $5.10^8$ ufc/L, plus préférentiellement d'au moins $1.10^9$ ufc/L, et
- de préférence, en séchant le lait fermenté ou yoghourt obtenu jusqu'à ce que la poudre obtenue ait une Aw (activité de l'eau) faible, préférentiellement inférieure ou égale à 0,3, très préférentiellement inférieure ou égale à 0,25, le plus préférentiellement inférieure ou égale à 0,2.

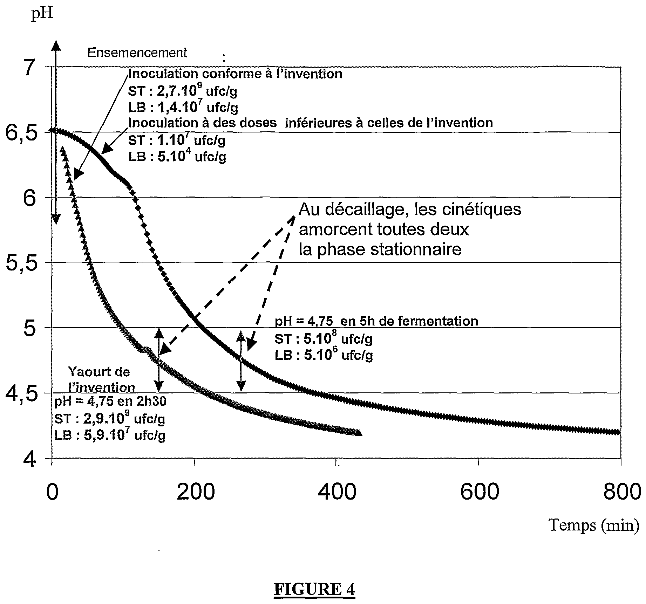

Comme décrit ci-dessous plus en détail, et illustré par les exemples comparatifs joints, la poudre de lait fermenté ou yoghourt présente d'exceptionnelles capacités de conservation.
Les caractéristiques métaboliques des poudres selon la demande ou l'invention sont à tout le moins équivalentes à celles de yoghourts de référence.
Les poudres selon la demande ou l'invention répondent à l'appellation de yoghourt non seulement de par leurs hautes teneurs en bactéries ST et LB sous forme vivante ou viable, et de par la cinétique d'acidification qui a été suivie lors de la fermentation lactique (cf. exemple 4 et Figure 4 ; cf. exemple 11), mais aussi de par leurs teneurs en métabolites secondaires, qui sont à tout le moins équivalentes à celles d'un yoghourt de référence (cf. exemple 10).
Lorsque l'on suit le procédé de la demande ou l'invention, on procède à une inoculation massive du substrat laitier. Cette inoculation massive a pour effet de conduire à une croissance très limitée en biomasse, par rapport à la croissance cellulaire qui serait observée lors de la fabrication de yoghourts classiques (doses classiques d'ensemencement, inférieures à celles de la demande ou l'invention). Les inventeurs démontrent que, contrairement à ce qui pourrait être *a priori* envisagé, bien que la croissance cellulaire soit considérablement réduite, l'activité fermentaire est à tout le moins équivalente, voire supérieure, à celle susceptible d'être observée lors d'une fermentation yoghourt classique.
La demande et l'invention proposent et permettent de découpler croissance cellulaire et activité fermentaire.
Les inventeurs démontrent que les caractéristiques métaboliques des yoghourts, laits fermentés mais aussi des poudres selon la demande ou l'invention sont au moins équivalentes, voir supérieures, à celles susceptibles d'être observées dans un yoghourt classique.
En effet, les inventeurs démontrent que pour certains métabolites secondaires, tels que, par exemple, les folates (vitamine B9), les caractéristiques des poudres selon la demande ou l'invention sont même nettement supérieures à celles de yoghourts de référence (cf. exemple 10).
En outre, les caractéristiques métaboliques des poudres selon la demande ou l'invention, et notamment ses caractéristiques supérieures en vitamine B9, sont conservées lors du stockage des poudres selon la demande ou l'invention pendant plusieurs mois, par exemple pendant au moins 4 mois à 20°C (cf. exemples 12 et 13).

Par comparaison, un yoghourt classique ne peut généralement être conservé plus de 48 heures à 20°C sans devenir impropre à la consommation.

Comme notamment illustré en exemples 4 et 10, la demande et l'invention démontrent que le fait de procéder à un ensemencement massif du substrat laitier permet non seulement d'obtenir un métabolisme fermentaire conforme à l'exercice d'une symbiose ST+LB vraie, alors même que la croissance cellulaire est beaucoup plus limitée qu'elle ne le serait à des doses classiques d'inoculation, mais elles démontrent en outre que le métabolisme fermentaire ainsi obtenu est au moins équivalent, voire supérieur à ce qu'il pourrait être observé lors d'une fabrication classique de yoghourt ou lait fermenté.

La demande et l'invention démontrent en outre que le fait de combiner cet ensemencement massif à une pulvérisation douce mais approfondie du yaourt ou lait fermenté qui a été obtenu par ensemencement massif du substrat laitier, permet d'obtenir des poudres dont la stabilité au stockage, et notamment la stabilité au stockage à température ambiante, est excellente.

Dans l'art antérieur, il existe un préjugé selon lequel une pulvérisation approfondie, et plus particulièrement une pulvérisation jusqu'à des Aw (activité de l'eau) très basses, ne permettrait pas d'obtenir des taux de survie satisfaisants pour S. thermophilus et L. bulgaricus.

Selon un mode de réalisation préféré, la demande et l'invention proposent précisément d'aller à l'encontre de ce préjugé en menant une pulvérisation douce mais très approfondie, et de combiner cette procédure de pulvérisation à un ensemencement massif du substrat laitier.

La demande et l'invention sont relatives à un procédé de production de yaourt ou lait fermenté, qui permet d'obtenir un yaourt ou lait fermenté à haute concentration en ferments lactiques, sans qu'il soit nécessaire de procéder à un ajout de bactéries lactiques qui ne participeraient pas à la fermentation lactique et/ou qui seraient ajoutées postérieurement à l'inoculation, et sans qu'il ne soit nécessaire de concentrer la masse fermentée.

Le procédé de production de yaourt ou lait fermenté selon la demande comprend :

- l'ensemencement d'un substrat laitier, qui a éventuellement subi un traitement thermique au moins équivalent à la pasteurisation, par inoculation d'au moins une souche de Streptococcus thermophilus à haute concentration, avantageusement à une concentration d'au moins $5.10^8$ ufc/g, et d'au moins une souche de Lactobacillus bulgaricus à haute concentration, avantageusement à une concentration d'au moins $1.10^6$ ufc/g, pour obtenir un substrat laitier ensemencé,
- la fermentation lactique du substrat laitier ainsi ensemencé, de sorte à obtenir un lait fermenté ou un yoghourt.

Le procédé de production de lait fermenté ou de yoghourt selon l'invention comprend :

- l'ensemencement d'un substrat laitier, qui a éventuellement subi un traitement thermique au moins équivalent à la pasteurisation, par inoculation d'au moins une souche de Streptococcus thermophilus, et d'au moins une souche de Lactobacillus bulgaricus, pour obtenir un substrat laitier ensemencé,
- la fermentation lactique du substrat laitier ainsi ensemencé, de sorte à produire un lait fermenté ou un yoghourt contenant lesdites souches de Streptococcus thermophilus et de Lactobacillus bulgaricus sous forme vivante ou viable,

caractérisé en ce que ladite au moins une souche de Streptococcus thermophilus est inoculée à une concentration d'au moins $5.10^8$ ufc/g, et en ce que ladite au moins une souche de Lactobacillus bulgaricus est inoculée à une concentration d'au moins $1.10^6$ ufc/g.

La demande et l'invention sont également relatives à un procédé de production d'une poudre de lait fermenté ou de yoghourt, qui permet d'obtenir une poudre à haute densité en ferments lactiques, sans qu'il soit nécessaire d'ajouter des bactéries lactiques qui ne participeraient pas à la fermentation lactique, et plus particulièrement sans qu'il soit nécessaire d'ajouter des bactéries lactiques après l'ensemencement initial du substrat laitier liquide.

Le procédé selon la demande comprend :

- l'ensemencement d'un substrat laitier, qui a éventuellement subi un traitement thermique au moins équivalent à la pasteurisation, par inoculation d'au moins une souche de Streptococcus thermophilus à haute concentration, avantageusement à une concentration d'au moins $5.10^8$ ufc/g, et d'au moins une souche de Lactobacillus bulgaricus à haute concentration, avantageusement à une concentration d'au moins $1.10^6$ ufc/g, pour obtenir un substrat laitier ensemencé,
- la fermentation lactique du substrat laitier ainsi ensemencé, de sorte à obtenir un lait fermenté ou un yoghourt,
- la pulvérisation du lait fermenté ou yoghourt ainsi obtenu.

De manière avantageuse, ladite pulvérisation est conduite dans des conditions, et notamment des conditions de température et/ou durée et/ou vitesse, et plus particulièrement des conditions de température, qui permettent d'obtenir des taux de survie de chacune desdites souches de S. thermophilus et L. bulgaricus, tels que la poudre obtenue contient ladite au moins une souche de S. thermophilus et ladite au moins une souche de L. bulgaricus, sous forme vivante ou viable, à une concentration d'au moins $5.10^8$ ufc/g et d'au moins $1.10^4$ ufc/g, respectivement.

Selon un mode de réalisation préféré, la pulvérisation du lait fermenté ou yoghourt est menée jusqu'à obtenir une poudre de lait fermenté ou yoghourt qui présente une Aw (activité de l'eau) inférieure ou égale à 0,3, très préférentiellement inférieure ou égale à 0,25, le plus préférentiellement inférieure ou égale à 0,2, tout en veillant à ce que les conditions de pulvérisation, et notamment les conditions de température(s) appliquées, soient suffisamment favorables à la survie desdites souches de S. thermophilus et L. bulgaricus pour obtenir des taux de survie de chacune desdites souches de S. thermophilus et L. bulgaricus, tels que la poudre obtenue contient ladite au moins une souche de S. thermophilus et ladite au moins une souche de L. bulgaricus, sous forme vivante ou viable, à une concentration d'au moins $5.10^8$ ufc/g et d'au moins $1.10^4$ ufc/g, respectivement.

Le procédé de production de poudre selon l'invention comprend :

- l'ensemencement d'un substrat laitier, qui a éventuellement subi un traitement thermique au moins équivalent à la pasteurisation, par inoculation d'au moins une souche de Streptococcus thermophilus à une concentration d'au moins $5.10^8$ ufc/g, et d'au moins une souche de Lactobacillus bulgaricus à une concentration d'au moins $1.10^6$ ufc/g, pour obtenir un substrat laitier ensemencé,
- la fermentation lactique du substrat laitier ainsi ensemencé, de sorte à produire un lait fermenté ou un yoghourt,
- la pulvérisation du lait fermenté ou yoghourt ainsi produit, en veillant à ce que la(les) valeur(s) de température(s) appliquée(s) lors de la pulvérisation soient suffisamment favorables à la survie desdites souches de S. thermophilus et L. bulgaricus pour que la poudre obtenue contienne ladite au moins une souche de S. thermophilus et ladite au moins une souche de L. bulgaricus, sous forme vivante ou viable, à une concentration d'au moins $5.10^8$ ufc/g et d'au moins $1.10^4$ ufc/g, respectivement, et le séchage des granules de poudre sur lit vibrant, à une température de 25°C à 40°C, préférentiellement de 30°C, jusqu'à obtenir une poudre de lait fermenté ou yoghourt qui présente une Aw (activité de l'eau) inférieure ou égale à 0,25.

Pour parvenir à produire une poudre à haute concentration en ferments lactiques, le procédé selon la demande ou l'invention ne requiert pas qu'une bactérie lactique soit ajoutée sans participer à la fermentation lactique.

Le procédé selon la demande ou l'invention ne requiert pas non plus que le lait fermenté ou yaourt soit concentré pour atteindre les hautes teneurs en S. thermophilus et L. bulgaricus souhaitées.

Le procédé selon la demande ou l'invention met en oeuvre au moins un substrat laitier, au moins une souche de S. thermophilus, et au moins une souche de L. bulgaricus.

Le terme « substrat laitier » est, dans la demande ou invention, entendu comme signifiant « lait » au sens où l'entend l'industrie laitière, c'est-à-dire un substrat contenant essentiellement du lait et/ou des composants du lait, et dont la composition est telle que la fermentation lactique de ce substrat laitier par des souches de S. thermophilus et L. bulgaricus conduit à un produit qui peut être destiné à l'alimentation humaine, et plus particulièrement qui répond à l'appellation de lait fermenté ou yoghourt.

Le terme « substrat laitier » couvre ainsi le lait d'origine animale sous toutes ses formes et dans toutes ses variantes de compositions : lait écrémé ou non, lait concentré ou non, lait ultrafiltré ou non, lait frais ou non, lait en poudre ou non, lait reconstitué ou non, lait recombiné ou non, lait enrichi en constituants du lait ou non, lait additionné ou non d'agents utiles à la fabrication ou à la qualité du produit fini, tels que agents de saveur, arômes, sucres, etc.

Le terme « substrat laitier » n'inclut toutefois pas dans sa portée la signification de « milieu de culture ». En effet, le terme « milieu de culture » vise un milieu destiné à favoriser et/ou stimuler la croissance de bactéries lactiques, et par là, à produire un inoculum de bactéries lactiques, alors que le terme « substrat laitier » vise un milieu qui est destiné à subir une transformation par fermentation, pour produire un aliment destiné à une consommation humaine. Ainsi, de nombreux composés qui peuvent être ajoutés dans un milieu de culture pour stimuler et/ou favoriser la croissance des bactéries lactiques, ne peuvent être ajoutés dans un substrat laitier pour l'obtention d'un lait fermenté ou yaourt.

C'est notamment le cas :

- de nombreux agents tensio-actifs et/ou émulsifiants et/ou agents solubilisants et/ou détergents, tels que le polyoxyethylene-sorbitan-20-monooleate (aussi connu sous le nom de polysorbate 80, ou de Tween 80),
- d'acides de type citrate, acétate,
- d'extraits de viande,
- peptones végétales,
- glycérophosphate.

Pour mettre en oeuvre le procédé selon la demande ou l'invention, au moins une souche de S. thermophilus est inoculée à haute concentration dans le substrat laitier. Avantageusement, elle est inoculée à une concentration d'au moins $5.10^8$ ufc/g.

De préférence, ladite au moins une souche de S. thermophilus est inoculée dans le substrat laitier à une concentration d'au moins $1.10^9$ ufc/g, plus préférentiellement d'au moins $2.10^9$ ufc/g, plus préférentiellement d'au moins $2,5.10^9$ ufc/g, très préférentiellement d'au moins $2,6.10^9$ ufc/g, encore plus préférentiellement d'au moins $2,7.10^9$ ufc/g.

De préférence, ladite au moins une souche de S. thermophilus est inoculée dans le substrat laitier à une concentration comprise entre $1.10^9$ ufc/g et $1.10^{10}$ ufc/g (bornes incluses).

Pour mettre en oeuvre le procédé selon la demande ou l'invention, au moins une souche de L. bulgaricus est inoculée dans le substrat laitier. Avantageusement, elle est inoculée dans le substrat laitier à une concentration d'au moins $1.10^6$ ufc/g.

De préférence, ladite au moins une souche de L. bulgaricus est inoculée dans le substrat laitier à une concentration d'au moins $1.10^7$ ufc/g, plus préférentiellement d'au moins $1,1.10^7$ ufc/g, plus préférentiellement d'au moins $1,2.10^7$ ufc/g, très préférentiellement d'au moins $1,3.10^7$ ufc/g, encore plus préférentiellement d'au moins $1,4.10^7$ ufc/g.

De préférence, ladite au moins une souche de L. bulgaricus est inoculée dans le substrat laitier à une concentration comprise entre $1.10^7$ ufc/g et $5.10^8$ ufc/g (bornes incluses).

Une fois que le substrat laitier est ensemencé par une haute concentration de ladite au moins une souche de S. thermophilus et par une haute concentration de ladite au moins une souche de L. bulgaricus, la fermentation lactique est conduite selon les techniques connues de la personne du métier, de sorte à obtenir un produit qui répond à l'appellation de lait fermenté ou yaourt.

Le substrat laitier ensemencé est donc maintenu dans des conditions, et notamment des conditions de température, favorables à l'activité de fermentation de ladite au moins une souche de S. thermophilus et de ladite au moins une souche de L. bulgaricus, jusqu'à ce qu'un lait fermenté ou un yaourt soit obtenu. Le pH initial du substrat laitier se situe généralement entre 8 et 6, pour descendre de deux à quatre unités pH environ, et atteindre, en fin de fermentation lactique, un pH final qui est généralement compris entre 5 et 4 (généralement, pH de 4,7-4,6 pour les yoghourts).

Dans la demande ou invention, on donne à tous les termes la portée et la signification qu'ils prennent usuellement dans le domaine de l'industrie laitière et/ou de l'industrie alimentaire.

Ainsi, lorsqu'il est fait référence à une « fermentation lactique », il s'agit d'une fermentation lactique acidifiante, qui se traduit par une acidification suite à la production d'acide lactique pouvant s'accompagner de production d'autres acides, de dioxyde de carbone, et de diverses substances telles que des exopolysaccharides (EPS) ou des substances aromatiques, par exemple diacétyle et acétaldéhyde.

De même, on entend par « ferment lactique », un microorganisme ou une souche de microorganismes vivant ou viable, qui est capable de mener une telle fermentation lactique acidifiante sur un substrat laitier.

On donne aux termes « laits fermentés » et « yoghourts » leurs significations usuelles dans le domaine de l'industrie laitière, c'est-à-dire des produits qui sont destinés à la consommation animale, et plus particulièrement humaine, et qui sont issus de la fermentation lactique acidifiante d'un substrat laitier. Ces produits peuvent contenir des ingrédients secondaires tels que fruits, végétaux, sucres, arômes, etc.

L'appellation de « lait fermenté » et de « yoghourts » répondent à des normes officielles strictes. On peut ainsi se reporter au Codex Alimentarius (préparé par la Commission du Codex Alimentarius sous l'égide de la FAO et de l'OMS, et publié par la Division Information de la FAO, disponible en ligne sur http://codexalimentarius.net; cf. plus particulièrement, le volume 12 du Codex Alimentarius « Normes Codes pour le lait et les produits laitiers », et la norme « CODEX STAN A-11 (a)-1975 », maintenant référencée sous CODEX STAN 243-2003).

On peut plus particulièrement se reporter au Décret français n°88-1203 du 30 décembre 1988 relatif aux laits fermentés et au yoghourt ou yaourt, publié au Journal Officiel de la République Française du 31 décembre 1988.

Ainsi, un yoghourt ne contient pas de bactéries lactiques autres que S. thermophilus et L. bulgaricus, alors qu'un lait fermenté peut contenir d'autres bactéries en sus de ces deux espèces.

Le terme « lait fermenté » est ainsi réservé dans la demande ou invention au produit laitier préparé avec un substrat laitier qui a subi un traitement au moins équivalent à la pasteurisation, ensemencé avec des microorganismes appartenant à l'espèce ou aux espèces caractéristiques de chaque produit. La coagulation des « laits fermentés » ne doit pas être obtenue par d'autres moyens que ceux qui résultent de l'activité des microorganismes utilisés.

Le terme « yoghourt » (ou « yaourt ») est quant à lui réservé au lait fermenté obtenu, selon les usages loyaux et constants, par le développement des bactéries lactiques thermophiles spécifiques dites Lactobacillus bulgaricus (également appelée Lactobacillus delbrueckii ssp. bulgaricus) et Streptococcus thermophilus, qui doivent se retrouver vivantes dans le produit fini, à raison d'au moins $1.10^7$ ufc de bactéries S. thermophilus et L. bulgaricus par gramme de produit, rapporté à la partie lactée de ce produit. Un produit répondant à l'appellation de yoghourt contiendra donc obligatoirement au moins une souche de S. thermophilus et au moins une souche de L. bulgaricus sous forme vivante, à raison d'au moins $1.10^7$ ufc/g de partie lactée.

La coagulation des « yoghourts » ne doit pas être obtenue par d'autres moyens que ceux qui résultent de l'activité des microorganismes utilisés.

Un « lait fermenté » ou un « yoghourt » n'a subi aucun traitement permettant de soustraire un élément constitutif du substrat laitier mis en oeuvre, et notamment n'a pas subi un égouttage du coagulum.

Un « lait fermenté » ou un « yoghourt » peut être additionné d'un ou plusieurs extraits d'aromates, d'un ou plusieurs arômes naturels, ainsi que, dans la limite de 30 pour 100 en poids du produit fini, d'un ou plusieurs sucres et autres denrées alimentaires conférant une saveur spécifique, voire de céréales.

L'incorporation en tant que produits de substitution de matières grasses et/ou protéiques d'origine non laitière est interdite.

La quantité d'acide lactique libre contenue dans un lait fermenté ne doit pas être inférieure à 0,6 gramme pour 100 grammes lors de la vente au consommateur, et la teneur en matière protéique rapportée à la partie lactée ne doit pas être inférieure à celle d'un lait normal.

La quantité d'acide lactique libre contenue dans un yoghourt ne doit pas être inférieure à 0,7 gramme pour 100 grammes lors de la vente au consommateur.

Conformément à la demande ou l'invention, le lait fermenté ou yoghourt produit par inoculation de ladite au moins une souche de S. thermophilus et de ladite au moins une souche de L. bulgaricus contiendra ces souches à une concentration légèrement supérieure à celle de leur inoculation.

Un lait fermenté ou yoghourt produit conformément à la demande ou invention pourra donc contenir :

- ladite au moins une souche de S. thermophilus à une concentration d'au moins $5.10^8$ ufc/g, préférentiellement d'au moins $1.10^9$ ufc/g, plus préférentiellement d'au moins $2.10^9$ ufc/g, plus préférentiellement d'au moins $2,5.10^9$ ufc/g, très préférentiellement d'au moins $2,6.10^9$ ufc/g, encore plus préférentiellement d'au moins $2,7.10^9$ ufc/g, et
- ladite au moins une souche de L. bulgaricus à une concentration d'au moins $1.10^7$ ufc/g, plus préférentiellement d'au moins $1,1.10^7$ ufc/g, plus préférentiellement d'au moins $1,2.10^7$ ufc/g, très préférentiellement d'au moins $1,3.10^7$ ufc/g, encore plus préférentiellement d'au moins $1,4.10^7$ ufc/g.

De préférence, un lait fermenté ou yoghourt produit conformément à la demande ou invention contiendra :

- ladite au moins une souche de S. thermophilus à une concentration comprise entre $1.10^9$ ufc/g et $1.10^{10}$ ufc/g (bornes incluses), et
- ladite au moins une souche de L. bulgaricus à une concentration comprise entre $1.10^7$ ufc/g et $5.10^8$ ufc/g (bornes incluses).

Un yoghourt ou lait fermenté conforme à la demande ou à l'invention comprend une haute densité en ST et LB sous forme vivante ou viable (teneurs en ST et LB sous forme vivante telles que décrites dans la demande ou pour l'invention, respectivement, par exemple teneur en ST vivants supérieure ou égale à $5.10^8$ cfu/g et teneur en LB vivants supérieure ou égale à $1.10^7$ cfu/g).

Selon un mode de réalisation particulier de la demande ou l'invention, le yoghourt ou lait fermenté produit présente en outre une teneur élevée en matière sèche.

Dans la demande ou invention, la teneur en matière sèche, ou teneur en MS, correspond à la masse de matière résiduelle mesurée après avoir placé le produit à 105°C pendant 17 heures, rapportée au volume initial ou à la masse initiale du produit.

Une teneur en MS peut être mesurée directement, c'est-à-dire en plaçant le produit dont on souhaite connaître la teneur en MS pendant 17 heures à 105°C, et en mesurant la masse de matière résiduelle que contenait le volume initial du produit ainsi traité.

Une teneur en MS peut être mesurée de manière indirecte, c'est-à-dire en mesurant un paramètre du produit à partir duquel la teneur en MS peut être déduite ou estimée. Par exemple, la personne du métier peut mesurer la densité du produit à une température donnée (par exemple, à 45°C), et en déduire la teneur en MS correspondante, par exemple à l'aide d'une abaque ou d'une courbe de correspondance qui aura été pré-établie par la personne du métier, de sorte à déduire de la mesure de densité à une température donnée, la valeur de MS qui lui correspond pour le produit considéré. Dans des produits, tels que le substrat laitier de départ, les mesures indirectes telles que la densitométrie, sont le plus généralement préférées, car elles sont plus rapides à mettre en oeuvre que la méthode directe.

Un substrat laitier classique présente une teneur en MS de l'ordre de 10-20%, par exemple 11-13%. Un yoghourt ou lait fermenté obtenu par fermentation lactique d'un tel substrat laitier classique présente des teneurs en MS qui ne sont pas sensiblement différentes de celles du substrat laitier initial, c'est-à-dire une teneur en MS classique de l'ordre de 10-20%.

Pour la mise en oeuvre de la demande ou de l'invention, on peut utiliser un substrat laitier à teneur classique en MS.

Selon un mode particulier de réalisation de la demande ou l'invention, on produit des yoghourts ou laits fermentés qui, en sus de présenter de hautes teneurs en ST et LB comme indiqué pour l'invention ou la demande, présentent une teneur en MS plus élevée que la teneur classique en MS, et plus particulièrement une teneur en MS supérieure ou égale à 25%, par exemple de 25-60%, préférentiellement supérieure ou égale à 28%, par exemple de 28-55%, plus préférentiellement supérieure ou égale à 30%, par exemple de 30-45%, très préférentiellement de 36-40%.

Pour produire de tels yoghourts ou laits fermentés, il convient d'inoculer ST et LB à des teneurs conformes à la demande ou à l'invention dans un substrat laitier dont la teneur en MS n'est pas sensiblement différente ou qui est proche de celle souhaitée pour le yoghourt ou lait fermenté qui résultera de la fermentation lactique de ce substrat. Pour que le produit obtenu par fermentation lactique réponde toujours à l'appellation de yoghourt ou lait fermenté, il convient bien évidemment de ne pas mettre en oeuvre un substrat laitier dont la teneur en MS serait tellement forte que le produit fermenté obtenu ne répondrait plus à la définition d'un yoghourt ou lait fermenté, mais s'apparenterait à d'autres produits laitiers tels que, par exemple, les fromages. Il est donc conseillé de choisir un substrat laitier dont la teneur en MS ne dépasse pas 60%, de préférence 55%, plus préférentiellement 45%.

Ainsi, selon un mode particulier de réalisation de la demande ou l'invention, le substrat laitier mis en oeuvre pourra présenter une teneur en MS de 25%-60%, préférentiellement de 28%-55%, plus préférentiellement de 28-45%, encore plus préférentiellement de l'ordre de 30-45%, très préférentiellement de 36-40%.

Pour augmenter la teneur en MS du yoghourt ou lait fermenté, sans pour autant faire perdre au produit son appellation de yoghourt ou lait fermenté, on peut procéder en concentrant le substrat laitier sur lequel la fermentation ST+LB conforme à la demande ou à l'invention est destinée à être menée.

Ainsi, avant inoculation des ST et LB, on peut concentrer le substrat laitier, par exemple en éliminant une partie de l'eau contenue dans le substrat laitier. Cette élimination d'eau peut par exemple être conduite par évaporation, par exemple en chauffant le substrat laitier jusqu'à obtention de la teneur en MS désirée. Le substrat laitier peut ainsi être placé à une ou des température(s) de l'ordre de 40-90°C, par exemple en soumettant le substrat laitier à un gradient de températures allant d'environ 90°C à environ 50°C ou 40°C, comme cela est le cas, par exemple, lorsque des évaporateurs industriels sont mis en oeuvre.

Par sécurité, au moins un traitement sanitaire du substrat laitier peut précéder cette étape de concentration, et/ou être réalisé après l'étape de concentration mais avant inoculation des bactéries ST et LB. Un tel traitement sanitaire est un traitement du substrat laitier destiné à l'assainir ou le stabiliser, en détruisant ou en inhibant tout ou partie des agents microbiens que le substrat laitier est susceptible de contenir, et plus particulièrement l'ensemble des agents microbiens qui sont susceptibles d'entraîner des troubles de santé chez les consommateurs, et de préférence tout ou partie des agents microbiens qui sont susceptibles d'entraîner la dégradation de l'aliment lui-même. Des exemples de tels traitements sanitaires comprennent par exemple un traitement thermique au moins équivalent à la pasteurisation (par exemple, traitement au moins équivalent à l'application d'une température d'au moins 72°C pendant au moins 15 secondes, tel que température de 90°C pendant 30 secondes avant concentration du substrat et/ou température de 75°C pendant 15 secondes après concentration du substrat).

Pour augmenter la teneur en MS du yoghourt ou lait fermenté, sans pour autant faire perdre au produit son appellation de yoghourt ou lait fermenté, on peut ajouter dans le substrat laitier destiné à être fermenté au moins un composant qui constitue un apport en MS.

Comme le produit à fabriquer doit répondre à l'appellation de yoghourt ou lait fermenté, on se reportera à la norme CODEX STAN A-11(a)-1975 (maintenant référencée sous CODEX STAN 243-2003) et/ou au Décret n°88-1203 de la République française, pour vérifier que le(s) composant(s) envisagé(s) pour constituer un apport de MS est(sont) compatible(s) avec la définition de yoghourt ou lait fermenté. Ainsi, on évitera de choisir un composant qui soit susceptible de modifier la texture et/ou la structure du substrat laitier de manière trop substantielle, de sorte à ce que le produit fermenté obtenu ait effectivement la structure et la texture d'un yoghourt ou lait fermenté.

Un tel composant est donc de préférence un produit dérivé du lait.

Un tel composant sera de préférence pauvre en protéines, de sorte à limiter les problèmes de coagulation.

Avantageusement, on choisit un composé contenant du lactose, de préférence un composant riche en lactose, tel que du lactosérum, avantageusement du lactosérum déminéralisé ou doux (pH de 6,5 environ), dont le lactose n'a pas été éliminé.

Si ledit au moins un composant ajouté à titre d'apport de MS est sous forme solide, il représente un apport direct de MS.

Par contre, si ledit au moins un composant ajouté à titre d'apport de MS est sous forme liquide, il convient de tenir compte du fait qu'en sus de la MS, ce composant apporte également de l'eau de sorte que la teneur en MS résultante peut ne pas être très supérieure à celle du substrat laitier initial. C'est par exemple généralement le cas lorsque l'on choisit d'ajouter du lactosérum sous forme liquide au substrat laitier initial. Dans de tels cas, on fera suivre l'opération d'ajout de composant(s) apporteur(s) de MS d'une opération de concentration du substrat laitier par élimination d'une partie de l'eau contenue, telle que ci-dessus décrite, par exemple d'une opération d'évaporation.

On s'assurera que ledit au moins un composant ajouté à titre d'apport de MS est, ou a été traité de sorte à être exempt de tout agent microbien qui soit susceptible d'entraîner des troubles de santé chez les consommateurs et, de préférence de tout agent microbien qui soit susceptible d'entraîner la dégradation de l'aliment lui-même. De tels traitements sanitaires incluent notamment un traitement thermique au moins équivalent à la pasteurisation (par exemple, traitement au moins équivalent à l'application d'une température d'au moins 72°C pendant au moins 15 secondes, tel que température de 90°C pendant 30 secondes avant concentration du substrat et/ou température de 75°C pendant 15 secondes après concentration du substrat).

Un exemple de mise en oeuvre du mode particulier de réalisation de la demande ou l'invention comprend :

a) le traitement d'un substrat laitier (dont la composition est telle qu'elle permet à ce substrat de répondre, après fermentation lactique, à l'appellation de yoghourt ou lait fermenté), de sorte à ce qu'il atteigne une teneur en MS supérieure ou égale à 25% et inférieure ou égale à 60%, préférentiellement supérieure ou égale à 28% et/ou inférieure ou égale à 55%, plus préférentiellement supérieure ou égale à 30% et/ou inférieure ou égale à 45%, très préférentiellement de 36-40%, sans pour autant perdre sa capacité à répondre, une fois fermenté, à l'appellation de yoghourt ou lait fermenté, le substrat laitier ainsi traité étant un substrat laitier à haute teneur en MS,
ce traitement dudit substrat laitier pouvant être par exemple réalisé par :

i. concentration de la MS du substrat laitier, par exemple en éliminant une partie de l'eau qu'il contient, par exemple par évaporation, et/ou par
ii. ajout dans le substrat laitier d'au moins un composant qui est destiné à apporter de la MS au substrat laitier à fermenter, et dont la nature est telle qu'il ne prive pas ledit substrat laitier de sa capacité à répondre, une fois fermenté, à l'appellation de yoghourt ou lait fermenté,

b) optionnellement, le traitement sanitaire du substrat laitier à haute teneur en MS, de sorte à l'assainir ou le stabiliser, en détruisant ou en inhibant tout ou partie des agents microbiens qu'il est susceptible de contenir, et plus particulièrement l'ensemble des agents microbiens qui sont susceptibles d'entraîner des troubles de santé chez les consommateurs, et de préférence tout ou partie des agents microbiens qui sont susceptibles d'entraîner la dégradation de l'aliment lui-même, par exemple par traitement dudit substrat par traitement thermique au moins équivalent à la pasteurisation (par exemple, traitement au moins équivalent à l'application d'une température d'au moins 72°C pendant au moins 15 secondes, par exemple température de 90°C pendant 30 secondes),
c) l'inoculation dudit substrat laitier à haute teneur en MS, qui a éventuellement été soumis au traitement sanitaire de l'étape b), par au moins une souche de ST et au moins une souche de LB à des teneurs élevées, conformes à la demande ou l'invention, telles qu'ici décrites,
d) la conduite de la fermentation lactique jusqu'à obtention de yoghourts ou laits fermentés (pour un yoghourt, le pH marquant la fin de fermentation est généralement de 4,8 +0,5/-0,3 unité pH, par exemple pH = 4,8 +0,4/-0,3, par exemple pH = 4,8 +/- 0,3 unité pH, par exemple pH 4,8 +/- 0,2 unité pH préférentiellement pH 4,8 +0,5/-0,1 ; pour un lait fermenté autre que yoghourt, le pH marquant la fin de fermentation est généralement de 4,6 +/- 0,2 unité pH),
e) les yoghourts ou laits fermentés obtenus étant alors des yoghourts ou laits fermentés à hautes teneurs en ST et LB et à haute teneur en MS, conformes à la demande ou l'invention, respectivement,
f) si souhaité, la pulvérisation des yoghourts ou laits fermentés obtenus, de sorte à obtenir une poudre dont les populations en ST et LB sous forme vivante ou viable sont conformes à la demande ou l'invention, tel que décrit pour l'invention ou la demande, respectivement.

Le procédé peut en outre comprendre un ou plusieurs traitement(s) sanitaire(s) du produit concerné (c'est-à-dire sur le lait, ledit au moins un composant apporteur de MS et/ou sur ledit substrat ou « mix » laitier), à tout moment que la personne du métier considèrera approprié, par exemple, avant et/ou après l'étape b), et/ou avant l'étape c).
Un tel traitement sanitaire est destiné à détruire ou inhiber tout ou partie des agents microbiens que ce produit est susceptible de contenir, et plus particulièrement l'ensemble des agents microbiens qui sont susceptibles d'entraîner des troubles de santé chez les consommateurs, et de préférence tout ou partie des agents microbiens qui sont susceptibles d'entraîner la dégradation de l'aliment lui-même, par exemple par traitement par traitement thermique au moins équivalent à la pasteurisation (par exemple, traitement au moins équivalent à l'application d'une température d'au moins 72°C pendant au moins 15 secondes, par exemple température de 90°C pendant 30 secondes).
Un exemple particulier de mise en oeuvre de l'aspect « yoghourt à haute teneur en MS » de la demande ou de l'invention est présenté en exemple 12.
Une fois obtenu, le yoghourt ou lait fermenté à hautes teneurs en ST et LB et à hautes teneurs en MS conforme à la demande peut être pulvérisé comme décrit dans la demande, jusqu'à obtention d'une Aw (activité de l'eau) faible, de préférence jusqu'à obtention d'une Aw inférieure ou égale à 0,3, préférentiellement inférieure ou égale à 0,25, préférentiellement inférieure ou égale à 0,2, comme décrit ci-dessous. Le séchage doit être suffisamment efficace pour atteindre la valeur d'Aw souhaitée, et suffisamment doux pour préserver le maximum de bactéries ST et LB sous forme vivante ou viable.

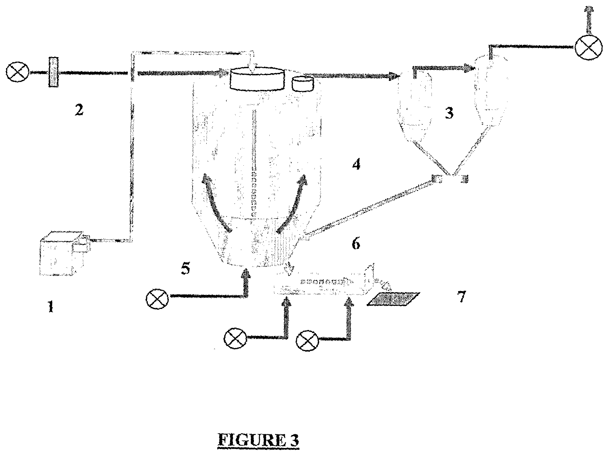

Pour réaliser cette pulvérisation, on procèdera comme décrit dans la demande pour les yoghourts à teneur en MS classique, par exemple à l'aide d'un dispositif d'atomisation correspondant au schéma présenté en Figure 3, et/ou comme décrit en exemple 3. Un autre exemple de séchage est également présenté en exemple 9.

Une fois obtenu, le yoghourt ou lait fermenté à hautes teneurs en ST et LB et à hautes teneurs en MS conforme à l'invention est pulvérisé en veillant à ce que la(les) valeur(s) de température(s) appliquée(s) lors de la pulvérisation soient suffisamment favorables à la survie desdites souches de S. thermophilus et L. bulgaricus pour que la poudre obtenue contienne ladite au moins une souche de S. thermophilus et ladite au moins une souche de L. bulgaricus, sous forme vivante ou viable, à une concentration d'au moins $5.10^8$ ufc/g et d'au moins $1.10^4$ ufc/g, respectivement, et le séchage des granules de poudre sur lit vibrant, à une température de 25°C à 40°C, préférentiellement de 30°C, jusqu'à obtenir une poudre de lait fermenté ou yoghourt qui présente une Aw (activité de l'eau) inférieure ou égale à 0,25, préférentiellement inférieure ou égale à 0,2, préférentiellement de 0,09 à 0,19.

Le lait fermenté ou yoghourt obtenu par fermentation lactique est ensuite pulvérisé dans des conditions permettant d'obtenir un certain taux de survie de chacune desdites souches de S. thermophilus et L. bulgaricus.

La pulvérisation d'un lait fermenté ou d'un yoghourt détruit l'intégrité membranaire, et de manière plus générale, tue une partie des bactéries lactiques présentes dans le lait fermenté ou yoghourt.

Dans le même temps, la pulvérisation conduit à une concentration de la teneur en bactéries lactiques, dans la mesure où une poudre est constituée de 95 à 99% de masse sèche, alors que le lait fermenté ou yoghourt est une masse humide, dont la masse sèche ne représente en général que 15 à 20% de sa masse totale.

De préférence, ladite pulvérisation est menée de sorte à ce que ladite au moins une souche de S. thermophilus est contenue dans la poudre selon la demande ou l'invention sous forme vivante ou viable à une teneur d'au moins $5.10^8$ ufc/g, plus préférentiellement au moins $1.10^9$ ufc/g, encore plus préférentiellement au moins $2.10^9$ ufc/g, très préférentiellement au moins $3.10^9$ ufc/g.

De préférence, ladite pulvérisation est menée de sorte à ce que ladite au moins une souche de S. thermophilus est contenue dans la poudre selon la demande ou l'invention sous forme vivante ou viable à une teneur comprise entre $1.10^9$ ufc/g et $1.10^{10}$ ufc/g (bornes incluses).

De préférence, ladite pulvérisation est menée de sorte à ce que ladite au moins une souche de L. bulgaricus est contenue dans la poudre selon la demande ou l'invention sous forme vivante ou viable à une teneur d'au moins $1.10^4$ ufc/g, préférentiellement au moins $2.10^4$ ufc/g, préférentiellement au moins $3.10^4$ ufc/g, plus préférentiellement au moins $4.10^4$ ufc/g, très préférentiellement au moins $8.10^4$ ufc/g, très préférentiellement au moins $1.10^5$ ufc/g, encore plus préférentiellement au moins $3.10^5$ ufc/g.

De préférence, ladite pulvérisation est menée de sorte à ce que ladite au moins une souche de L. bulgaricus est contenu dans la poudre selon la demande ou l'invention sous forme vivante ou viable à une teneur comprise entre $1.10^4$ et $1.10^5$ ufc/g.

Toutes les combinaisons de teneur en S. thermophilus et de teneur en L. bulgaricus sont inclues dans le contenu de la demande de brevet.

Par exemple, et avantageusement, le lait fermenté ou yoghourt obtenu peut être pulvérisé dans des conditions permettant d'obtenir un taux de survie de chacune desdites souches de S. thermophilus et L. bulgaricus, tel que la poudre obtenue contient ladite au moins une souche de S. thermophilus à une concentration d'au moins $5.10^8$ ufc/g, préférentiellement d'au moins $1.10^9$ ufc/g, et ladite au moins une souche de L. bulgaricus, sous forme vivante ou viable à une concentration d'au moins $1.10^4$ ufc/g, préférentiellement d'au moins $4.10^4$ ufc/g, respectivement.

Le taux de survie de ladite au moins une souche de S. thermophilus et de ladite au moins une souche de L. bulgaricus dépend de la nature de ces souches, du type de procédé de pulvérisation mis en oeuvre, et des conditions, plus ou moins douces, sous lesquelles ce procédé est appliqué.

La pulvérisation du lait fermenté ou yoghourt sera suffisamment douce pour assurer au mieux la conservation de chacun des ferments lactiques inoculés sous forme vivante ou viable.

Il peut avantageusement être procédé par atomisation avec une température de flux gazeux (air) telle que la température du produit (poudre) ne dépasse pas 80°C, par exemple une température de flux gazeux (air) de 190-210°C. Avantageusement, cette atomisation est associée à un séchage complémentaire des granules sur lit fluidisé ; par exemple un lit fluidisé interne en bas de tour d'atomisation. Avantageusement, la température de flux gazeux (air) pour le lit fluidisé (= température de sortie, si ce lit est interne à la tour et est en bas de tour) est inférieure ou égale à 100°C, de préférence inférieure ou égale à 80°C, plus préférentiellement de 60°C à 80°C, avantageusement de 70°C environ (cf. exemple 3 ci-dessous, et figure 3).

Dans le cadre de la demande ou invention, la pulvérisation présente de préférence un rendement :

- d'au moins 20% environ pour ce qui concerne ladite au moins une souche de S. thermophilus, préférentiellement d'au moins 25%, plus préférentiellement d'au moins 30 %, et
- d'au moins $2.10^{-5}$% pour ladite souche de L. bulgaricus, préférentiellement d'au moins $5.10^{-5}$%, plus préférentiellement d'au moins 0,1%, très préférentiellement d'au moins 0,5%.

La pulvérisation du lait fermenté ou yoghourt est menée dans des conditions de séchage suffisamment approfondies pour conduire à une poudre de lait fermenté ou yoghourt qui présente une faible Aw (activité de l'eau). Avantageusement, la pulvérisation du lait fermenté ou yoghourt selon la demande est menée dans des conditions de séchage conduisant à une poudre de lait fermenté ou yoghourt qui, à l'issue de la pulvérisation, présente une Aw (activité de l'eau) mesurée à température ambiante (température de 20-26°C, par exemple 25°C), qui est inférieure ou égale à 0,3, préférentiellement inférieure ou égale à 0,25, très préférentiellement inférieure à 0,25, avantageusement inférieure ou égale à 0,2. De préférence, cette Aw sera supérieure ou égale à 0,05, préférentiellement supérieure ou égale à 0,09. Selon un mode de réalisation préféré de la demande ou l'invention, cette Aw sera de 0,05-0,25, préférentiellement de 0,05-0,20, très préférentiellement de 0,09-0,19 par exemple de 0,10-0,19.

La pulvérisation du lait fermenté ou yoghourt selon l'invention est menée dans des conditions de séchage conduisant à une poudre de lait fermenté ou yoghourt qui, à l'issue de la pulvérisation, présente une Aw (activité de l'eau) mesurée à température ambiante (température de 20-26°C, par exemple 25°C), qui est inférieure ou égale à 0,25, préférentiellement inférieure à 0,20, avantageusement de 0,09 à 0,19.

La pulvérisation du lait fermenté ou yoghourt est réalisée par séchage et transformation physique sous forme de granules (= granulation).

Les conditions de pulvérisation sont donc les paramètres physiques qui sont appliqués au lait fermenté ou yoghourt pour obtenir le séchage et la granulation souhaités.

L'ajustement des paramètres appliqués lors de la pulvérisation de sorte à atteindre les taux de survie souhaités et la valeur d'Aw souhaitée peut être réalisé par la personne du métier. Il s'agit d'ajustements réalisables par essai-erreur à l'aide des connaissances générales de la personne du métier.

Ces paramètres doivent avoir un effet suffisamment doux sur les cellules de S. thermophilus et L. bulgaricus pour avoir les taux de survie souhaités, et en même temps avoir un effet suffisamment approfondi pour atteindre la valeur d'Aw souhaitée.

Un paramètre essentiel vis-à-vis de la survie des cellules de S. thermophilus et L. bulgaricus est la ou les température(s) (ou le gradient de températures) qui est(sont) appliquée(s) pour sécher le lait fermenté ou yoghourt.

Si la pulvérisation fait intervenir une évaporation d'eau, la personne du métier peut choisir une(des) température(s) suffisamment basse(s) (ou un gradient de températures suffisamment bas ou doux) pour atteindre les taux de survie souhaités.

Si la pulvérisation fait intervenir une sublimation d'eau, la personne du métier peut choisir une(des) température(s) suffisamment haute(s) (ou un gradient de températures suffisamment bas ou doux) pour atteindre les taux de survie souhaités. Il conviendra alors d'appliquer cette(ces) température(s) (ou ce gradient de températures) pendant un temps suffisamment long pour atteindre la valeur d'Aw souhaitée.

La personne du métier peut donc ajuster ces paramètres de température(s) et de durée de sorte à atteindre l'objectif de survie et d'Aw visé.

Si la pulvérisation est réalisée par atomisation, séchage et granulation sont réalisés conjointement dans la tour d'atomisation.

Si la pulvérisation est réalisée par lyophilisation, il y a d'abord séchage par lyophilisation, puis pulvérisation du gâteau obtenu à l'issue de la lyophilisation, pour transformer ce gâteau en granules de poudre.

Si souhaité ou requis, la pulvérisation selon la demande peut comprendre un ou plusieurs séchage(s) complémentaire(s), par exemple un séchage sur lit fluidisé et/ou sur lit vibrant. De préférence, ce(ces) séchage(s) complémentaire(s) est(sont) réalisé(s) à une température de 25-80°C. L'invention comprend le séchage complémentaire des granules de poudre sur lit vibrant à une température de 25°C à 40°C, préférentiellement de 30°C.

Un(de) tel(s) séchage(s) complémentaire(s) peut notamment être requis lorsque les granules obtenus à l'issue de l'atomisation, ou, le cas échéant, à l'issue de la lyophilisation-granulation, présentent les taux de survie requis, mais n'ont pas atteints la valeur d'Aw souhaitée. On peut alors placer les granules de poudre sous une ou des température(s) très douce(s), qui vont compléter le séchage des granules jusqu'à atteindre la valeur d'Aw souhaitée, sans faire descendre les teneurs en S. thermophilus et L. bulgaricus en deçà des teneurs minimales requises. Étant donné qu'à ce stage, les granules sont déjà formés, la(les) température(s) appliquée(s) à titre de séchage(s) complémentaire(s) peut(peuvent) être très douce(s), par exemple 25°C-90°C.

Par exemple, la pulvérisation peut être réalisée par lyophilisation et granulation du gâteau de lyophilisation, et peut en outre comprendre un séchage complémentaire sur lit externe, par exemple un lit vibrant externe.

Par exemple, la pulvérisation peut être réalisée par atomisation (de préférence, en veillant à ce que la température du produit ne dépasse pas 80°C), et comprendre en outre un séchage sur lit fluidisé des granules de poudre qui ont été obtenus par atomisation. Ce lit fluidisé est préférentiellement un lit fluidisé interne, en bas de la tour d'atomisation. Ce séchage complémentaire sur lit fluidisé peut avantageusement être suivi par un séchage sur lit externe, par exemple un lit vibrant externe (préférentiellement, à une température proche de la température ambiante, par exemple 25-40°C).

Ce type de séchage complémentaire est un mode préféré de réalisation de la demande. Selon un mode préféré de réalisation de la demande, la pulvérisation comprend donc, en sus du séchage appliqué pour former les granules de poudre, un ou plusieurs séchage(s) complémentaire(s) qui est(sont) appliqué(s) aux granules de poudre déjà formés. En effet, les inventeurs ont observé qu'il était plus efficace de former des granules de poudre qui comprennent les taux de survie souhaités, mais sans ôter complètement l'eau contenue, c'est-à-dire en s'approchant mais sans atteindre la valeur d'Aw souhaitée, de sorte à stabiliser les bactéries S. thermophilus et L. bulgaricus contenues sans les soumettre à un stress trop important, et à faire suivre ce séchage de granulation d'un séchage complémentaire des granules, préférentiellement à une(des) température(s) de 25 à 85°C, par exemple sur lit fluidisé (avantageusement, avec une température d'air de 60 à 80°C) et/ou sur lit vibrant (avantageusement, à une température de 25-40°C).

Selon un mode préféré de réalisation de la demande, la granulation se fait par atomisation, et le séchage est un séchage en trois points, tels que :

- pulvérisation par atomisation (de préférence, en veillant à ce que la température du produit ne dépasse pas 80°C), et
- séchage sur lit fluidisé des granules de poudre qui ont été obtenus par atomisation, ce lit fluidisé étant préférentiellement un lit fluidisé interne, en bas de la tour d'atomisation, ce premier séchage complémentaire étant suivi par
- séchage sur lit externe, par exemple un lit vibrant externe (préférentiellement, à une température proche de la température ambiante, par exemple 25-40°C).

Selon un mode de réalisation de l'invention, la granulation se fait donc par atomisation, et le séchage est un séchage en trois points, tels que :

- pulvérisation par atomisation (de préférence, en veillant à ce que la température du produit ne dépasse pas 80°C), et
- séchage sur lit fluidisé des granules de poudre qui ont été obtenus par atomisation, ce lit fluidisé étant préférentiellement un lit fluidisé interne, en bas de la tour d'atomisation, ce premier séchage complémentaire étant suivi par
- séchage sur lit vibrant externe à une température de 25 à 40°C.

Des exemples de production de poudre conformes à la demande ou l'invention sont décrits ex exemple 1, et des exemples avantageux de pulvérisation sont décrits en exemples 3 et 9.

La poudre selon la demande ou l'invention présente de très bonnes propriétés de conservation : la poudre selon la demande ou l'invention garde son aspect initial tant au niveau de la couleur que de la texture, ainsi que ses qualités gustatives, lors de la conservation de la poudre pendant au moins 4 mois à 20°C. En outre, le taux de S. thermophilus et de L. bulgaricus qui sont contenus dans la poudre sous forme vivante ou viable reste élevé au cours du temps.

La poudre de lait fermenté ou yoghourt selon la demande ou l'invention conserve au moins $1.10^7$ ufc/g de ferments lactiques vivants ou viables (population totale en ferments lactiques S. thermophilus et L. bulgaricus), après conservation de cette poudre pendant six mois à 20°C, sans qu'il y ait ajout de S. thermophilus ou L. bulgaricus.

De manière avantageuse, la poudre selon la demande ou l'invention ne subit aucune perte détectable en S. thermophilus par rapport au lait fermenté ou yaourt dont elle provient, après une conservation de 4 mois, voire plus, à une température de 20°C.

La poudre de lait fermenté ou yoghourt selon la demande ou l'invention avantageusement conserve :

- au moins au moins $5.10^8$ ufc/g, plus préférentiellement au moins $1.10^9$ ufc/g, de ladite au moins une souche de S. thermophilus sous forme vivante ou viable, et
- au moins $1.10^4$ ufc/g de ladite au moins une souche de L. bulgaricus sous forme vivante ou viable, préférentiellement au moins $2.10^4$ ufc/g, préférentiellement au moins $3.10^4$ ufc/g, plus préférentiellement au moins $4.10^4$ ufc/g, très préférentiellement au moins $8.10^4$ ufc/g, très préférentiellement au moins $1.10^5$ ufc/g, encore plus préférentiellement au moins $3.10^5$ ufc/g de ladite au moins une souche de L. bulgaricus sous forme vivante ou viable,

après conservation de cette poudre à 20°C pendant quatre mois, voire plus, sans qu'il y ait ajout de S. thermophilus ou L. bulgaricus exogène.

Avantageusement, au bout de 4 mois à 20°C, les poudres de la demande ou l'invention sont à au moins $2.10^8$ ufc/g de population totale S. thermophilus et L. bulgaricus sous forme vivante ou viable. Le plus généralement, cette population totale est à au moins $3,5.10^8$ ufc/g, très fréquemment à au moins $4.10^8$ ufc/g. C'est notamment le cas lorsque le substrat laitier utilisé pour produire le yoghourt ou lait fermenté a une teneur classique en MS, c'est-à-dire une teneur en MS de 10 à 20%, par exemple 11-13%.

De manière particulièrement remarquable, selon un mode de réalisation de la demande ou l'invention, le taux de survie de la population totale S. thermophilus et L. bulgaricus contenue dans une poudre de la demande ou l'invention est d'au moins 80% au bout de 4 mois de conservation de la poudre à une température de 20°C.

C'est notamment le cas lorsque le substrat laitier utilisé pour produire le yoghourt ou lait fermenté a une teneur classique en MS, c'est-à-dire une teneur en MS de 10 à 20%, par exemple 11-13%.

De manière très avantageuse, au bout de 6 mois à 20°C, les poudres de la demande ou l'invention comprennent plus de $1,0.10^7$ ufc/g de population totale S. thermophilus et L. bulgaricus sous forme vivante ou viable, le plus généralement au moins $5.10^7$ ufc/g. Fréquemment, cette population totale est à au moins $1.10^8$ ufc/g, très fréquemment à au moins $4.10^8$ ufc/g. C'est notamment le cas lorsque le substrat laitier utilisé pour produire le yoghourt ou lait fermenté a une teneur classique en MS, c'est-à-dire une teneur en MS de 10 à 20%, par exemple 11-13%.
De manière particulièrement remarquable, selon un mode de réalisation de la demande ou l'invention, le taux de survie de la population totale S. thermophilus et L. bulgaricus contenue dans une poudre de la demande ou l'invention est d'au moins 75%, le plus généralement d'au moins 85%, au bout de 6 mois de conservation de la poudre à une température de 20°C. C'est notamment le cas lorsque le substrat laitier utilisé pour produire le yoghourt ou lait fermenté dont la poudre provient est un substrat laitier à teneur classique en MS (10-20%).
Le terme significatif est ici entendu dans son sens statistique, et dans la mesure entendue dans le cadre d'une industrie laitière.
Le terme "significativement" est ci-dessus employé dans son signification habituelle dans le domaine des statistiques (par exemple, essai de t, essai de z, valeur chi carrée, ratio F, etc.), c.-à-d., pour comparer une valeur mesurée à une autre, et déterminer si ces valeurs mesurées diffèrent de l'une à l'autre. Le terme " significativement " par conséquent englobe le fait que la personne du métier peut tenir compte de l'écart type (si il y en a un), qui mesure la dispersion des données dans une distribution de fréquence. La valeur désirée de p est habituellement placée à un niveau d'alpha de 5%, ou au niveau plus rigoureux d'alpha de 1%.
A la connaissance de la Demanderesse, les poudres de l'art antérieur n'ont pas d'aussi bonnes propriétés de conservation (cf. exemples 12 et 13 ci-dessous).
Des moyens permettant de mesurer le taux de S. thermophilus et de L. bulgaricus qui sont contenus sous forme vivante ou viable dans la poudre sont connus de la personne du métier. Ils comprennent notamment la méthode officielle FIL 117B : 1997, Yaourt: dénombrement des microorganismes caractéristiques, technique de comptage des colonies à 37°C. La poudre, ou le cas échéant, le fourrage, à analyser peut être préparé pour dénombrement comme décrit en exemple 5 ci-dessous.
Lesdites souches de S. thermophilus et L. bulgaricus peuvent être choisies parmi celles connues par la personne du métier comme étant aptes à mener une fermentation lactique sur substrat laitier, de sorte à produire un lait fermenté ou un yoghourt.
Un exemple de souche de S. thermophilus est la souche disponible auprès de la C.N.C.M. sous le numéro de dépôt I-2130 (date de dépôt auprès de la C.N.C.M. = 24 février 1999 ; déposant = Compagnie Gervais-Danone).
Un exemple de souche de L. bulgaricus est la souche disponible auprès de la C.N.C.M. sous le numéro de dépôt I-1519 (date de dépôt auprès de la C.N.C.M. = 30 décembre 1994 ; déposant = Compagnie Gervais-Danone).
On sélectionne de préférence au moins une souche de S. thermophilus et/ou au moins une souche de L. bulgaricus qui a/ont une capacité de propagation sur substrat laitier telle qu'elle/s permettent de produire des ferments d'inoculation à haute densité, et plus particulièrement des ferments dont la population en S. thermophilus et L. bulgaricus est :

- égale ou supérieure à $3.10^{10}$ ufc/g pour S. thermophilus, égale ou supérieure à $1.10^9$ ufc/g pour L. bulgaricus, pour des ferments sous forme congelée, ou
- égale ou supérieure à $1.10^{11}$ ufc/g pour S. thermophilus, égale ou supérieure à $4.10^9$ ufc/g pour L. bulgaricus, pour des ferments sous forme lyophilisée.

La population de S. thermophilus et celle de L. bulgaricus peuvent être préparées et/ou conditionnées de manière séparée, ou bien être en mélange. Elles peuvent être contenues dans des granules distincts, ou bien être contenus dans un même granule qui apporte les types de deux populations.
De manière avantageuse, et contrairement à ce qui est usuellement procédé pour fabriquer un lait fermenté ou yoghourt, seront de préférence choisies au moins une souche de S. thermophilus qui produit peu ou pas d' exopolysaccharides EPS (souche dite de type cassant).
De préférence, ladite au moins une souche de S. thermophilus est donc une souche dite de type cassant, qui ne produit pas d'exopolysaccharides (EPS), ou qui n'en produit qu'à des teneurs tellement faibles qu'un milieu à base de lait, après culture de cette souche à une température de 40°C jusqu'à un pH de 4,7, présente une viscosité de Casson à 4°C qui est inférieure ou égale à 500 mPa.s, préférentiellement inférieure ou égale à 400 mPa.s.
Un milieu à base de lait approprié pour une telle mesure de viscosité peut être simplement du lait, ou bien un milieu pour lait fermenté modèle, tel que, par exemple, un milieu composé de 120 grammes de poudre de lait écrémé, 1 gramme de peptide N3 (Vitalarmor 950, Armor protéines), et eau permutée QSP 1L. L'exemple 6 ci-dessous présente un exemple détaillé de protocole. Des doses classiques d'inoculation de S. thermophilus peuvent être utilisées (par exemple, ensemencement à 1% v/v)), telles que celles présentées en exemple 6.
Un exemple d'une telle souche de S. thermophilus (S. thermophilus de type cassant) est la souche de S.

thermophilus disponible auprès de la C.N.C.M. sous le numéro de dépôt I-2130.

Pour sélectionner une souche de ferment lactique qui ne produit pas ou peu d'exopolysaccharides (EPS), il peut être procédé par tout moyen connu de la personne du métier. Une méthologie adaptée comprend la mesure de la viscosité du lait fermenté obtenu par fermentation d'un substrat laitier à l'aide de la (ou des) souche(s) candidate(s), tel que par exemple un yaourt produit à l'aide de la(les) souche(s) candidate(s).

Une méthode permet de déterminer si la(les) souche(s) mise(s) en oeuvre pour la fermentation du lait donne(nt) un lait fermenté à texture filante (viscosité importante), si elle(s) est(sont) de type texturant (viscosité moyenne), ou bien si elle(s) donne(nt) un lait fermenté à une texture cassante (viscosité faible).

Dans le cadre de la demande ou l'invention, et contrairement à ce qu'il est procédé dans le cadre de la fabrication de lait fermenté et yaourt qui ne sont pas destinés à être pulvérisés, les souches lactiques préférées sont celles qui donnent un lait fermenté à texture cassante (viscosité faible).

La méthode de mesure de viscosité d'un lait fermenté comprend la mise en oeuvre d'un viscosimètre réfrigéré et équipé d'un système permettant d'appliquer un gradient croissant et décroissant de cisaillement au lait fermenté, tel que le viscosimètre Mettler RM® 260 réfrigéré et équipé d'un système coaxial de type DIN 145. Ce système rotatif permet d'observer une déstructuration du produit en fonction d'un gradient de cisaillement linéaire, soit une contrainte à un gradient donné.

Brièvement, cette méthode comprend :

- la culture de la (ou des) souche(s) lactique(s) candidate(s) sur un milieu de culture approprié, qu'un milieu à base de lait (lait, milieu pour lait fermenté modèle ; cf. exemple 6), après culture de cette souche à une température de 40°C jusqu'à un pH de 4,7, présente une viscosité de Casson à 4°C qui est inférieure ou égale à 500 mPa.s, préférentiellement inférieure ou égale à 400 mPa.s, [si souhaité, plusieurs lots de laits fermentés peuvent être produits dans des conditions identiques de sorte à disposer de plusieurs exemplaires comparables],
- si le(s) lait(s) fermenté(s) modèle(s) obtenu(s) est(sont) un(des) produit(s) ferme(s), ce(s) lait(s) fermenté(s) est(sont) de préférence agité(s) manuellement à l'aide d'une spatule durant une minute,
- l'incubation à 4°C pendant 30min du(des) milieu(x) fermenté(s), ou d'au moins un échantillon prélevé de ce(s) milieu(x) fermenté(s),
- les mesures de viscosité sont réalisées à 4°C, à l'aide d'un viscosimètre Mettler RM® 260 réfrigéré et équipé d'un système coaxial de type DIN 145.

Un milieu à base de lait approprié pour une telle mesure de viscosité peut être simplement du lait, ou bien un milieu pour lait fermenté modèle, tel que, par exemple, un milieu composé de 120 grammes de poudre de lait écrémé, 1 gramme de peptide N3 (Vitalarmor 950, Armor protéines), et eau permutée QSP 1L. L'exemple 6 ci-dessous présente un exemple détaillé de protocole. Des doses classiques d'inoculation de S. thermophilus peuvent être utilisées (par exemple, ensemencement à 1% v/v)), telles que celles présentées en exemple 6.

Le produit subit un gradient de cisaillement croissant de 0 à 20 s-1 pendant 1 minute. Cette phase correspond à la rampe montante. Puis, il subit un gradient de cisaillement décroissant de 20 à 0 s-1 pendant 1 minute, correspondant à la rampe descendante. Les résultats sont obtenus sous forme d'une courbe d'écoulement en continu, avec rampe montante et rampe descendante entre 0 et 20 s-1.

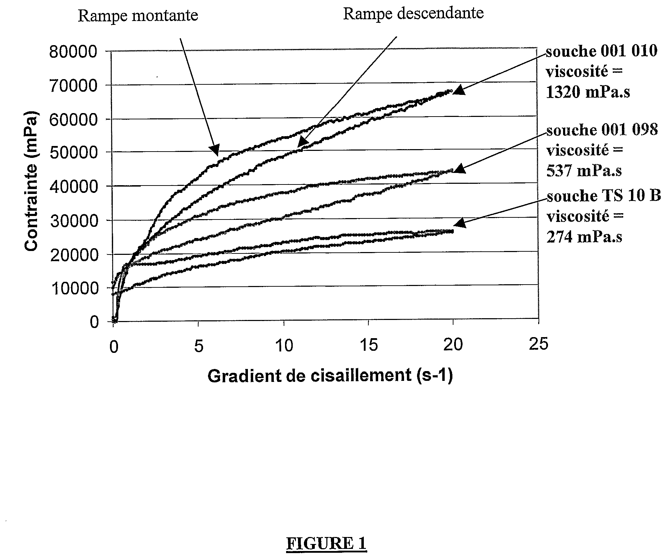

La Figure 1 présente les trois types majeurs de courbes d'écoulement :

- le type de courbe obtenu à l'aide de la souche S. thermophilus 001 010 correspond à une souche qui donne un lait fermenté à texture filante (viscosité importante, courbe du haut),
- le type de courbe obtenu à l'aide de la souche S. thermophilus 001 098 correspond à une souche qui est de type texturant (viscosité moyenne, courbe du milieu),
- le type de courbe obtenu à l'aide de la souche S. thermophilus TS 10B (société DSM Food specialties Dairy ingredients ; BP 1 ; 2600 MA Delft ; PAYS BAS) correspond à une souche qui donne un lait fermenté à une texture cassante (viscosité faible, courbe du bas).

La tangente en tout point de la courbe d'écoulement en rampe descendante représente la viscosité apparente du milieu fermenté. Cette viscosité apparente varie selon le gradient de cisaillement considéré, et il est de fait préférable d'ajuster la courbe par un modèle mathématique. Divers modèles mathématiques appropriés sont connus de la personne du métier. Le modèle de Casson est un exemple de modèle approprié.

La viscosité du lait fermenté ($\eta$) se déduit de la pente de la droite de régression de la partie descendante (gradient descendant de cisaillement) de la courbe d'écoulement obtenue, modifiée pour représenter la racine carrée de la contrainte en fonction de la racine carrée du gradient de cisaillement.

Du fait de l'hétérogénéité de certains laits fermentés (cas, notamment, des produits fermes, qui doivent être brassés manuellement), et de la conception de certains viscosimètres, il est parfois nécessaire d'éliminer quelques points incohérents de mesure avant modélisation mathématique, tels que par exemple les points incohérents qui peuvent être obtenus lors d'un éventuel changement de pignon destiné à augmenter la vitesse de cisaillement.

Il est parfois nécessaire d'éliminer une partie de la courbe ascendante correspondant au régime transitoire de mise en écoulement laminaire du produit au sein de l'entrefer. L'ajustement est donc préférablement effectué sur la courbe descendante, où les artefacts liés à la thixotropie du produit et la mise en régime d'écoulement sont moins importants.

Le modèle de Casson est formulé par l'équation suivante (équation 1) :

$$\sqrt{\tau} \quad = \quad \sqrt{\tau_0} \quad + \quad \sqrt{\eta \times D} \qquad\qquad (1)$$

$\tau$ : Contrainte (Pa)
$\tau_0$ : Seuil d'écoulement du produit (Pa)
$\eta$ : Viscosité du produit (Pa.s)
$D$ : Gradient de cisaillement (s-1)

Cette modélisation est suivie du tracé d'une droite de régression linéaire sur la partie descendante de la courbe ; elle permet de relever deux paramètres importants :

- le seuil d'écoulement du produit $\tau_0$, correspondant à l'ordonnée à l'origine,
- la viscosité de Casson $\eta$ du produit, correspondant à la pente de la droite de régression.

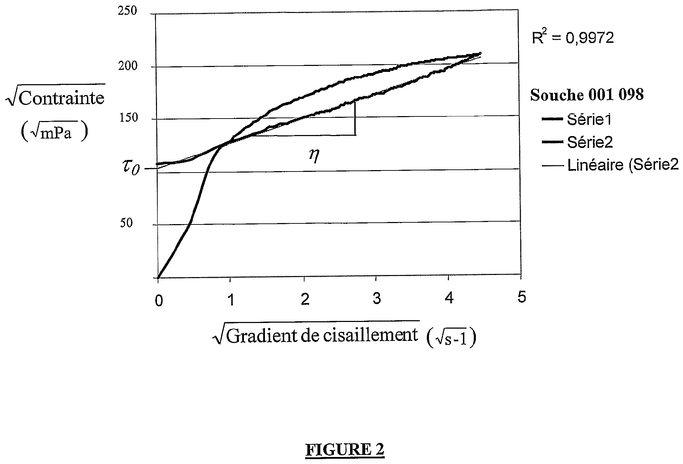

La Figure 2 illustre la détermination du seuil d'écoulement $\tau_0$ et de la viscosité $\eta$ d'un lait fermenté à l'aide de la souche 001 098, sur la courbe descente d'écoulement modélisée par Casson.

Au-delà de 500 mPa.s, il est considéré que la viscosité de Casson du lait fermenté est moyenne ou forte, c'est-à-dire que la(les) souche(s) testée(s) est(sont) de type nettement texturant, ou bien confère(nt) une texture filante. Lorsque la viscosité de Casson mesurée est égale ou inférieure à 500 mPa.s, il est considéré que la viscosité de Casson est faible, c'est-à-dire que la(les) souche(s) testée(s) confère(nt) une texture cassante. De préférence, on choisira des souches dont la viscosité de Casson à 4°C est égale ou inférieure à 400 mPa.s.

Dans l'art antérieur, pour produire un yaourt de réelle qualité alimentaire, on sélectionne de préférence les souches de S. thermophilus dites texturantes (fortes productrices d'EPS), de sorte à obtenir un yaourt qui ait une texture et un goût satisfaisants pour le consommateur.

La présence de souches de S. thermophilus de type cassante sera néanmoins généralement également nécessaire, dans la mesure où la sécurité sanitaire préconise d'obtenir une acidification du substrat laitier la plus rapide possible. C'est donc en choisissant une combinaison appropriée de souches de S. thermophilus de type cassant et de souches de S. thermophilus texturantes, que peut être produit un yaourt qui soit de réelle qualité alimentaire, tant sur le plan de la texture, que sur celui du goût, et que sur celui de la sécurité sanitaire.

Dans la demande ou invention, on sélectionnera au contraire de préférence les souches de S. thermophilus de type cassant, en évitant la mise en oeuvre de type texturant.

En outre, conformément à la demande ou invention, il n'est pas nécessaire pour obtenir un produit fini de qualité (produit poudre), de mettre en oeuvre une combinaison de souches de S. thermophilus, il est au contraire possible de limiter le nombre de souches de S. thermophilus différentes (une, deux ou trois souche(s) de S. thermophilus), ainsi que le nombre de L. bulgaricus (une, deux ou trois souche(s) de L. bulgaricus). Le procédé selon la demande ou l'invention permet en effet d'obtenir une poudre de grande qualité en ne mettant en oeuvre qu'une seule souche de S. thermophilus (et bien sûr au moins une souche de L. bulgaricus). Cette souche de S. bulgaricus est de préférence de type cassant. Conformément à la demande ou invention (procédé de production de yaourt ou lait fermenté, procédé de production de poudre, ferments, substrat laitier ensemencé, lait fermenté ou yaourt obtenu, poudre de lait fermenté ou yaourt obtenu, aliments, tels que fourrage, biscuit, confiserie), il peut être mis en oeuvre une seule souche de S. thermophilus, qui de préférence est une souche de type cassant, et, de préférence, une seule souche de L. bulgaricus est mise en oeuvre.

La poudre selon la demande ou l'invention peut présenter toute granulométrie adaptée à sa destination. Une distribution granulométrique comprise entre 10 et 300 micromètres est de préférence choisie pour une application en industrie laitière ou biscuitière ou de confiserie.

La demande ou invention est également relative aux produits de départ, aux produits intermédiaires et aux produits finaux susceptibles d'être mis en oeuvre ou obtenus par mise en oeuvre d'un procédé selon la demande ou l'invention.

Chacune des caractéristiques données dans la demande en description du procédé selon la demande peut venir s'appliquer *mutatis mutandis* aux produits de départ, aux produits intermédiaires et aux produits finaux de l'invention.

Chacune des caractéristiques données en description du procédé selon l'invention peut venir s'appliquer *mutatis mutandis* aux produits de départ, aux produits intermédiaires et aux produits finaux de l'invention.

Un produit de départ susceptible d'être mis en oeuvre dans un procédé selon la demande consiste en un ou des ferments concentrés de bactéries lactiques. Le ou les ferments concentrés permettent d'apporter facilement les importantes doses d'inoculum requises par le procédé selon la demande.

Les ferments concentrés selon la demande comprennent au moins une souche de S. thermophilus, et/ou au moins une souche de L. bulgaricus.

Les ferments concentrés selon la demande peuvent être sous la forme de concentrés congelés, par exemple sous la forme de granules congelés, et/ou sous la forme de concentrés lyophilisés.

Les concentrés congelés selon la demande comprennent au moins une souche de S. thermophilus (vivante ou viable) à une concentration d'au moins $3.10^{10}$ ufc/g, et/ou au moins une souche de L. bulgaricus (vivante ou viable) à une concentration d'au moins $1.10^9$ ufc/g.

Les concentrés lyophilisés selon la demande comprennent au moins une souche de S. thermophilus (vivante ou viable) à au moins $1.10^{11}$ ufc/g, et/ou au moins une souche de L. bulgaricus (vivante ou viable) à au moins $4.10^9$ ufc/g.

Les ferments concentrés selon la demande sont obtenus par inoculation massive d'un substrat qui est un milieu de culture (destiné à la propagation cellulaire). Un exemple de mode de réalisation de concentrés congelés (sous forme de granules) est décrit en exemple 2 ci-dessous.

Ce milieu de culture comprend généralement du lait et/ou des composants du lait, mais comprendra généralement également un ou plusieurs agents ou substances destinés à favoriser et/ou stimuler la croissance de la ou des souches inoculées.

On trouvera ainsi généralement dans un milieu de culture destiné à la fabrication des ferments concentrés selon la demande de l'extrait de levure et/ou des levures lysées, et/ou du sulfate de manganèse, et/ou du sulfate de magnésium, et/ou des peptones.

Un milieu de culture destiné à la fabrication des ferments concentrés selon la demande pourra comprendre un ou plusieurs agents tensio-actifs et/ou émulsifiants et/ou agents solubilisants et/ou détergents, tels que le polyoxyethylene-sorbitan-20-monooleate (aussi connu sous le nom de polysorbate 80, ou de Tween® 80).

Un milieu de culture destiné à la fabrication des ferments concentrés selon la demande pourra comprendre des composés qui ne sont pas d'origine laitière, tels que par exemple des extraits de viande.

De préférence, ladite au moins une souche de S. thermophilus contenue dans un ferment concentré de la demande est une souche de S. thermophilus dite de type cassante, qui ne produit pas d'exopolysaccharides (EPS), ou qui n'en produit qu'à des teneurs tellement faibles qu'un milieu à base de lait (lait, ou milieu pour lait fermenté modèle ; cf. exemple 6), après culture de cette souche à une température de 40°C jusqu'à un pH de 4,7, présente une viscosité de Casson à 4°C qui est inférieure ou égale à 500 mPa.s, préférentiellement inférieure ou égale à 400 mPa.s.

Un milieu à base de lait approprié pour une telle mesure de viscosité peut être simplement du lait, ou bien un milieu pour lait fermenté modèle, tel que, par exemple, un milieu composé de 120 grammes de poudre de lait écrémé, 1 gramme de peptide N3 (Vitalarmor 950, Armor protéines), et eau permutée QSP 1L. L'exemple 6 ci-dessous présente un exemple détaillé de protocole. Des doses classiques d'inoculation de S. thermophilus peuvent être utilisées (par exemple, ensemencement à 1% v/v)), telles que celles présentées en exemple 6. Avantageusement, ladite au moins une souche de S. thermophilus est la souche de S. thermophilus disponible auprès de la C.N.C.M. sous le numéro de dépôt I-2130.

Toute souche de L. bulgaricus que la personne du métier considère appropriée peut être utilisée. Par exemple, la souche disponible auprès de la CNCM sous le numéro de dépôt I-1519.

Le substrat laitier ensemencé, susceptible d'être obtenu comme produit intermédiaire lors de la mise en oeuvre du procédé de yaourt ou lait fermenté selon la demande, et/ou lors de la mise en oeuvre du procédé de production de poudre selon la demande, est également un objet décrit dans demande de brevet. L'invention est relative à un substrat laitier ensemencé par au moins une souche de S. thermophilus à une concentration d'au moins $5.10^8$ ufc/g, et par au moins une souche de L. bulgaricus à une concentration d'au moins $1.10^6$ ufc/g, de sorte à être apte à produire par fermentation lactique un produit répondant à l'appellation de lait fermenté ou yoghourt, destiné à l'alimentation humaine, dans lequel ledit substrat laitier ensemencé présente une teneur en matières sèches de 25 à 60%, préférentiellement de 28 à 55%, plus préférentiellement de 38 à 45%. Pour mémoire, le terme « substrat laitier » est, dans la demande et invention, entendu comme signifiant lait au sens où l'entend l'industrie laitière, c'est-à-dire le lait d'origine animale sous toutes ses formes et dans toutes ses variantes de compositions. Un substrat laitier conforme à la demande ou à l'invention est donc essentiellement composé de lait, de sorte à être apte à produire par fermentation lactique un produit répondant à l'appellation de lait fermenté ou yoghourt, destiné à l'alimentation humaine. Le terme substrat laitier n'englobe pas la signification de milieu de culture.

Le yaourt ou lait fermenté, susceptible d'être obtenu comme produit final du procédé de production de yaourt ou lait fermenté selon la demande, et/ou comme produit intermédiaire du procédé de poudre selon la demande, est également un objet décrit dans demande de brevet. Ce lait fermenté ou yoghourt peut être produit par fermentation lactique du substrat ensemencé objet de la demande.

Plus particulièrement, la demande de brevet est relative à un substrat laitier ensemencé par au moins une souche de S. thermophilus à une concentration d'au moins $5.10^8$ ufc/g, et par au moins une souche de L. bulgaricus à une concentration d'au moins $1.10^6$ ufc/g. Naturellement, toutes les teneurs en S. thermophilus et/ou L. bulgaricus décrites dans la demande dans le cadre de la description du procédé selon la demande s'appliquent au produit intermédiaire, substrat laitier ensemencé, en tant que produit ; et toutes les combinaisons de teneurs se trouvent comprises dans le champ de la demande.

Préférentiellement, le substrat laitier comprend ladite au moins une souche de S. thermophilus à une concentration d'au moins $1.10^9$ ufc/g.

De préférence, ladite au moins une souche de S. thermophilus contenue dans un substrat laitier ensemencé de la demande ou l'invention est une souche de S. thermophilus dite de type cassante, qui ne produit pas d'exopolysaccharides (EPS), ou qui n'en produit qu'à des teneurs tellement faibles qu'un milieu à base de lait (lait, ou milieu pour lait fermenté modèle ; cf. exemple 6), après culture de cette souche à une température de 40°C jusqu'à un pH de 4,7, présente une viscosité de Casson à 4°C qui est inférieure ou égale à 500 mPa.s, préférentiellement inférieure ou égale à 400 mPa.s.

Un milieu à base de lait approprié pour une telle mesure de viscosité peut être simplement du lait, ou bien un milieu un milieu pour lait fermenté modèle, tel que, par exemple, un milieu composé de 120 grammes de poudre de lait écrémé, 1 gramme de peptide N3 (Vitalarmor 950, Armor protéines), et eau permutée QSP 1L. L'exemple 6 ci-dessous présente un exemple détaillé de protocole. Des doses classiques d'inoculation de S. thermophilus peuvent être utilisées (par exemple, ensemencement à 1% v/v)), telles que celles présentées en exemple 6. Avantageusement, ladite au moins une souche de S. thermophilus est la souche de S. thermophilus disponible auprès de la C.N.C.M. sous le numéro de dépôt I-2130.

Toute souche de L. bulgaricus que la personne du métier considère appropriée peut être utilisée. Par exemple, la souche disponible auprès de la CNCM sous le numéro de dépôt I-1519.

Selon un mode particulier de réalisation de la demande ou l'invention, ledit substrat laitier ensemencé de la demande ou l'invention est un substrat laitier ensemencé qui présente une haute teneur en MS telle que ci-dessus décrit (cf. également exemple 8), c'est-à-dire un substrat laitier ensemencé qui présente une teneur en MS de l'ordre de 25 à 60% comme ci-dessus décrit. Avantageusement, un substrat laitier ensemencé de la demande ou l'invention a une composition telle qu'après fermentation lactique par au moins une souche de S. thermophilus et au moins une souche de L. bulgaricus, le substrat laitier ensemencé conduise à un produit laitier qui réponde à l'appellation de yoghourt ou lait fermenté.

Un autre produit susceptible d'être obtenu lors de la mise en oeuvre d'un procédé selon la demande ou l'invention est un lait fermenté ou yoghourt qui est obtenu par fermentation lactique du substrat laitier ensemencé.

Il présente globalement les mêmes caractéristiques que le substrat ensemencé en termes de teneurs et natures en S. thermophilus et L. bulgaricus.

Naturellement, le lait fermenté ou yoghourt susceptible d'être obtenu lors de la mise en oeuvre du procédé selon la demande ou l'invention présente des teneurs en L. bulgaricus et S. thermophilus qui sont légèrement plus fortes que celles du substrat laitier ensemencé dont il provient ; et, suite à la coagulation de caséine qui se produit lors de la fermentation lactique symbiotique, il passera à l'état de gel, comme c'est le cas pour des yaourts classiques. La concentration exceptionnelle en bactéries lactiques constatée en fin de fermentation n'aurait pu être obtenue avec les taux d'ensemencement classiques mis en oeuvre pour les yaourts de l'art antérieur.

Plus particulièrement, un lait fermenté ou yoghourt susceptible d'être obtenu comme produit intermédiaire lors de la mise en oeuvre d'un procédé de production de poudre selon la demande ou l'invention (produit final du procédé de production de yaourt ou lait fermenté selon la demande ou l'invention) comprend au moins une souche de S. thermophilus à une concentration d'au moins $5.10^8$ ufc/g, et par au moins une souche de L. bulgaricus à une concentration d'au moins $1.10^7$ ufc/g. Naturellement, toutes les teneurs et combinaisons de teneurs en S. thermophilus et/ou L. bulgaricus décrites dans la demande dans le cadre de la description du procédé selon la demande s'appliquent au produit intermédiaire, lait fermenté ou yoghourt, en tant que produit. Préférentiellement, le lait fermenté ou yoghourt comprend ladite au moins une souche de S. thermophilus à une concentration d'au moins $1.10^9$ ufc/g.

L'invention est relative à un lait fermenté ou yoghourt qui contient au moins une souche de S. thermophilus à une concentration d'au moins $5.10^8$ ufc/g, sous forme vivante ou viable, et au moins une souche de L. bulgaricus à une concentration d'au moins $1.10^7$ ufc/g, sous forme vivante ou viable, et en ce que ladite au moins une souche de L. bulgaricus est contenue dans un rapport de 1 ufc pour 40 à 60 ufc de ladite souche de S. thermophilus.

L'invention est également relative à un lait fermenté ou yoghourt qui contient au moins une souche de S. thermophilus à une concentration d'au moins $5.10^8$ ufc/g, sous forme vivante ou viable, et au moins une souche de L. bulgaricus à une concentration d'au moins $1.10^7$ ufc/g, sous forme vivante ou viable, dans lequel ledit substrat laitier ensemencé, ou, le cas échéant, ledit lait fermenté ou yoghourt, présente une teneur en matières sèches de 25 à 60%, préférentiellement de 28 à 55%, plus préférentiellement de 38 à 45%.

De préférence, ladite au moins une souche de S. thermophilus contenue dans un lait fermenté ou yoghourt susceptible d'être obtenu comme produit intermédiaire du procédé de production de poudre selon la demande ou l'invention est une souche de S. thermophilus dite de type cassante, qui ne produit pas d'exopolysaccharides (EPS), ou qui n'en produit qu'à des teneurs tellement faibles qu'un milieu à base de lait (lait, ou milieu pour lait fermenté modèle ; cf. exemple 6), après culture de cette souche à une température de 40°C jusqu'à un pH de 4,7, présente une viscosité de Casson à 4°C qui est inférieure ou égale à 500 mPa.s, préférentiellement inférieure ou égale à 400 mPa.s.

Un milieu à base de lait approprié pour une telle mesure de viscosité peut être simplement du lait, ou bien un milieu pour lait fermenté modèle, tel que, par exemple, un milieu composé de 120 grammes de poudre de lait écrémé, 1 gramme de peptide N3 (Vitalarmor 950, Armor protéines), et eau permutée QSP 1L. L'exemple 6 ci-dessous présente un exemple détaillé de protocole. Des doses classiques d'inoculation de S. thermophilus peuvent être utilisées (par exemple, ensemencement à 1% v/v)), telles que celles présentées en exemple 6. Avantageusement, ladite au moins une souche de S. thermophilus est la souche de S. thermophilus disponible auprès de la C.N.C.M. sous le numéro de dépôt I-2130.

Toute souche de L. bulgaricus que la personne du métier considère appropriée peut être utilisée. Par exemple, la souche disponible auprès de la CNCM sous le numéro de dépôt I-1519.

Avantageusement, un substrat laitier ensemencé, ou un lait fermenté ou yaourt selon la demande ou l'invention, comprennent une seule souche de S. thermophilus, qui de préférence est de type cassant, et une seule souche de L. bulgaricus.

Selon un mode particulier de réalisation de la demande ou l'invention, ledit yoghourt ou lait fermenté est un yoghourt ou lait fermenté qui présente une haute teneur en MS telle que ci-dessus décrit (cf. également exemple 8), c'est-à-dire un yoghourt ou lait fermenté qui présente une teneur en MS de l'ordre de 25 à 60%, tel que ci-dessus décrit.

Du fait de l'ensemencement massif préconisé par la demande ou l'invention, les yoghourts ou laits fermentés de la demande ou l'invention présentent un rapport L. bulgaricus / S. thermophilus qui est plus favorable aux L. bulgaricus que ce qui est observé en utilisant des doses inférieures d'inoculation telles que pratiquées dans l'art antérieur. Un yaourt ou lait fermenté de la demande ou l'invention diffère donc d'un yaourt classique à tout le moins par la valeur du rapport L. bulgaricus / S. thermophilus.

Selon un autre mode de réalisation particulier, un yoghourt ou lait fermenté de la demande ou l'invention contient ladite au moins une souche de L. bulgaricus dans un rapport de 1 ufc pour 40 à 60 ufc de ladite au moins une souche de S. thermophilus, préférentiellement dans un rapport de 1 ufc pour 45 à 55 ufc de ladite souche de S. thermophilus, plus préférentiellement dans un rapport de 1 ufc pour 47 à 53 ufc de ladite souche de S. thermophilus, très préférentiellement dans un rapport de 1 ufc pour 48 à 52 ufc de ladite souche de S. thermophilus, le plus préférentiellement dans un rapport de 1 ufc pour 48 à 51 ufc de ladite souche de S. thermophilus.

C'est notamment le cas lorsque l'on part de doses d'inoculation de L. bulgaricus (LB) et de S. thermophilus (ST) qui sont dans une proportion d'au plus 1 LB pour 50 ST, avantageusement au plus 1 LB pour 100 ST, préférentiellement au plus 1 LB pour 500 ST, très préférentiellement 1 LB pour 100-300 ST, le plus préférentiellement 1 LB pour environ 200 ST.

Par comparaison, en partant du même rapport d'inoculation ST/LB, un yaourt classique de l'art antérieur (qui est obtenu à des doses d'inoculation inférieures à celles préconisées par la demande ou l'invention) présente un rapport de 1 ufc de L. bulgaricus pour 100 ufc de S. thermophilus, environ.

Comme illustré en exemple 10, un yaourt au lait fermenté de la demande ou l'invention présente certaines caractéristiques métaboliques, notamment une teneur en folates, qui sont supérieures à celles d'un yaourt classique.

Selon un mode particulier de réalisation de la demande ou l'invention, ledit yoghourt ou lait fermenté présente à la fois une haute teneur en MS et un rapport LB/ST tels que ci-dessus décrit.

Un produit final obtenu conformément à la demande ou l'invention est la poudre de lait fermenté ou de yoghourt.

De préférence, ladite au moins une souche de S. thermophilus est contenue dans la poudre selon la demande ou l'invention sous forme vivante ou viable à une teneur d'au moins $5.10^8$ ufc/g, préférentiellement au moins $1.10^9$ ufc/g, plus préférentiellement au moins $2.10^9$ ufc/g, très préférentiellement au moins $3.10^9$ ufc/g.

De préférence, ladite au moins une souche de S. thermophilus est contenue dans la poudre selon la demande ou l'invention sous forme vivante ou viable à une teneur comprise entre $1.10^9$ ufc/g et $1.10^{10}$ ufc/g (bornes incluses).

De préférence, ladite au moins une souche de L. bulgaricus est contenue dans la poudre selon la demande ou l'invention sous forme vivante ou viable à une teneur d'au moins $1.10^4$ ufc/g, préférentiellement au moins $2.10^4$ ufc/g, préférentiellement au moins $3.10^4$ ufc/g, plus préférentiellement au moins $4.10^4$ ufc/g, très préférentiellement au moins $8.10^4$ ufc/g, très préférentiellement au moins $1.10^5$ ufc/g, encore plus préférentiellement au moins $3.10^5$ ufc/g.

De préférence, ladite au moins une souche de L. bulgaricus est contenue dans la poudre selon la demande ou l'invention sous forme vivante ou viable à une teneur comprise entre $1.10^4$ et $1.10^5$ ufc/g.

Toutes les combinaisons de teneur en S. thermophilus et de teneur en L. bulgaricus sont inclues dans le contenu de la demande de brevet.

Plus particulièrement, une poudre de lait selon la demande ou l'invention comprend avantageusement au moins une souche de S. thermophilus sous forme vivante ou viable à une concentration d'au moins $5.10^8$ ufc/g, préférentiellement d'au moins $1.10^9$ ufc/g, et au moins une souche de L. bulgaricus sous forme vivante ou viable à une concentration d'au moins $1.10^4$ ufc/g.

Cette forte concentration en S. thermophilus et L. bulgaricus est obtenue sans qu'il ait été nécessaire d'enrichir le yaourt ou lait fermenté à pulvériser. De fait, le procédé de la demande ou invention propose de produire un yaourt ou lait fermenté qui est déjà lui-même hautement concentré en S. thermophilus et en L. bulgaricus.

La poudre conforme à la demande ou à l'invention présente l'avantage de répondre elle-même à l'appellation de yoghourt ou lait fermenté :

- elle contient bien plus que la teneur minimale légale en bactéries lactiques vivantes ou viables (cette teneur minimale légale est de $1.10^7$ ufc/g), et
- elle résulte d'une symbiose entre S. thermophilus et L. bulgaricus (cf. exemple 3).

En sus de l'avantage de constituer en elle-même une source particulièrement riche en L. thermophilus et L. bulgaricus vivants, la poudre selon la demande ou l'invention a l'avantage de présenter des propriétés de conservation à qui sont particulièrement remarquables.

Dans la poudre selon la demande ou l'invention, aucune diminution substantielle de la population de S. thermophilus et L. bulgaricus sous forme vivante ou viable n'est observée au bout de 4 mois de conservation à 5°C ou à 20°C.

Une poudre selon la demande ou l'invention ne subit aucune perte détectable en S. thermophilus sous forme vivante ou viable par rapport au lait fermenté ou yoghourt dont elle provient, après une conservation de 4 mois, voire plus, à une température de 20°C.

Avantageusement, au bout de 4 mois à 20°C, les poudres de la demande ou l'invention sont à au moins $2.10^8$ ufc/g de population totale S. thermophilus et L. bulgaricus sous forme vivante ou viable. Le plus généralement, cette population totale est à au moins $3,5.10^8$ ufc/g, très fréquemment à au moins $4.10^8$ ufc/g. C'est notamment le cas lorsque le substrat laitier utilisé pour produire le yoghourt ou lait fermenté a une teneur classique en MS, c'est-à-dire une teneur en MS de 10 à 20%, par exemple 11-13%.

De manière particulièrement remarquable, selon un mode de réalisation de la demande ou l'invention, le taux de survie de la population totale S. thermophilus et L. bulgaricus contenue dans une poudre de la demande ou l'invention est d'au moins 80% au bout de 4 mois de conservation de la poudre à une température de 20°C.

C'est notamment le cas lorsque le substrat laitier utilisé pour produire le yoghourt ou lait fermenté a une teneur classique en MS, c'est-à-dire une teneur en MS de 10 à 20%, par exemple 11-13%.

De manière très avantageuse, au bout de 6 mois à 20°C, les poudres de la demande ou l'invention comprennent plus de $1,0.10^7$ ufc/g de population totale S. thermophilus et L. bulgaricus sous forme vivante ou viable, le plus généralement au moins $5.10^7$ ufc/g. Fréquemment, cette population totale est à au moins $1.10^8$ ufc/g, très fréquemment à au moins $4.10^8$ ufc/g. C'est notamment le cas lorsque le substrat laitier utilisé pour produire le yoghourt ou lait fermenté a une teneur classique en MS, c'est-à-dire une teneur en MS de 10 à 20%, par exemple 11-13%.

De manière particulièrement remarquable, selon un mode de réalisation de la demande ou l'invention, le taux de survie de la population totale S. thermophilus et L. bulgaricus contenue dans une poudre de la demande ou l'invention est d'au moins 75%, le plus généralement d'au moins 85%, au bout de 6 mois de conservation de la poudre à une température de 20°C. C'est notamment le cas lorsque le substrat laitier utilisé pour produire le yoghourt ou lait fermenté dont la poudre provient est un substrat laitier à teneur classique en MS (10-20%).

Par comparaison, les poudres du commerce testées par les inventeurs présentent, dans les mêmes conditions expérimentales, une décroissance de populations qui est détectable à l'échelle du mois. A titre d'exemple, le taux de survie des poudres commerciales est compris entre 47% (Dr Süwelack M/A 5.4 Active) et 74% (EPI PY 48) après 1 mois à 20°C.

Ces propriétés et avantages inattendus de la poudre selon la demande ou l'invention sont illustrés en exemples 12 et 13 ci-dessous.

Lorsque la poudre selon la demande ou l'invention est conservée à 5°C ou à 20°C pendant 6 mois, sa teneur en S. thermophilus et L. bulgaricus vivants ou viables (teneur totale) ne descend pas en dessous de la teneur légale minimale de $1.10^7$ ufc/g. En fait, dans une poudre selon la demande ou l'invention, la teneur en S. thermophilus et L. bulgaricus vivants ou viables (teneur totale) ne peut pas descendre en dessous de $5.10^8$ ufc/g après 6 mois de conservation à 20°C.

La poudre selon la demande ou l'invention présente des caractéristiques microbiologiques telles qu'elle répond elle-même à l'appellation de yoghourt ou lait fermenté.

De préférence, ladite au moins une souche de S. thermophilus contenue dans la poudre selon la demande ou l'invention est une souche de S. thermophilus dite de type cassante, qui ne produit pas d'exopolysaccharides (EPS), ou qui n'en produit qu'à des teneurs tellement faibles qu'un milieu à base de lait (lait, ou milieu pour lait fermenté modèle ; cf. exemple 6), après culture de cette souche à une température de 40°C jusqu'à un pH de 4,7, présente une viscosité de Casson à 4°C qui est inférieure ou égale à 500 mPa.s, préférentiellement inférieure ou égale à 400 mPa.s.

Un milieu à base de lait approprié pour une telle mesure de viscosité peut être simplement du lait, ou bien un milieu pour lait fermenté modèle, tel que, par exemple, un milieu composé de 120 grammes de poudre de lait écrémé, 1 gramme de peptide N3 (Vitalarmor 950, Armor protéines), et eau permutée QSP 1L. L'exemple 6 ci-dessous présente un exemple détaillé de protocole. Des doses classiques d'inoculation de S. thermophilus peuvent être utilisées (par exemple, ensemencement à 1% v/v)), telles que celles présentées en exemple 6. Avantageusement, ladite au moins une souche de S. thermophilus est la souche de S. thermophilus disponible auprès de la C.N.C.M. sous le numéro de dépôt I-2130.

Toute souche de L. bulgaricus que la personne du métier considère appropriée peut être utilisée. Par exemple, la souche disponible auprès de la CNCM sous le numéro de dépôt I-1519.

Comme indiqué au chapitre des procédés selon la demande ou l'invention, on peut, si souhaité, limiter de préférence au minimum le nombre de souches de S. thermophilus et de L. bulgaricus comprises dans la poudre selon la demande ou l'invention.

Une poudre selon la demande ou l'invention peut comprendre une seule souche de S. thermophilus, qui de préférence est de type cassant, et une seule souche de L. bulgaricus.

Avantageusement, la poudre de lait fermenté ou de yoghourt selon la demande ou l'invention présente une Aw (activité de l'eau) à température ambiante (température comprise entre 20 et 26°C environ, par exemple environ 25°C) qui est inférieure ou égale à 0,3, préférentiellement inférieure ou égale à 0,25, très préférentiellement inférieure à 0,25, avantageusement inférieure ou égale à 0,2. De préférence, cette Aw sera supérieure ou égale à 0,05, préférentiellement supérieure ou égale à 0,09. Selon un mode de réalisation préféré de la demande ou l'invention, cette Aw sera de 0,05-0,25, préférentiellement de 0,05-0,20, très préférentiellement de 0,09-0,19 par exemple de 0,10-0,19.

L'Aw d'une poudre selon la demande ou l'invention ou d'un aliment comprenant une poudre selon la demande ou l'invention, tel qu'un fourrage selon la demande ou l'invention, peut être mesurée à l'aide d'un hygromètre à point de rosée, tel que l'hygromètre de marque Aqualab®, commercialisé par la société DECAGON DEVICES, Pullman, Washington, USA.

Un objet décrit dans la demande ou visé par l'invention est également toute composition ou produit, contenant au moins une poudre selon la demande ou l'invention, respectivement.

Un objet décrit dans la demande ou visé par l'invention est plus particulièrement tout produit alimentaire contenant au moins une poudre selon la demande ou l'invention, respectivement.

La poudre de yoghourt produite selon la demande ou l'invention peut être incorporée aisément dans une formulation de fourrage anhydre.

En tant que produit alimentaire, la demande et l'invention visent plus particulièrement un fourrage alimentaire qui contient au moins une poudre selon la demande ou l'invention, respectivement.

Les inventeurs ont observé que lorsque la poudre selon la demande ou l'invention est dispersée et/ou incorporée dans un fourrage alimentaire gras et essentiellement anhydre, le taux de survie des souches de ferments lactiques présentes n'est pas significativement différent de celui observé lorsque la poudre est conservée seule (poudre pure, hors de tout mélange).

Le fourrage alimentaire de la demande ou l'invention est donc préférentiellement un fourrage essentiellement anhydre.

Par fourrage essentiellement anhydre, on entend une suspension concentrée de poudres et particules solides dans une phase continue composée de matières grasses plus moins cristallisées. Le terme "fourrage" englobe notamment les différents types de chocolats (noir, blanc et au lait) et les pâtes à glacer.

Un exemple avantageux de fourrage essentiellement anhydre est un fourrage gras. Un fourrage gras et essentiellement anhydre est constitué de poudres hydrophiles dispersées dans une phase continue composée d'un mélange de matières grasses plus ou moins cristallisées. La quantité d'eau dans un fourrage anhydre est uniquement celle associée aux poudres hydrophiles mises en oeuvre. Cette teneur est inférieure à environ 2 à 3%, mais non totalement nulle, d'où l'expression de fourrage gras et essentiellement anhydre.

Un fourrage conforme à la demande ou l'invention peut être contenu dans et/ou sur un produit alimentaire, par exemple un biscuit, une confiserie.

La texture d'un fourrage dépend de :

1) l'état physique de la phase continue (matières grasses fondues ou au contraire cristallisées),
2) de la fraction volumique occupée par les particules,
3) de leur distribution granulométrique et
4) de la présence éventuelle d'émulsifiants, molécules tensio-actives lubrifiant les interactions entre les particules solides.

Quand la teneur en matières grasses est supérieure à 40% et que la granulométrie des poudres est largement supérieure au micron, le premier facteur est prédominant. L'état physique de la phase continue est fonction de la nature des matières grasses (et notamment leur teneur en triglycérides saturés) et de la température. Ainsi, il est possible de formuler un fourrage se présentant sous la forme d'un liquide fluide à 40°C et d'un solide dur et cassant à 20°C.

Ce changement d'état du fourrage induit par la température permet d'obtenir une grande diversité dans les applications, qui peuvent se décliner en 3 grandes catégories :

1. application en "sandwich", c'est-à-dire sous forme d'une couche déposée entre deux bases céréalières au sens large, telles que :

1.1. des biscuits secs, dont la forme peut être ronde comme les « Prince » de Lu, rectangulaire comme les « Petit Ecolier » de Lu ou encore carrée

1.2. des gaufrettes, auquel cas plusieurs fine couches de fourrage et de base céréalière sont superposées de façon à obtenir le produit final.

Une formulation typique pour ce type d'application est la suivante :

Tableau 1 :

| Ingrédient | % mis en oeuvre dans le fourrage (% w/w) |
|---|---|
| Matière grasse végétale (coprah hydrogéné 32) | 43,9% |
| Dextrose | 7,2% |
| Sucre glace | 37,2% |
| Lactosérum doux | 1,5% |
| Poudre de yoghourt selon la demande ou l'invention | 10,2% |
| **TOTAL** | **100%** |

Les matières grasses végétales sont un mélange de palme, coprah hydrogéné et palmiste hydrogéné dans des proportions variant entre 0 et 100%.

Un procédé typique de réalisation est le suivant :

Le fourrage est réalisé par dispersion des poudres dans un mélangeur de type Hobbart de matières grasses partiellement cristallisé à une température d'environ 30°C. Un temps de mélange de 5 minutes à forte vitesse est suffisant pour obtenir un mélange homogène de consistance relativement fluide. Ce fourrage est ensuite convoyé à l'aide de conduites thermostatées vers une doseuse de type Manifold. Un volume donné de fourrage est déposé à la surface d'un biscuit, un second biscuit est ensuite positionné à la surface du fourrage. Le sandwich passe ensuite dans un tunnel de refroidissement où il subit un refroidissement à environ 1°C/min jusqu'à une température de sortie de l'ordre de 18°C : le sandwich est alors suffisamment soudé et cohésif pour être conditionné.

2. application sous forme de couche uniforme à la surface d'un produit céréalier :

2.1. le fourrage peut par exemple être déposé au centre du produit céréalier, qui peut prendre la forme d'une tartelette ronde de type « Mini Rollos » de Lu, d'un biscuit carré de type « Milk Break » de Lu, ou d'une génoise de type « Barquette » de Lu. On obtient comme dans le cas précédent un dépôt central de fourrage, mais davantage visible.

2.2. Alternativement, le produit céréalier peut être "bottomé" c'est-à-dire recouvert sur sa face inférieure d'une couche de fourrage, par un procédé de trempage à l'état liquide suivi d'un refroidissement destiné à figer à la couche de fourrage.

2.3. Une autre application possible consiste en un enrobage complet du produit céréalier par une couche de fourrage. Cette couche uniforme est obtenue en faisant passer le produit céréalier sous un "rideau" de fourrage liquide, qui recouvre le haut et les côtés du produit d'une couche de fourrage, l'enduction de la face inférieure étant assurée par un "bottomage" comme décrit en 2.2.

2.4. La couche uniforme de fourrage peut également être moulée : le fourrage liquide est déposé dans un moule, puis refroidi afin de réaliser une coque solide, qui peut ensuite être associée avec une barre céréalière. Ceci permet de réaliser un produit avec un excellent état de surface (lisse) et rend possible un marquage en surface. La formule de fourrage donnée dans l'application 1 convient pour ces applications. Une autre formule possible est donnée dans le tableau 2 ci-dessous. Dans ce second exemple de formulation de fourrage, la poudre de yoghourt est ajoutée directement à une pâte à glacer commerciale (Blanche référence G-PR3040-105 de Barry-Callebaut).

Tableau 2 :

| INGREDIENT | % mis en oeuvre dans le fourrage (% w/w) |
|---|---|
| Matière grasse végétale | 30% |
| Sucre glace | 40% |
| Poudre de yoghourt selon la demande ou l'invention | 30% |
| **TOTAL** | **100%** |

3. application sous forme de "décor" en surface ou dans la masse du produit :

Le fourrage peut être déposé sous forme de fils ou de stries à la surface du produit. La technologie de dépose est très similaire au cas 2.3., à l'exception que la dépose "feuille" (sheeting) ou "queue de carpe" générant un rideau continu est remplacée par des buses produisant des filaments de fourrage.

Les différentes applications fourrage, et plus généralement biscuits, confiserie, de la poudre selon la demande ou l'invention ont notamment en commun les points suivants :

- De préférence, la poudre est dispersée dans un milieu anhydre, dont la teneur en eau est très faible (uniquement eau ajoutée par les poudres). Les évaluations de viabilité détaillées dans l'exemple 13 ci-dessous confirment que la survie des ferments est comparable dans un milieu de ce type à celle observée pour la poudre initiale.
- De préférence, le fourrage est combiné au produit céréalier après cuisson. L'élévation de température à laquelle sont soumis les ferments ne dépasse pas une température de l'ordre de 35°C à 40°C, pendant une durée de l'ordre de quelques heures au maximum. La bonne stabilité thermique des poudres de la demande ou l'invention a été validée après plus de deux semaines (soit 340 h) à 35°C. L'impact du procédé d'incorporation de la poudre dans le fourrage sur la viabilité des ferments est donc négligeable.
- De préférence, le fourrage est combiné à un produit céréalier de faible humidité résiduelle, tel que des biscuits secs, gaufrettes ou flocons/particules de céréales. Les échanges d'eau entre fourrage anhydre et produit céréaliers sont donc limités, ce qui garantit une bonne survie des ferments.
- Du fait de la richesse en ferments des poudres, le produit de biscuiterie ou confiserie obtenu au final possède un "équivalent yoghourt" (en terme de flore lactique) compris entre 1 et 10 :

    - par exemple, le produit fini peut contenir 35% de fourrage à 10% de poudre de yoghourt, soit 3,5% de poudre de yoghourt à $3.10^9$ ferments, ce qui représente $10^8$ ferments/g. Pour un produit fini de 15g, cela représente $1,5\ 10^9$ ferments, soit l'équivalent de la quantité de ferments contenue dans un yoghourt (=$1,25.10^9$ ferments).
    - par exemple, le produit fini peut contenir 67% de fourrage à 30% de poudre de yoghourt, soit $6.10^8$ ferments. Pour une barre de 22g, le même calcul donne 10 "équivalent yoghourt", c'est-à-dire 10 fois la quantité de ferments contenus dans un yoghourt classique.

La demande et l'invention sont plus particulièrement relatives à un biscuit qui comprend au moins une poudre selon la demande ou l'invention, respectivement, et/ou au moins un fourrage selon la demande ou l'invention, respectivement.

Par biscuit, on entend dans la demande et l'invention les produits de cuisson céréaliers comprenant une pâte obtenue à partir d'un mélange comprenant en proportions variables une ou plusieurs farines de céréales ou de légumineuse, ou de fractions de céréales ou de légumineuse, de la matière grasse ainsi qu'un ou plusieurs sucres, ces derniers pouvant cependant n'être qu'en quantités négligeables ou nulles pour certaines variétés de produits tels que « crackers » ou biscottes. L'invention est également relative à l'utilisation de la poudre selon la demande ou l'invention pour la préparation d'un produit alimentaire, préférentiellement un fourrage alimentaire, ou un biscuit comprenant ladite poudre dans un fourrage. La poudre selon la demande ou l'invention peut également être utilisée dans la fabrication d'une confiserie. La demande et l'invention visent donc une confiserie qui comprend au moins une poudre selon la demande ou l'invention, respectivement, et/ou au moins un fourrage selon la demande ou l'invention, respectivement. Dans la demande et l'invention, toutes les teneurs en bactéries lactiques qui sont données sont les teneurs de ces bactéries lactiques sous forme vivante ou viable. Dans la demande et invention, le terme "comprenant", avec lequel "incluant" ou "contenant" est synonyme, est un terme ouvert, et n'exclut pas la présence d'un ou plusieurs élément(s), ingrédient(s) ou étape(s) de méthode additionnel(s) qui ne serait(seraient) pas explicitement indiqué(s), tandis que le terme "consistant" ou "constitué" est un terme fermé, qui exclut la présence de tout autre élément additionnel, étape, ou ingrédient qui ne serait pas explicitement exposé. Le terme "consistant essentiellement" ou " essentiellement constitué" est un terme partiellement ouvert, qui n'exclut pas la présence d'un ou plusieurs élément(s), ingrédient(s) ou étape(s) additionnel(s), dans la mesure où ce(s) élément(s), ingrédient(s) ou étape(s) additionnel(s) n'affecte(nt) pas matériellement les propriétés de base de l'invention.

Par conséquent, le terme "comprenant" (ou "comprend(comprennent)") inclut les termes "consistant", "constitué", aussi bien que les termes "consistant essentiellement" et " essentiellement constitué".

Dans la demande et l'invention, la « CNCM » ou « C.N.C.M. » est la Collection Nationale de Cultures de Microorganismes ; Institut Pasteur ; 25 rue du Docteur Roux ; F-75724 PARIS Cedex 15 ; France.

Exemples

Dans les exemples qui suivent, « ST » signifie *Streptococcus thermophilus"* et « LB » signifie *Lactococcus bulgaricus.*

**Exemple 1 : fabrication d'une poudre de yaourt conforme à l'invention**

1. Préparation du substrat laitier pour la fabrication de la masse yoghourt ou lait fermenté à haute concentration cellulaire :

On prépare un substrat laitier dont la fermentation permettra de produire la masse yoghourt ou lait fermenté souhaitée.

Par exemple, pour produire un yoghourt, on peut préparer un mix laitier (= substrat laitier) comme suit :

- incorporation de poudre de lait écrémé dans du lait 0% de matière grasses de sorte à obtenir un extrait sec de 20% (par exemple, pour un lait écrémé à 8,8% d'extrait sec, incorporer 12,8% de poudre à 96,2 % d'extrait sec) ;
- laisser le mix se réhydrater 30 minutes à 4°C sous agitation douce ;
- pasteurisation du mix à 95°C avec un chambrage de 10 minutes ;
- refroidissement de la masse jusqu'à 38°C.

2. Réalisation du ferment nécessaire à la fabrication de la masse yoghourt ou lait fermenté, à haute concentration bactérienne :

Pour réaliser un produit répondant à l'appellation yoghourt, il est nécessaire de sélectionner au moins une souche de ST, et au moins une souche de LB, à titre de ferments lactiques.

On sélectionne alors de préférence au moins une souche de ST et au moins une souche de LB qui ont une capacité de propagation sur substrat laitier telle qu'elles permettent de produire un/des ferment/s d'inoculation à haute densité, et plus particulièrement des ferments dont la population en ST ou le cas échéant en LB, ou bien un ferment dont chacune des populations en ST et LB, est :

- égale ou supérieure à $3.10^{10}$ ufc/g pour S. thermophilus, égale ou supérieure à $1.10^9$ ufc/g pour L. bulgaricus, pour des ferments sous forme congelée, ou
- égale ou supérieure à $1.10^{11}$ ufc/g pour S. thermophilus, égale ou supérieure à $4.10^9$ ufc/g pour L. bulgaricus, pour des ferments sous forme lyophilisée.

Pour réaliser la masse yoghourt ou lait fermenté qui, conformément à l'invention, est destinée à être pulvérisée, sont sélectionnées parmi les souches de bactéries lactiques adaptées à la fabrication du yoghourt ou lait fermenté souhaité, celles qui, de préférence, produisent peu ou pas d'exopolysaccharides (EPS).

Un critère de sélection complémentaire ou alternatif peut ainsi consister à sélectionner au moins une souche de ST et/ou au moins une souche de LB qui produit(produisent) peu ou pas d'exopolysaccharides (EPS). Ce critère de faible production d'EPS s'applique plus particulièrement au cas des souches de ST. Des exemples de souches de ST et LB appropriées comprennent par exemple :

- pour ST, la souche accessible auprès de la C.N.C.M sous le numéro de dépôt I-2130,
- pour LB, la souche accessible auprès de la C.N.C.M sous le numéro de dépôt I-1519.

Si nécessaire et/ou souhaité, la(les) souche(s) de bactérie(s) lactique(s) sélectionnée(s) est(sont) revivifiée(s), par repiquage(s) sur milieu de culture.

Dans le cadre d'une production industrielle, la ou les souches lactiques sélectionnées sont ensuite de préférence conditionnées sous forme de ferment lyophilisé, ou sous forme de ferment congelé (par exemple, en suivant le protocole de production de granules congelés décrit ci-dessous en exemple 2).

Pour sélectionner une souche de ferment lactique qui ne produit pas ou peu d'exopolysaccharides (EPS), une méthologie adaptée comprend la mesure de la viscosité du lait fermenté obtenu par fermentation d'un substrat laitier à l'aide de la (ou des) souche(s) candidate(s), tel que par exemple un yaourt produit à l'aide de la(les) souche(s) candidate(s).

La méthode de mesure de viscosité dans le cadre de l'industrie laitière permet de déterminer si la(les) souche(s) mise(s) en oeuvre pour la fermentation du lait donne(nt) un lait fermenté à texture filante (viscosité importante), si elle(s) est(sont) de type texturant (viscosité moyenne), ou bien si elle(s) donne(nt) un lait fermenté à une texture cassante (viscosité faible). La méthode de mesure de viscosité d'un lait fermenté comprend la mise en oeuvre d'un viscosimètre réfrigéré et équipé d'un système permettant d'appliquer un gradient croissant et décroissant de cisaillement au lait fermenté, tel que le viscosimètre Mettler RM® 260 réfrigéré et équipé d'un système coaxial de type DIN 145. Ce système rotatif permet d'observer une déstructuration du produit en fonction d'un gradient de cisaillement linéaire, soit une contrainte à un gradient donné.

Brièvement, cette méthode comprend :

- la culture de la (ou des) souche(s) lactique(s) candidate(s) à une température de 40°C jusqu'à un pH de 4,7 sur un milieu de culture approprié, tel que le milieu pour lait fermenté modèle composé de 120 grammes de poudre de lait écrémé, 1 gramme de peptide N3 (Vitalarmor 950, Armor protéines), et eau permutée QSP 1L, [si souhaité, plusieurs lots de laits fermentés peuvent être produits dans des conditions identiques de sorte à disposer de plusieurs exemplaires comparables], [Des doses classiques d'inoculation de S. thermophilus peuvent être utilisées (par exemple, ensemencement à 1 % v/v)), telles que celles présentées en exemple 6],
- si le(s) lait(s) fermenté(s) modèle(s) obtenu(s) est(sont) un(des) produit(s) ferme(s), ce(s) lait(s) fermenté(s) est(sont) de préférence agité(s) manuellement à l'aide d'une spatule durant une minute,
- l'incubation à 4°C pendant 30min du(des) milieu(x) fermenté(s), ou d'au moins un échantillon prélevé de ce(s) milieu(x) fermenté(s),
- les mesures de viscosité sont réalisées à 4°C, à l'aide d'un viscosimètre Mettler RM® 260 réfrigéré et équipé d'un système coaxial de type DIN 145.

Le produit subit un gradient de cisaillement croissant de 0 à 20 s-1 pendant 1 minute. Cette phase correspond à la rampe montante. Puis, il subit un gradient de cisaillement décroissant de 20 à 0 s-1 pendant 1 minute, correspondant à la rampe descendante. Les résultats sont obtenus sous forme d'une courbe d'écoulement en continu, avec rampe montante et rampe descendante entre 0 et 20 s-1.

La Figure 1 présente les trois types majeurs de courbes d'écoulement :

- le type de courbe obtenu à l'aide de la souche S. thermophilus 001 010 correspond à une souche qui donne un lait fermenté à texture filante (viscosité importante),
- le type de courbe obtenu à l'aide de la souche S. thermophilus 001 098 correspond à une souche qui est de type texturant (viscosité moyenne),
- le type de courbe obtenu à l'aide de la souche S; thermophilus TS 10B (société DSM Food specialties Dairy ingredients ; BP 1 ; 2600 MA Delft ; PAYS BAS) correspond à une souche qui donne un lait fermenté à texture cassante (viscosité faible).

Les mesures obtenues sont ajustées par application du modèle mathématique de Casson, de sorte à obtenir la viscosité de Casson.

Le modèle de Casson est formulé par l'équation suivante (équation 1) :

$$\sqrt{\tau} \quad = \quad \sqrt{\tau_0} \quad + \quad \sqrt{\eta \times D} \tag{1}$$

$\tau$ : Contrainte (Pa)
$\tau_0$ : Seuil d'écoulement du produit (Pa)
$\eta$ : Viscosité du produit (Pa.s)
$D$ : Gradient de cisaillement (s-1)

Cette modélisation est suivie du tracé d'une droite de régression linéaire sur la partie descendante de la courbe ; elle permet de relever deux paramètres importants :

- le seuil d'écoulement du produit $\tau_0$, correspondant à l'ordonnée à l'origine,
- la viscosité $\eta$ du produit, correspondant à la pente de la droite de régression.

La Figure 2 illustre la détermination du seuil d'écoulement $\tau_0$ et de la viscosité $\eta$ d'un lait fermenté à l'aide de la souche 001 098, sur la courbe descente d'écoulement modélisée par Casson.

3. Fabrication de la masse yoghourt à haute concentration bactérienne :

La masse yoghourt ou lait fermenté est fabriquée par inoculation du substrat réalisé en 1. à l'aide de la ou des souches de bactéries lactiques sélectionnées en 2., et conduite de la fermentation lactique.
Par exemple, pour produire une masse yoghourt :

- ensemencer le mix élaboré en 1. avec 20g/L de ferments concentrés préparés en 2. en suivant la composition suivante : 95% de concentrés congelés présentant une population de ST à au moins $3.10^{10}$ ufc/g, plus 5% de concentré de LB à au moins $1.10^9$ ufc/g ;
- fermenter à 38°C pendant 3h à 4h pour un arrêt de fermentation à pH = 4,8 +0,5/-0,3 unité pH (pour un yoghourt), par exemple pH = 4,8 +0,4/-0,3, par exemple pH = 4,8 +/- 0,3 unité pH, par exemple pH 4,8 +/- 0,2 unité pH, préférentiellement pH +0,5/-0,1, (pour un lait fermenté, pH = 4,6 +/- 0,2, généralement);
- arrêt de la fermentation par refroidissement et lissage sur une plateforme type SR10 ;
- stockage de la masse à 4°C jusqu'à 10 jours maximum.

4. Fabrication de la poudre de lait fermenté ou yoghourt :

La masse yoghourt ou lait fermenté obtenue à l'issue du point 3. ci-dessus est séchée en conditions douces, de sorte à :

- atteindre une Aw (mesurée à température ambiante, c'est-à-dire à une température comprise entre 20 et 26°C environ, par exemple à environ 25°C) qui soit inférieure ou égale à 0,3, préférentiellement inférieure ou égale à 0,25, très préférentiellement inférieure à 0,25, avantageusement inférieure ou égale à 0,2. De préférence, cette Aw sera supérieure ou égale à 0,05, préférentiellement supérieure ou égale à 0,09. Selon un mode de réalisation préféré de l'invention, cette Aw sera de 0,05-0,25, préférentiellement de 0,05-0,20, très préférentiellement de 0,09-0,19 par exemple de 0,10-0,19,
- tout en maintenant le maximum de cellules de ST et LB vivantes ou viables (c'est-à-dire limiter au maximum la perte en cellules vivantes ou viables).

Les mesures d'Aw (« *water activity* ») sont réalisées conformément à la pratique de la personne du métier pour des produits alimentaires. L'Aw peut par exemple être mesurée à l'aide d'un hygromètre à point de rosée, tel que l'hygromètre de marque Aqualab®, commercialisé par la société DECAGON DEVICES, Pullman, Washington, USA.
Un échantillon de quelques grammes de poudre (ou, le cas échéant, de fourrage comprenant une poudre selon l'invention) est introduit dans une coupelle de mesure. La coupelle est ensuite positionnée dans une chambre de mesure thermostatée. L'humidité de l'air surmontant la poudre (ou, le cas échéant, le fourrage) est analysée en quelques minutes, puis comparée automatiquement avec l'humidité surmontant l'eau pure à la température de mesure. Le ratio des deux humidités relatives, appelé Activité de l'eau (Aw), est ensuite affiché par l'appareil au bout des quelques minutes nécessaires à l'équilibration de l'enceinte.
Des exemples de procédés de séchage doux appropriés comprennent le séchage par lyophilisation, le traitement sur lit fluidisé, et le séchage par atomisation douce, par exemple une atomisation avec une température de sortie inférieure ou égale à 100°C, de préférence inférieure ou égale à 80°C, plus préférentiellement inférieure ou égale à 60°C. Un exemple de procédé de séchage par atomisation douce est décrit en exemple 3 ci-dessous.
Le procédé de séchage utilisé ne doit pas ajouter à la poudre des produits non utilisables en alimentation humaine, et/ou non utilisables pour une appellation de yoghourt. La liste de tels produits non désirés peut varier selon la législation des pays concernés. Pour une poudre destinée à une consommation en France ou en Espagne sous l'appellation de yoghourt, le procédé ne doit pas ajouter de maltodextrines à la poudre produite.
On obtient une poudre selon l'invention, qui a une très forte teneur en bactéries lactiques vivantes ou viables, et plus particulièrement dans le cas de la masse yoghourt décrite, une très forte teneur en ST et LB vivants ou viables, et qui n'est pas contaminée par des germes non désirés en alimentation humaine. La poudre produite conformément à l'invention à partir d'une masse yoghourt répond alors elle-même à l'appellation de yoghourt.
La poudre ainsi obtenue présente l'exceptionnelle capacité de pouvoir être conservée pendant plusieurs mois à température ambiante sans perte significative en bactéries lactiques vivantes ou viables, ou à tout le moins sans perte significative en ST et de LB vivants ou viables.
Plus particulièrement, la poudre selon l'invention présente l'exceptionnelle capacité de pouvoir être conservée pendant plusieurs mois à température ambiante (environ 20°C), sans que sa teneur en LB et/ou ST vivants ou viables ne descende au-dessous du seuil minimal en ST+LB requis par l'appellation yoghourt, à savoir sans descendre à une population en ST+LT vivants ou viables qui serait inférieure à $10.10^7$ ufc/g.

A 35°C, on observe une diminution lente et progressive de la flore lactique avec le temps : au bout de 2 semaines à cette température, les taux de survie sont compris entre 25% et 60% pour les S. thermophilus, c'est-à-dire que l'on obtient à la fin de ce stockage entre $1,5.10^8$ ufc/g et $1,5.10^9$ ufc/g, ce qui reste élevé. Le taux de survie est plus faible pour les L. bulgaricus, de l'ordre de 2 à 5%, d'où des teneurs entre $2.10^2$ ufc/g et $2.10^3$ ufc/g. On observe également que la vitesse de mortalité à 35°C de la flore totale des poudres de l'invention est généralement équivalente à celles de poudres de l'art antérieur à 5°C ou 20°C, conditions de conservation considérées comme idéales par l'homme de l'art.

La poudre produite présente une granulométrie appropriée à sa destination (reconstitution de yaourt répondant à l'appellation de yaourt, utilisation comme ingrédient pour la fabrication d'un fourrage alimentaire, ou plus généralement comme ingrédient pour la fabrication d'un produit alimentaire). Elle peut par exemple présenter une granulométrie de 10 à 500 micromètres, de préférence entre 10 et 300 micromètres.

**Exemple 2 : fabrication de concentrés congelées à haute densité en ferment lactique (ST et/ou LB à chacun au moins $5.10^{10}$ ufc/g)**

1. Préparation de l'inoculum :

- sélectionner au moins une souche de LB et/ou au moins une souche de ST faible(s) ou non productrice(s) d'EPS, par exemple la souche C.N.C.M. I-2130 de ST et/ou la souche I-1519 de LB,
- revivifier la ou les souche(s) sélectionnée(s) par trois repiquages successifs sur un milieu de culture adapté aux bactéries lactiques, tel que lait plus extrait de levure (poudre de lait écrémé de 90 à 140g plus extrait de levure en poudre de 0,5 à 3g QSP 1kg avec de l'eau distillée, stérilisation 121°C 15 minutes) :

    - ensemencement à 1%, incubation à 40°C pour une ou les souche(s) de ST, à 44°C pour la ou les souche(s) de LB,
    - arrêt des repiquages par refroidissement (4°C) après la prise (gélification du lait) ;

- ensemencer à l'aide du dernier repiquage (1%), 200 mL de M17 (bouillon commercialisé par Biokar Diagnostics, référence BK 0888HA) à 40°C (pour ST), 200 mL de MRS (bouillon commercialisé par Serlabo, référence BD-288130 (0881-17)) à 44°C (pour LB) ;
- faire un suivi de densité optique sur un spectrophotomètre à 660 nanomètres ;
- arrêt de la croissance bactérienne de l'inoculum par le froid (4°C) après obtention de la fin de phase exponentielle de croissance (environ 4h à 4h30 dans de bonnes conditions).

2. Préparation du fermenteur (Exemple : Type BIOSTAT ED) :

Choix de la normalité de la base de régulation

- ST : solution de NaOH 6N,
- LB : solution de NaOH 2N,

Stérilisation en autoclave 121 °C 15 minutes :

- système d'admission de base et d'inoculation,
- solution de base,
- rotor et bol de la centrifugeuse,
- connexions du fermenteur vers la centrifugeuse,
- connexions pour récupérer le surnageant stérile vers un flacon,
- connexion de la bouteille de concentré stérile vers l'azote (tuyaux+aiguille).

Etalonnage de la sonde pH ;

Stérilisation du fermenteur :

- le remplir d'eau ultra pure,
- programmer un cycle de stérilisation in situ (121°C 20 minutes).

3. Préparation du milieu de culture :

- utilisation d'eau distillée,
- peser les différents composés du milieu (voir recettes ci-dessous),

- hydratation 30 min sous agitation,
- stérilisation en autoclave (121°C 15 minutes),

- refroidissement à 4°C : 40°C (ST), 44°C (LB),
- transfert du milieu de culture dans le fermenteur de façon aseptique.

| Milieu de propagation ST | Milieu de propagation LB |
|---|---|
| - Eau distillée | - Eau distillée |
| - Perméat d'ultrafiltration 50g/L | - Perméat d'ultrafiltration 50g/L |
| - Extrait de levure 10g/L | - Extrait de levure 15g/L |
| - Sulfate de manganèse 0,1 g/L | - Sulfate de manganèse 0,1 g/L |
| - Poudre de lait écrémé 10g/L | - Tween 80 |
| pH de départ 6,5 | pH de départ 6,5 |

4. Lancement de la propagation :

- ensemencement du fermenteur avec l'inoculum à raison de 100 mL pour 6 litres
- lancement du programme fermenteur permettant de réguler la température, réguler le pH via les solutions de soude, agiter le milieu de culture, enregistrer le pH, la température et le volume de soude délivré.

5. Arrêt de la propagation :

Les données sur le volume de soude délivré durant la fermentation pour réguler le pH, sont traitées pour obtenir une courbe du cumul du volume de soude consommé en fonction du temps, puis pour obtenir une courbe de vitesse de consommation de soude en fonction du temps. Le point maximum de cette dernière courbe correspondant au moment où l'on doit arrêter la propagation par refroidissement du fermentat.

6. Centrifugation à froid (exemple : Rotor a flux continu 8575) :

- prélèvement du fermentat par pompe péristaltique, et alimentation du bol de la centrifugeuse,
- vitesse : 13 000 rpm (ST), 10 000 rpm (LB),
- récupération d'une partie du surnageant dans un flacon stérile,
- après centrifugation, diluer le culot obtenu avec du surnageant, jusqu'à ce qu'il soit pipetable, le transférer dans une bouteille stérile préalablement refroidi (travailler sous hotte à flux laminaire, maintenir le concentré à des températures inférieures à 10°C ),

7. Congélation (travailler sous hotte à flux laminaire, manipulation aseptique, maintenir le concentré à des températures inférieures à 10°C) :

- raccordement de la bouteille de culot dilué à une pompe péristaltique à l'aide d'un tuyau souple de petite section dont l'autre extrémité est reliée à un système permettant la connexion avec plusieurs aiguilles de seringue,
- disposer un bac isotherme rempli d'azote liquide sous les aiguilles,
- démarrer la pompe péristaltique et régler le débit pour obtenir un gouttage régulier du concentré dans l'azote liquide,
- récupérer et conditionner les granulés stérilement puis les conserver à -80°C ;

7. Contrôle des granulés concentrés congelés :

Après avoir fait fondre rapidement des granulés, effectuer un dénombrement (ST ou LB : Méthode FIL117A:1988).

Un granulé congelé de S. thermophilus et/ou L. bulgaricus présente une population égale ou supérieure à $3.10^{10}$ ufc/g pour ST, à $1.10^9$ ufc/g pour LB, respectivement.

**Exemple 3 : exemple de procédé de séchage approfondi mais doux**

En Figure 3, est présenté un schéma de dispositif d'atomisation douce adaptée à la fabrication d'une poudre conforme à l'invention.

Une pompe haute pression 1 amène le concentré jusqu'aux buses d'atomisation. Par leur faible diamètre de passage, celles-ci génèrent la pulvérisation du produit en un nuage de fines gouttelettes. L'air chaud (dont la température sera préférablement comprise entre 190 et 210°C) est amené lui aussi en haut de la chambre de séchage 2. Le produit et l'air descendent ainsi à co-courant dans l'enceinte et c'est durant ce cheminement qu'a lieu le principal transfert d'eau du produit vers l'air. Pour ces températures d'air, la température du produit n'excédera de préférence pas 80°C au cours du séchage. De par la symétrie de la chambre de séchage, l'air remonte le long des parois, entraînant avec lui les particules de produit de faible diamètre, appelées *fines.* L'air ainsi chargé en eau et en fines est extrait en haut de la chambre (sa température est alors comprise entre 80 et 90°C) puis traverse une série de cyclones 3, qui du fait de leur géométrie, assurent la séparation air-fines. L'air ainsi débarrassé des fines est extrait et rejeté à l'extérieur par un ventilateur. Un dernier filtre garantit souvent une purification finale de l'air de manière à limiter au maximum les rejets de matière organique dans l'environnement.

Les fines quant à elles sont récupérées et réincorporées dans le produit 4, soit au niveau de la chambre de séchage, soit au sommet de la chambre, soit au niveau du lit vibrant externe. Ce choix de niveau de réinjection sera orienté par la granulométrie souhaitée par le producteur.

En bas de la chambre de séchage, les granulés rencontrent un air 5 de température moyenne (entre 60 et 80°C) qui assure deux fonctions : la constitution d'un lit fluidisé et la poursuite du séchage. Les granulés, à la température de l'air du lit fluidisé, sont extraits de la chambre et cheminent dans un lit vibrant externe 6, qui assure l'achèvement du séchage et le refroidissement de la poudre (jusqu'à une température de 30°C environ) avant son conditionnement.

Généralement, un tamis 7 est mis en place à la sortie de ce lit vibrant de manière à écarter les petits blocs formés au cours du séchage. Le produit peut alors être stocké ou conditionné dans la foulée.

**Exemple 4: comparaison de la cinétique de fermentation obtenue par ensemencement massif conforme à l'invention, à celle obtenue avec des doses inférieures d'inoculation**

Un mix laitier est inoculé par une souche de ST (souche CNCM I-2130) et une souche de LB (CNCM I-1519) conformément à l'invention, comme décrit au point 1. de l'exemple 1.

La souche de ST et celle de LB sont ensemencées sous forme de granulés congelés préparés comme décrit à l'exemple 2 ci-dessus. Chaque granulé congelé contient au moins $3.10^{10}$ ufc/g de ST, et/ou au moins $1.10^9$ ufc/g de LB.

Les granulés congelés de ST et LB sont apportés dans le mix laitier, de sorte à y apporter $2,7.10^9$ ufc/g de ST et $1,4.10^7$ ufc/g de LB.

Ces doses d'ensemencement sont 10 à 1 000 fois supérieures à celles qui seraient classiquement utilisées lors de la fabrication traditionnel d'un yoghourt ou lait fermenté (de 0,01 g/L à 1g/L).

En parallèle, des yoghourts ont été produits dans les mêmes conditions, mais en utilisant des doses d'inoculation de ST et LB qui sont inférieures à celles préconisées par l'invention (cf. exemple 4 et Figure 4), à savoir une dose d'inoculation en ST de $1.10^7$ ufc/g et une dose d'inoculation en LB de $5.10^4$ ufc/g. La fermentation de ce substrat laitier ensemencé à des doses inférieures à celles de l'invention a été menée jusqu'à obtenir un yoghourt qui présente des teneurs en ST et LB sous forme vivante de 5.10$^8$ ufc/g pour ST et de 5.10$^6$ ufc/g pour LB. De telles teneurs en ST et LB correspondent à la borne supérieure de ce qui est susceptible d'être obtenu en suivant l'approche de l'art antérieur. Ces yoghourts sont ici dénommés « yoghourts de référence ».

Le pH est mesuré au cours du temps.

La figure 4 présente les cinétiques d'acidification obtenues (courbe du bas : inoculation conforme à l'invention, conduisant à un yoghourt conforme à l'invention ; courbe du haut : inoculation à des doses inférieures à celles préconisées par l'invention).

Avec les doses d'inoculation conformes à l'invention, l'acidification du lait se déroule sur une plus courte période que celle observée avec des doses inférieures d'inoculation, mais la cinétique d'acidification de l'invention correspond tout à fait à une cinétique de fabrication de yoghourts ou laits fermentés traditionnels (cinétique de la symbiose ST+LB).

Dans le cadre de l'invention, la croissance des ferments lactiques est plus faible que celle susceptible d'être observée dans le cadre d'un procédé traditionnel de fabrication de yoghourt ou lait fermenté, mais la population finale en ferments lactiques est bien supérieure.

La population inoculée dans le cadre de l'invention est même supérieure à la population susceptible d'être obtenue en fin de fermentation lors de la production d'un yoghourt ou lait fermenté obtenu à partir des doses d'inoculation en ST et LB inférieures à celles préconisées par l'invention.

Dans le cadre de l'invention, on observe qu'en début de fermentation, la phase de latence est considérablement réduite, par rapport à la fermentation obtenue avec des doses inférieures d'inoculation, mais que les deux cinétiques d'acidification se rejoignent en fin de fermentation (flèches verticales à pH 4,75 = moment où la fermentation est arrêtée par refroidissement).

En fin de fermentation, les deux biomasses apparaissent être toutes deux en phase stationnaire de croissance, phase au cours de laquelle se déroule la production de métabolites secondaires (cf. exemple 10).

### Exemple 5: exemple de préparation des échantillons pour dénombrement microbiotogique (% de ST et LB vivants ou viables).

La poudre selon l'invention, ou le cas échéant le fourrage selon l'invention, peuvent être préparés comme suit, pour mise en oeuvre de la méthode de comptage des souches lactiques présentes.

Cette méthode a été développé afin d'optimiser la technique de réhydratation des poudres de yaourt en vu d'un dénombrement des bactéries lactiques présentes.

Il est également possible d'utiliser cette méthode pour une application sur les fourrages gras.

### PRINCIPE

Réhydratation d'une poudre de yaourt sous sa forme de granulés ou de poudre fine en favorisant l'homogénéisation, le temps de contact avec le diluant, la température d'incubation, afin d'être dans des conditions optimales pour réhydrater la poudre sans faire évoluer la population initiale de ferment lactique contenu dans la poudre de yaourt.

### REACTIFS

**Diluant**

Le Tryptone sel est utilisé pour réaliser des dilutions.

### MATERIEL

- Sac Stomacher® stérile avec clips de fermeture

- Portoir de pesée

- Balance précision 0,01 g

- Cuillère stérile

- Stomacher® ou homogénéisateur

- Bain-marie thermostaté et agité

- Pipette stérile de 1 mL

**MODE OPERATOIRE**

**Pesée de l'échantillon**

Utiliser un sac Stomacher® stérile sur un portoir de pesée et une balance de précision 0,01g.
Peser environ 5 grammes de poudre, noter la quantité exacte.
Ajouter 45 grammes de diluant tryptone sel, noter la quantité exacte.
Fermer le sac stomacher avec des clips.

**Homogénéisation préliminaire**

Homogénéiser le sac au stomacher pendant 10 secondes.
Cette étape permet de mettre en suspension la poudre dans le diluant.

**Incubation**

Placer les sacs dans un bain marie agité et chauffé à 37°C, pendant exactement 30 minutes.
Cette étape permet de chauffer légèrement la poudre qui va naturellement se dissoudre dans le liquide.

**Homogénéisation**

Homogénéiser de nouveau le sac au Stomacher® pendant 2 minutes.
Cette étape permet de casser les dernières particules restantes en suspension et de bien mélanger la dilution.
Vous obtenez alors une dilution au 1/10$^{eme}$ de l'échantillon.

**Dénombrement des bactéries lactiques de la poudre de yaourt réhydratée.**

Appliquer la norme officielle pour le dénombrement des bactéries lactiques : FIL 117B : 1997, Yaourt : Dénombrement des microorganismes caractéristiques  Technique de comptage des colonies à 37°C.

**EXPRESSION DU RESULTAT**

Se référer à la norme FIL 117B: 1997 (paragraphe 9) pour l'expression des résultats.
Prendre en compte la dilution initiale de l'échantillon dans le sac Stomacher®.

**Exemple 6: exemple de préparation de milieu pour mesure de viscosité (sélection de souches de type cassant)**

Fabrication des laits fermentés pour les mesures de viscosités :

1. Préparation du mix laitier :

- 120 g de poudre de lait écrémé
- 1 g de peptide N3 (Vitalarmor 950, Armor protéines) pour 1 litre de mix
- 930 mL d'eau permutée

Laisser 30 minutes le mix à température ambiante, le temps que la poudre de lait se réhydrate.
Répartir le mix par volume d'un litre dans des bouteilles, puis les incuber dans le bain-marie une fois l'eau en ébullition. Laisser 35 minutes, le temps d'atteindre 95°C à coeur dans les bouteilles.
Régler la température à 95°C et laisser 10 minutes, ce temps correspondant à la pasteurisation du lait.
Refroidir les bouteilles en les laissant dans l'eau froide pendant 30 minutes, puis les placer à 4°C pendant une nuit.

2. Préparation de l'Inoculum

Repiquage de la souche TS10B (société DSM Food specialties Dairy ingrédients ; BP 1 ; 2600 MA Delft ; PAYS BAS) au moins 2 fois dans du lait stérilisé plus extrait de levure :

- Milieu de repiquage : 135 g de poudre de lait écrémé + 2 g d'extrait de levure (BIOSPRINGER code 180) + 930 mL d'eau permutée, autoclavage 115°C 20'
- Ensemencement à 1 %
- Fermentation à 44°C pendant 3 heures

3. La fermentation

• Incuber les 4 bouteilles d'un litre de mix à 43°C pendant 45 minutes.
• Ensemencement :

   - répartir les 4 litres de mix dans 2 bouteilles de 2 litres + 0,02 mL de formiate/L de mix
   - ensemencer les 2 L de mix à 1 % (v/v) avec le ferment (voir exemple 2 pour la préparation de ferments concentrés)
   - bien homogénéiser
   - mettre en pots : 16 pots par produits et les placer à l'étuve à 40°C pour la fermentation

• Arrêt de la fermentation à pH 4,70 (possibilité d'utiliser 3 pots) en les plaçant à 4°C pendant une nuit.
• Les pots de lait fermentés sont stockés à 10°C pendant une semaine.
• Les mesures de texture ont été réalisées à J8.

**Exemple 7 : une poudre selon l'invention présente un taux de survie en bactéries lactiques après passage dans un environnement de type estomac humain, qui est équivalent, voire supérieur, au taux que présenterait un yaourt.**

Une poudre selon l'invention a été produite comme décrite en exemple 1 (inoculation à l'aide de concentrés congelés produits comme décrit en exemple 2 ; procédé de séchage de l'exemple 3). Cette poudre contenait $5.10^9$ ufc/g de ST CNCM I-2130 et $1.10^6$ ufc/g de LB CNCM I-1519 sous forme vivante.
Cette poudre de l'invention a également été formulée sous la forme d'un fourrage gras (composition du fourrage telle que décrite en tableau 1 - cf. partie descriptive -).
Cette poudre de l'invention a été testée sous forme nue et sous forme de fourrage gras.
Une autre poudre selon l'invention a été produite comme décrite en exemple 8 (substrat laitier à haute teneur en MS comme décrit en exemple 8 - teneur en MS 30%-; inoculation à l'aide de concentrés congelés produits comme décrit en exemple 2 ; procédé de séchage de l'exemple 9). Cette autre poudre de l'invention a été formulée sous forme de fourrage gras (composition du fourrage telle que décrite en tableau 1 - cf. partie descriptive -).
Cette autre poudre de l'invention a été testée sous forme de fourrage gras seulement.
En parallèle, des yoghourts ont été produits dans les mêmes conditions que les yoghourts qui ont été fabriqués pour produire la poudre 1, mais en utilisant des doses d'inoculation de ST et LB qui sont inférieures à celles préconisées par l'invention (cf. exemple 4 et Figure 4), à savoir une dose d'inoculation en ST de $1.10^7$ ufc/g et une dose d'inoculation en LB de $5.10^4$ ufc/g.
La fermentation de ce substrat laitier ensemencé à des doses inférieures à celles de l'invention a été menée jusqu'à obtenir un yoghourt qui présente des teneurs en ST et LB sous forme vivante de $5.10^8$ ufc/g pour ST et de $5.10^6$ ufc/g pour LB. De telles teneurs en ST et LB correspondent à la borne supérieure de ce qui est susceptible d'être obtenu en suivant l'approche de l'art antérieur.
Ces yoghourts sont ici dénommés « yoghourts de référence ».
Ces poudres et fourrages ont été soumis à un test qui simule le passage de la poudre dans un estomac humain, et le taux de survie des bactéries lactiques ST et LB a été mesuré selon le modèle du TNO (Netherlands Organisation for Applied Scientific Research ; Utrechtseweg 48; 3704 HE Zeist; P.O. box 360 ; 3700 AJ Zeist ; Pays-Bas) Gastro-intestinal T.I.M (demande internationaleWO 94/09895 et ses contreparties US, telles que US 5 525 305).
Les résultats sont illustrés par les figures 9 et 10 (taux cumulatifs de survie en pourcentage de la dose initiale après passage dans l'estomac et le petit intestin, pour ST -figure 9- et LB -figure 10-).
Les résultats des survies au modèle gastro-intestinal montrent que la poudre de yoghourt de l'invention présente des taux de survie supérieurs à ceux observés dans le yoghourt de référence pour les deux espèces S. thermophilus et L. bulgaricus. Ces résultats montrent que la poudre de yoghourt selon l'invention est une matrice très performante pour apporter des bactéries du yoghourt viables dans le grand intestin.

Plus le taux de survie est important, plus la poudre aura des qualités alicamentaires prononcées.

Il est à noter que si la poudre de l'invention est incorporée dans un milieu gras, tel qu'un fourrage gras, le taux de survie sera encore meilleur.

## Exemple 8 : exemple de production de yoghourt ou lait fermenté conforme à l'invention, qui présente une forte teneur en ST et LB, et qui présente en outre une teneur élevée en MS

Un yoghourt ou lait fermenté conforme à l'invention comprend une haute densité en ST et LB sous forme vivante ou viable (teneurs en ST et LB sous forme vivante telles que décrites dans la demande, par exemple teneur en ST vivants supérieure ou égale à $5.10^8$ ufc/g et teneur en LB vivants supérieure ou égale à $1.10^7$ ufc/g).

Selon un mode de réalisation particulier de l'invention, le yoghourt ou lait fermenté produit présente en outre une teneur élevée en matière sèche. Conformément à l'invention, un tel yoghourt ou lait fermenté peut être produit à partir d'un substrat laitier dont la teneur en MS est élevée (la teneur classique en MS d'un substrat laitier classique est de l'ordre de 10-20% environ, généralement de 11-13%). La teneur élevée en MS du substrat laitier peut être obtenue par concentration de cette MS, par exemple par élimination d'une partie de l'eau contenue dans ce substrat laitier.

Pour ce mode de réalisation particulier, les valeurs cibles de hautes teneurs en MS sont d'au moins 25%, par exemple de 25-60%.

Un exemple particulier de mise en oeuvre est le suivant :

Du lait de vache cru a été pasteurisé, homogénéisé (140/20 bars), refroidi et transféré vers un tank de stockage, où il a été stocké jusqu'à utilisation (temps de stockage = pendant 24 heures). Le lait stocké contenait 39,5 g/L de matières grasses ; 35,23 g/L de protéines ; 129,5 g/L de matière sèche (MS de 12-13%). Sa densité à 20°C était de 1,0299.

Par re-circulation, de la poudre de lactosérum déminéralisé (pH de 6,5 environ) mais dont le lactose n'a pas été éliminé (poudre de lactosérum déminéralisé 90% disponible dans le commerce, par exemple auprès de LSF ; a été incorporée dans un volume d'eau osmosée chaude, préférentiellement à une température comprise entre 50 et 60°C, par exemple 55°C (0,295 kg de poudre de lactosérum déminéralisé pour 1 L d'eau osmosée à 55°C). Le lactosérum ainsi re-constitué a été soumis à un traitement au moins équivalent à la pasteurisation (par exemple, température de 75°C pendant 15 secondes), puis a été refroidi, par exemple à 3°C. Le lactosérum est alors destiné à être incorporé dans le lait.

Le lactosérum est incorporé dans le lait de sorte à former un mélange de 69% de lait et de 31% de lactosérum reconstitué. De l'eau osmosée pasteurisée est ensuite ajoutée de façon à obtenir un mélange de 42% de lait, 19% de lactosérum reconstitué et 38% d'eau osmosée pasteurisée.

La solution résultante constitue le « mix » laitier de départ (= substrat laitier).

Ce « mix » a été soumis à un traitement thermique au moins équivalent à la pasteurisation (par exemple, température de 75°C pendant 15 secondes), homogénéisé, refroidi (par exemple à 3°C), et stocké à froid dans un tank de stockage. Le « mix » stocké présentait une teneur en matières grasses de 16,5 g/L, une teneur en protéines de 22,3 g/L, et une teneur en MS de 110,81 g/L (MS de 11-12%). Sa densité à 20°C était de 1,0308.

Le « mix » est alors destiné à être injecté dans des évaporateurs, de sorte à concentrer sa teneur en MS. Avant d'être injecté dans les évaporateurs, le « mix » laitier qui a été conservé en tank de stockage, a, par sécurité, été à nouveau soumis à un traitement thermique au moins équivalent à la pasteurisation (par exemple, 90°C pendant 20 secondes). La température appliquée au « mix » laitier dans les évaporateurs était de 85°C environ en entrée et de 55°C environ en sortie.

La teneur en MS du « mix » laitier a été contrôlée à la sortie des évaporateurs, soit par mesure directe (mesure des matières résiduelles après 17 heures à 105°C), soit par mesure indirecte en mesurant en continu la densité du « mix » sortant des évaporateurs (la teneur en MS pouvant en être déduite à partir d'abaques pré-établis donnant la correspondance entre densité et MS).

Tant que la teneur en MS mesurée ne correspond pas à une valeur cible souhaitée de MS (par exemple, teneur en MS d'au moins 36%, par exemple de 36-48%), le « mix » laitier peut être recyclé dans le tank de stockage, de sorte à être à nouveau injecté dans les évaporateurs.

Dans l'exemple ici décrit (lait additionné de lactosérum re-constitué), une heure de circulation et re-circulation dans les évaporateurs a été nécessaire pour que le « mix » laitier atteigne, par évaporation, une teneur en MS qui corresponde à la valeur cible souhaitée de 36-48%.

Lorsque la valeur cible de MS a été atteinte, le « mix » laitier concentré a été dirigé hors des évaporateurs. Il est alors destiné à être inoculé par ST et LB conformément à l'invention, c'est-à-dire à des teneurs élevées en ST et LB, pour fermentation lactique. Par sécurité, le « mix » laitier concentré a, avant inoculation, été à nouveau pasteurisé (par exemple, 75°C pendant 15 secondes). Le « mix » laitier concentré et pasteurisé a été refroidi jusqu'à une température proche de la température de fermentation. Si l'inoculation de ST et LB se fait à l'aide de concentrés congelés, le « mix » laitier concentré pasteurisé est refroidi à une température légèrement supérieure à la température de fermentation (par exemple, environ 47°C), afin de tenir compte de la baisse de température engendrée par l'inoculation conséquente des concentrés congelés.

Dans l'exemple ici décrit, le « mix » laitier concentré a été refroidi à une température de 47°C environ ; il présentait une teneur en matières grasses de 6,0 g/100g, une teneur en protéines de 7,5 g/100g, une teneur en MS de 37,5 g/100g (MS de 37,5%); sa densité à 47°C était de 1,117.

L'inoculation du « mix » laitier a été réalisée à hauteur de 20 g/L par des ferments de ST (granules de concentré congelé de Streptococcus thermophilus CNCM I-2130, contenant environ $3,2.10^{11}$ ufc de ST par gramme de concentré congelé, préparé comme décrit en exemple 2) et des ferments de LB (granules de concentré congelé de Lactobacillus bulgaricus CNCM I-1519, contenant environ $7,9.10^9$ ufc de LB par gramme de concentré congelé, préparé comme décrit en exemple 2).

L'inoculation et la fermentation lactique ont été conduites selon les usages loyaux et constants, conformément à la Norme CODEX STAN A-11 (a)-1975 (maintenant référencée sous Codex Stan 243-2003) et au Décret de la République française n°88-1203, de sorte à produire des yoghourts. La fermentation lactique a été conduite à une température de 38°C, et a été arrêtée lorsqu'un pH de 4,8 +0,5/- 0,3 soit atteint (pour un yoghourt), par exemple pH = 4,8 +0,4/-0,3, par exemple par exemple pH = 4,8 +/- 0,3 unité pH, par exemple pH 4,8 +/- 0,2 unité pH (pour un lait fermenté, pH = 4,6+/- 0,2, généralement).

Le produit fermenté obtenu est alors un yoghourt ou un lait fermenté :

- qui contient de hautes teneurs en ST+LB sous forme vivante, et
- qui contient en outre de hautes teneurs en MS, notamment une teneur en MS de 36-48% (environ 37%).

Le fait d'utiliser un substrat laitier à haute teneur en MS, comme ici décrit, présente, par rapport à un substrat laitier classique, notamment l'avantage de pouvoir plus aisément maîtriser, et plus particulièrement plus aisément limiter, la chute de pH lors de la fermentation. Le substrat laitier à haute teneur en MS présente en effet un pouvoir tampon plus fort que le substrat laitier à teneur classique en MS.

Il est ainsi aisé de produire des yoghourts et laits fermentés qui sont peu acides (par exemple pH 5,0-5,2 environ), ce qui correspond au goût actuel moyen des consommateurs, tout en présentant des teneurs élevées en ST et LB.

Par rapport à des yoghourts et laits fermentés à teneur classique en MS, les yoghourts ou laits fermentés à haute teneur en MS présentent notamment l'avantage d'être plus aisément transformables sous forme de poudre, notamment par voie de séchage (atomisation, par exemple). Le procédé de transformation est plus simple à mettre en oeuvre et à conduire, et est moins coûteux.

Lors de la transformation sous forme de poudre, les yoghourts ou laits fermentés à haute teneur en MS IIs permettent également de limiter le problème des fines.

## Exemple 9 : autres exemples de séchages doux et très doux, conformes à l'invention

Conformément à l'invention, la pulvérisation du lait fermenté ou yoghourt est préférentiellement réalisée dans des conditions douces, de sorte à préserver le maximum de bactéries ST et LB sous forme vivante ou viable.

Un dispositif de séchage doux conforme à l'invention peut par exemple comprend une tour de séchage, connectée à au moins un cyclone. Un tel dispositif répond généralement au schéma de la Figure 3 et au descriptif donné en exemple 3.

Le produit à sécher est amené en haut de la tour, jusqu'aux buses d'atomisation. De l'air chaud est amené lui aussi en haut de la tour. Le produit et l'air chaud descendent à co-courant dans l'enceinte de la tour, conduisant à un transfert d'eau du produit vers l'air.

L'air ainsi chargé en eau remonte le long des parois de l'enceinte, entraînant avec lui des particules de produit de très faibles diamètres, appelées fines. L'air ainsi chargé en eau et en fines est extrait en haut de la tour, et est dirigé vers la série de cyclones, qui séparent l'air des fines. L'air débarrassé des fines est extrait des cyclones, et est rejeté à l'extérieur. Les fines sont récupérées et réincorporées dans le produit au niveau de l'enceinte de séchage.

En bas de la tour, les granulés formés rencontrent un air de température moyenne qui a pour effet de constituer un lit fluidisé et de poursuivre le séchage. Les granulés sont ensuite extraits de la tour et cheminent sur un lit vibrant, au niveau duquel souffle de l'air (température proche de la température ambiante).

Dans ce type de dispositif, de l'air est apporté en au moins deux sites, à savoir à l'entrée de la tour (température élevée), en bas de tour (température moyenne). Si le dispositif est associé à un lit vibrant externe, de l'air peut être apporté au niveau de ce troisième site (température inférieure ou égale à la température de bas de tour, préférentiellement température proche de la température ambiante). L'air apporté à l'entrée de la tour doit être à une température suffisante pour permettre un transfert d'eau du produit vers l'air. Cet air est donc à une température élevée, généralement à une température inférieure ou égale à 210°C, par exemple de l'ordre de 190-210°C. La température de l'air en bas de la tour est avantageusement inférieure à la température de l'air à l'entrée de la tour, de sorte à conduire à un progressif refroidissement des granules en formation. Ce type de tour de séchage peut en outre être associé à un lit vibrant externe, pour recueillir les granules formés. De l'air peut être soufflé au niveau de ce lit vibrant externe ; cet air permet de terminer finement le séchage, et est à une température inférieure ou égale à celle de l'air en bas de tour. L'air soufflé au niveau du lit vibrant externe sera préférentiellement à une température proche de l'ambiante. De cette façon, les granules formés par contact avec de l'air à haute température au sein de la tour, sont progressivement amenés via le bas de la tour et le lit vibrant externe, jusqu'à une température proche de la température ambiante.

Conformément à un mode de réalisation de l'invention, la température de l'air à l'entrée de la tour est de l'ordre de 160-190°C, avantageusement de l'ordre de 170°C.

Conformément à un mode de réalisation de l'invention, la température de l'air en bas de la tour est avantageusement inférieure ou égale à 80°C, préférentiellement une température de 60-80°C, très préférentiellement de l'ordre de 70°C.

Conformément à un mode de réalisation de l'invention, la température de l'air au niveau du lit vibrant externe, auquel la tour de séchage peut être associée, est à une température de 25-40°C, préférentiellement de l'ordre de 30°C.

Un mode particulier de réalisation de l'invention permet un séchage très doux.

Conformément à ce mode particulier de réalisation de l'invention, la température de l'air à l'entrée de la tour est de l'ordre de 160-190°C, avantageusement de l'ordre de 170°C, et la température de l'air en bas de la tour est de l'ordre de 60-80°C, avantageusement de l'ordre de 70°C. Avantageusement, la température de l'air à l'entrée de la tour est de l'ordre de 170°C, et la température de l'air en bas de la tour est de l'ordre de 70°C.

Préférentiellement, conformément à ce mode particulier de réalisation de l'invention, la tour de séchage (plus particulièrement, la tour d'atomisation) est associée à un lit vibrant externe, au niveau duquel de l'air est soufflé à une température inférieure ou égale à la température de l'air en bas de tour. Très préférentiellement, l'air soufflé au niveau du lit vibrant externe est de 25-40°C, plus préférentiellement de l'ordre de 30°C.

Conformément à l'invention, la combinaison de la mise en oeuvre:

- d'une température d'air à l'entrée de la tour de l'ordre de 160-190°C, avantageusement de l'ordre de 170°C,
- d'une température d'air à la sortie de la tour de l'ordre de 60-80°C, avantageusement de l'ordre de 70°C, et
- d'un lit vibrant externe avec air soufflé à environ 25-40°C, avantageusement de l'ordre de 30°C,

résulte en un séchage triple effet, qui est très efficace (les granulés de poudre obtenus ont une MS de 97% environ), et qui est surtout très doux.

Ces méthodes de séchage doux et très doux conformes à l'invention peuvent être mises en oeuvre sur tout yaourt ou lait fermenté conforme à l'invention, et plus particulièrement sur les yaourts et laits fermentés à hautes teneurs en MS de l'invention (tels que ceux illustrés en exemple 8).

On obtient alors des granules de poudre de yoghourt ou lait fermenté, conformes à l'invention. Ces granules de poudres contiennent de hautes teneurs en ST et LB sous forme vivante ou viable (teneurs telles que décrites dans la présente demande, par exemple teneur en ST supérieure ou égale à $5.10^8$ ufc/g et teneur en LB supérieure ou égale à $1.10^4$ ufc/g), et répondent à l'appellation de yoghourt ou lait fermenté. Ces granules de poudre ont, de préférence, une Aw inférieure ou égale à 0,3, préférentiellement inférieure ou égale à 0,2.

Ces granules de poudre de yoghourt présentent l'avantage de pouvoir être conservés à une température de 20°C pendant au moins quatre mois, sans qu'une diminution des populations en S. thermophilus et L. bulgaricus vivants ou viables ne soit observée. En fait, dans de tels granules, la teneur en S. thermophilus et L. bulgaricus vivants ou viables (teneur totale) ne descend pas en-dessous de $5.10^8$ ufc/g après 6 mois de conservation à 20°C.

**Exemple 10: une poudre selon l'invention a des caractéristiques métabolites équivalentes, voire supérieures, à celles d'un yoghourt de référence obtenu à partir de doses d'inoculation en ST et LB inférieures à celles préconisées par l'invention**

Deux poudres selon l'invention ont été produites comme décrit en exemple 1 (inoculation à l'aide de concentrés congelés produits comme décrit en exemple 2 ; ,procédé de séchage de l'exemple 3).

La poudre 1 (produite comme décrit en exemple 1 - teneur MS classique) comprenait $8.10^9$ ufc de bactéries ST (CNCM I-2130) et LB (CNCM I-1518) sous forme vivante par gramme de poudre, et la poudre 2 (produite comme décrit en exemple 8 - haute teneur en MS) en contenait $2,6.10^9$ ufc/g.

En parallèle, des yoghourts ont été produits dans les mêmes conditions que les yoghourts qui ont été fabriqués pour produire la poudre 1, mais en utilisant des doses d'inoculation de ST et LB qui sont inférieures à celles préconisées par l'invention (cf. exemple 4 et Figure 4), à savoir une dose d'inoculation en ST de $1.10^7$ ufc/g et une dose d'inoculation en LB de $5.10^4$ ufc/g.

La fermentation de ce substrat laitier ensemencé à des doses inférieures à celles de l'invention a été menée jusqu'à obtenir un yoghourt qui présente des teneurs en ST et LB sous forme vivante de $5.10^8$ ufc/g pour ST et de $5.10^6$ ufc/g pour LB. De telles teneurs en ST et LB correspondent à la borne supérieure de ce qui est susceptible d'être obtenu en suivant l'approche de l'art antérieur.

Ces yoghourts sont ici dénommés « yoghourts de référence ».

Les caractéristiques métaboliques des poudres de l'invention ont été mesurées et comparées à celles des yoghourts de référence :

Activité beta-galactosidase :

L'activité beta-galactosidase a été mesurée par test enzymatique (T = 37°C, pH = 7,3 ; $A_{401nm}$ ; traversée optique = 1 cm ; détermination du taux spectrophotométrique en continu), comme décrit dans Craven, Steers et Anfinsen (Journal of Biological Chemistry, 1965, 240 :2468-2477), ou sur le site de SIGMA-CHIMIE (http://www.sigmaaldrich.com/sigma/enzyme%20assay/g2513enz.pdf).

Les résultats sont les suivants :

Tableau 3 :

| Activité beta-galactosidase | Yoghourt de référence (J+7) | Poudre 1 de l'invention | Poudre 2 de l'invention |
|---|---|---|---|
| Activité moyenne totale /g | 7,5 | 66,1 | 40,2 |
| Extrait sec constant : Activité moyenne totale/g | 52,5 | 66,1 | 40,2 |

Protéolyse :

Les mesures de teneurs en azote ont été réalisées :

- pour les protides, en mesurant la quantité totale d'azote et en multipliant cette teneur totale par 6,38 (méthode de Kjeldahl, norme NF EN ISO 8968-1, Mai 2002 - indice de classement V04-221-1),
- pour l'azote non protéique (c'est-à-dire les acides aminés), en mesurant le NPN (méthode de Kjeldahl, norme NF EN ISO 8968-4, Mai 2002 - indice de classement V04-221-4),
- pour l'azote non caséique, en suivant le protocole décrit dans la méthode de Kjeldahl, norme NF EN ISO 8968-2, Mai 2002 - indice de classement V04-221-2.

Les normes NF sont notamment disponibles auprès de l'AFNOR (Association Française de Normalisation ; 11, rue Francis de Pressensé 93571 La Plaine Saint-Denis Cedex ; France).

En sus des deux poudres selon l'invention et du yoghourt de référence, les mesures de protéolyse ont été menées sur le lait initial avant inoculation (mix laitier tel que décrit en exemple 1).

Les résultats sont les suivants :

Tableau 4 :

| | Lait | Yoghourt de référence (J+7) | Poudre 1 de l'invention | Poudre 2 de l'invention |
|---|---|---|---|---|
| Protides (N*6.38) | 3,45g/L | 3,79g / 100g | 36,55g / 100g | 35,92g / 100g |
| Azote non protéique sur Azote total | 2,5% (1) | 7,9% | 4,7% | 6,9% |
| Azote non caséique (ANC*6.38) | 20% | 10,7% | 8,9% | 9,2% |
| (1) Sans l'urée, qui n'est plus présent après fermentation | | | | |

Formiate :

La teneur en formiate a été mesurée comme décrit dans la méthode du MSDA. Le MSDA est le Manuel Suisse des Denrées Alimentaires (Edition 2001, traduction française 2002, révision 2004) ; il est disponible auprès de l'Office Fédéral de la Santé Publique de la Confédération suisse (http://www.bag.admin.chlindex.html?lang=en) ; voir plus particulièrement le Chapitre 61B « dosage enzymatiques » de ce MSDA, méthode 3.5 (ce chapitre est notamment accessible sur le site http://www.bag-anw.admin.ch/SLMB_Online_PDF/Data%20SLMB_MSDA/Version%20F/44_Agen ts%20conservateurs.pdf).
Les résultats sont les suivants :

Tableau 5 :

| | Yoghourt de référence | Poudre 1 de l'invention | Poudre 2 de l'invention |
|---|---|---|---|
| Acide formique (mg / 100g) | 56 | 127 | 138 |
| Extrait sec constant | 392 | 127 | 138 |

Folates (Vitamine B9) :

La teneur en folates a été mesurée comme décrit dans norme NF EN 14131 (février 2004 - indice de classement V03-137).
Les normes NF sont notamment disponibles auprès de l'AFNOR (Association Française de Normalisation ; 11, rue Francis de Pressensé 93571 La Plaine Saint-Denis Cedex ; France).
Les résultats sont les suivants :

Tableau 6 :

| | Yoghourt de référence | Poudre 1 de l'invention | Poudre 2 de l'invention |
|---|---|---|---|
| Folates dont acide folique libre (microgrammes/ 100g) | 12,95 | 187 | 185 |
| Extrait sec constant | 90,65 | 187 | 185 |

Commentaires:

On constate que les poudres selon l'invention présentent une activité beta-galactosidase et des teneurs en azote tout-à-fait comparables à celles du yoghourt de référence.
Les poudres selon l'invention contiennent du formiate, ce qui marque qu'il y a eu réel exercice d'une activité fermentaire par les ST et LB inoculés conformément à l'invention.
Dans les exemples de poudre selon l'invention ici présentés, les teneurs en formiate sont environ deux fois moins fortes que celles mesurées dans le yoghourt de référence. Le formiate est produit par le S. thermophilus, et est consommé par les L. bulgaricus. Or, dans les poudres de l'invention, le ratio ST/LB est plus favorable aux L. bulgaricus que dans les yoghourts de référence (environ 2 fois plus de L. bulgaricus). Dans les poudres de l'invention, il y a donc eu une plus forte consommation du formiate, ce qui explique le niveau plus faible retrouvé dans la poudre de yoghourt. Mais la présence de formiate indique bien une production de ce métabolite secondaire par S. thermophilus.
De manière particulièrement remarquable, les inventeurs ont constaté que les poudres selon l'invention présentent une teneur en folates (vitamine B9) nettement supérieure à celles de yoghourts de référence, à savoir une teneur environ deux fois supérieure.
Les caractéristiques métaboliques des poudres selon l'invention sont à tout le moins équivalentes à celles de yoghourts de référence.
On constate en outre que pour certains métabolites secondaires, tels que, par exemple, les folates (vitamine B9), les caractéristiques des poudres selon l'invention sont mêmes nettement supérieures à celles de yoghourts de référence.

**Exemple 11 : comparaison avec une « fausse » poudre de yoghourt, c'est-à-dire une poudre dans laquelle les bactéries ont été simplement apportées, sans exercice fermentaire (apport exogène de bactéries) :**

Une poudre selon l'invention a été produite comme décrit en exemple 8 (substrat laitier à haute teneur en MS comme décrit en exemple 8 ; inoculation à l'aide de concentrés congelés produits comme décrit en exemple 2 ; procédé de séchage de l'exemple 9). Cette poudre contenait $2,2.10^9$ ufc de symbiose yoghourt ST CNCM I-2130 et LB CNCM I-1519 par gramme de poudre.

En parallèle, une fausse poudre de yoghourt a été produite par simple addition des bactéries ST et LB dans une poudre de lait écrémé, sans que ces bactéries n'exercent d'activité fermentaire (simple apport exogène de bactéries). Cette fausse poudre a été produite de la manière suivante :

- ajout de ferment yoghourt concentrés lyophilisés DANISCO YO-MIX 495 LYO à de la poudre de lait écrémée, de sorte à ce que la concentration finale en symbiose yoghourt ST+LB soit d'environ $2,2.10^9$ ufc/g,
- homogénéisation par agitation.

Les résultats sont les suivants :

Tableau 7 :

|  | Poudre de l'invention | Fausse poudre (apport exogène de ST et LB) |
|---|---|---|
| Activité bétagalactosidase/g | 48 | 1,8 |

On constate que la poudre de l'invention présente une activité beta-galactosidase nettement supérieure à celle de la fausse poudre.

Des résultats comparables peuvent être obtenus avec une poudre de l'invention produite comme décrit en exemple 1, c'est-à-dire à partir d'un substrat laitier qui présente une valeur classique de teneur en MS.

**Exemple 12: comparaison de poudres selon l'invention avec des poudres du commerce**

Les capacités de conservation de la poudre selon l'invention ont été comparées à celles de poudres actuellement disponibles dans le commerce.

Trois types de poudres ont été comparés :

- la poudre M/A 5.4 Active commercialisée par Dr. Otto Süwelack (Joseph-Süwelack Strasse, D-48727 Billerbeck, Allemagne),
- les poudres EPI PY48 et EPI 905 (société EPI, Z.I. de l'Hermitage ; B.P. 108 ; F-44153 Ancenis Cedex ; France),
- des poudres selon l'invention, qui sont désignées :

  - Danone 1, Danone 2, Danone 3: il s'agit de poudres de l'invention, produites conformément à l'exemple 1, en inoculant un substrat laitier à teneur en MS classique à l'aide de concentrés congelés de ST et LB (produits comme décrit en exemple 2), le séchage du yoghourt étant conduit comme décrit en exemple 3, chacune des trois poudres Danone 1, Danone 2, Danone 3 ayant des teneurs différentes en ST+LB, et par
  - Danone 4 : il s'agit d'une poudre de l'invention, produite conformément à l'exemple 8, en inoculant un substrat laitier à haute teneur en MS à l'aide de concentrés congelés de ST et LB (produits comme décrit en exemple 2), le séchage du yoghourt étant conduit comme décrit en exemple 9.

Dans une première série de tests, la survie des ferments lactiques des poudres de yoghourts commerciales et des poudres selon l'invention a été évaluée dans différentes conditions de conservation : poudre seule ou incorporation dans un fourrage anhydre, température variant entre 5 et 35°C et temps compris entre 3 jours et plus de 6 mois.

Le fourrage alimentaire testé est composé de :

Tableau 8 :

| INGREDIENT | % mis en oeuvre dans le fourrage (% w/w) |
|---|---|
| Matière grasse végétale (coprah hydrogéné 32*) | 43,9% |
| Dextrose | 7,2% |
| Sucre glace | 37,2% |
| Lactosérum doux | 1,5% |
| Poudre de yoghourt selon l'invention | 10,2% |

(suite)

| INGREDIENT | % mis en oeuvre dans le fourrage (% w/w) |
|---|---|
| TOTAL | 100% |
| * Coprah hydro 32 = coprah totalement hydrogéné avec un point de fusion de 32°C | |

La mesure du % de LB et/ou ST vivants ou viables a été réalisée selon la méthode FIL officielle. la méthode de mesure des ferments dans le fourrage est strictement la même que les poudres (on prélève 5g dans les 2 cas et on la dilue dans un milieu, comme décrit en exemple 5 ci-dessous).

Les résultats sont illustrés par les tableaux 9 et 10 ci-dessous, et par les figures 5, 6 et 11.

Tableau 9:

| | Poudre Süwelack M/A 5.4 Active | Poudre EPI PY 48 | Poudre selon invention |
|---|---|---|---|
| Population initiale (ufc/g) $\pm$ écart-type | $2,9 \pm 0,7.10^7$ | $1,6 \pm 0,2.10^7$ | Danone 1 : $8,7 \pm 4.10^9$<br>Danone 2 : $3,7 \pm 1,8$ $10^9$<br>Danone 3 : $5,8 \pm 3,2$ $10^9$<br>Danone 4 : $1,8 \pm 0,3$ $10^9$ |
| Log(population) | 7,5 | 7,2 | Danone 1 : 9,9<br>Danone 2 : 9,6<br>Danone 3 : 9,8<br>Danone 4 : 9,25 |

Tableau 10:

| | Poudre Dr Süwelack M/A 5.4 Active | Poudre EPI PY 48 | Poudre selon invention |
|---|---|---|---|
| Population résiduelle à 4°C et 1 mois | $1,4. 10^7$ | $1,2 10^7$ | Danone 1 : $8,7 \pm 4 10^9$<br>Danone 2 : $3,7 \pm 1,8$ $10^9$<br>Danone 3 : $5,8 \pm 3,2$ $10^9$<br>Danone 4 : $1,6 \pm 0,8$ $10^9$ |
| % survie à 4°C et 1 mois | $47 \pm 7\%$ | $74 \pm 18\%$ | Danone 1 : 100%<br>Danone 2 : 100%<br>Danone 3 : 100%<br>Danone 4 : 90% |
| Population résiduelle à 4°C et 6 mois | $8,7.10^6$ | | Danone 1 : $1,5 \pm 0,1$ $10^{10}$<br>Danone 2 : $6,3 \pm 0,1$ $10^9$<br>Danone 3 : $4,5 \pm 0,7$ $10^9$ |
| % survie à 4°C et 6 mois | 30% | | Danone 1 : 100%<br>Danone 2 : 100%<br>Danone 3 : 100% |

(suite)

| | Poudre Dr Süwelack M/A 5.4 Active | Poudre EPI PY 48 | Poudre selon invention |
|---|---|---|---|
| Population résiduelle à 20°C et 1 mois | $8,7\ 10^6$ | | Danone 1 : $8,7 \pm 4\ 10^9$ <br> Danone 2 : $3,7 \pm 1,8$ $10^9$ <br> Danone 3 : $5,8 \pm 3,2$ $10^9$ <br> Danone 4 : $1,7 \pm 0,5$ $10^9$ |
| % survie à 20°C et 1 mois | $30 \pm 2\%$ | | Danone 1 : 100% <br> Danone 2 : 100% <br> Danone 3 : 100% <br> Danone 4 : 93% |
| Population résiduelle à 20°C et 6 mois | $2.10^5$ | | Danone 1 : $7 \pm 2\ 10^9$ <br> Danone 2 : $3,2.10^9$ <br> Danone 3 : $3,8.10^9$ |
| % survie à 20°C et 6 mois | 6% | | Danone 1 : 80% <br> Danone 2 : 94% <br> Danone 3 : 100% |
| Population résiduelle à 35°C et 2 semaines | $10^3$ | $4,4.10^3$ | Danone 1 : $2,5.10^9$ <br> Danone 2 : $2,1.10^9$ <br> Danone 3 : $1,4.10^9$ <br> Danone 4 : $7,1.10^8$ |
| % survie à 35°C et 2 semaines | 0,004% | 0,4% | Danone 1 : $29 \pm 8\%$ <br> Danone 2 : $58 \pm 4\%$ <br> Danone 3 : $24 \pm 5\%$ <br> Danone 4 : 40% |

On constate que, contrairement aux poudres du commerce, les poudres de l'invention présentent une excellente stabilité au stockage à température ambiante (T=20°C par exemple).

La figure 11 illustre clairement cette stabilité exceptionnelle.

Au bout de 4 mois de conservation à une température de 20°C, le taux de survie des bactéries ST+LB contenues dans les poudres de l'invention est au minimum de 80%, le plus généralement d'au moins 90%. Les bactéries ST présentent un taux de survie particulièrement élevé par rapport aux bactéries LB ; le taux de survie des ST est donc au moins égal, le plus généralement supérieur au taux de survie ST+LB. De fait, le taux de survie des ST au bout de 4 mois de conservation à une température de 20°C est d'au moins 90%, le plus généralement d'au moins 95%.

Au bout de 6 mois de conservation de la poudre à une température de 20°C, le taux de survie de la population S. thermophilus et L. bulgaricus contenue dans une poudre de l'invention est d'au moins 75%, le plus généralement d'au moins 85%. De fait, le taux de survie des ST au bout de 6 mois de conservation à une température de 20°C est d'au moins 85%, le plus généralement d'au moins 90%.

### Exemple 13: comparaison d'une poudre selon l'invention avec des poudres du commerce

A la suite des tests décrits en exemple 12, ont été comparées les évolutions cinétiques des populations de ferments des trois types de poudre décrits en exemple 12, à savoir:

- la poudre poudre M/A 5.4 Active commercialisée par Dr. Otto Süwelack (Joseph-Süwelack Strasse, D-48727 Billerbeck, Allemagne),
- les poudres EPI PY48 et EPI 905 (société EPI, Z.I. de l'Hermitage ; B.P. 108 ; F-44153 Ancenis Cedex ; France),
- des poudres selon l'invention, qui sont désignées Danone 1, Danone 2, Danone 3 (trois teneurs différentes en ST+LB).

Les poudres selon l'invention ont été produites comme décrit en exemple 1 ci-dessus. Les capacités de conservation de ces poudres ont été comparées comme décrit en exemple 12 ci-dessus (% de survie), soit sous forme de « poudre nue », soit sous forme de fourrage anhydre.

Les fourrages ont la même composition que ceux décrits en exemple 12 fourrage sans eau.

Les valeurs de conservation « poudre nue » et « fourrage » ont été regroupées, en tenant compte de la dilution exercée au sein de la formule fourrage.

## 1. Comparaison de l'évolution cinétique des populations de ferments :

Les populations de Streptococcus thermophilus et Lactobacillus bulgaricus ont été mesurées en fonction du temps et de la température de conservation.

La poudre de yoghourt pure, ou le cas échéant, le fourrage anhydre, est analysée à l'aide de la méthode officielle FIL (cf. exemple 5 ci-dessous).

L'évolution des populations est ensuite représentée en fonction du temps, et ajustée (à l'aide d'un solveur Excel®) par un modèle cinétique d'ordre 2, tel que décrit par l'équation (2) :

$$C(t) = \frac{C_0}{1 + k \cdot C_0 \cdot t} \qquad (2)$$

où $C(t)$ est la population en ferments à l'instant t ($g^{-1}$), $C_0$ est la population initiale ($g^{-1}$) en ferments, k la constante de vitesse ($g.jour^{-1}$) et t le temps (jour).

Cet ajustement peut être réalisé à la fois sur la population totale (St+Lb), ou sur les populations correspondantes. Cependant, dans la mesure où les poudres du commerce ont une très faible teneur en *Lactobacillus,* seule l'analyse sur la flore totale a permis une comparaison objective de toutes les poudres. Le tableau 11 suivant montre les résultats obtenus.

Dans ce tableau 11, $<C_0>$ et <k> indiquent les valeurs moyennes des populations initiales et constantes de vitesse respectivement trouvées par l'ajustement de différentes séries de données.

Dans le tableau 11 ci-dessous, la notation < > signifie une valeur moyenne de plusieurs mesures.

Tableau 11:

| Poudre | T(°C) | <Co> ± ecart-type | Log(Co) | <k> ± écart-type | Produit k.co |
|---|---|---|---|---|---|
| Dr Süw. M/A 5.4 | 5 | | | $2,7 \pm 1,5 \ 10^{-10}$ | $9,6 \ 10^{-3}$ |
| Dr Süw. M/A 5.4 | 20 | $2,9 \pm 0,7 \ 10^{7}$ | 7,5 | $1,4 \pm 0,6 \ 10^{-9}$ | $4,9 \ 10^{-2}$ |
| Dr Süw. M/A 5.4 | 35 | | | $4,4 \pm 4 \ 10^{-6}$ | $1,6 \ 10^{2}$ |
| EPI PY48 | 5 | $1,6 \pm 0,2 \ 10^{7}$ | 7,2 | $5,7 \pm 0,6 \ 10^{-10}$ | $9,0 10^{-3}$ |
| Danone 1 | 5 | | | - | |
| Danone 1 | 20 | | | - | |
| Danone 1 | 30 | | | $7,2 \ 10^{-12}$ | $6,2 \ 10^{-2}$ |
| Danone 1 | 35 | $8,7 \pm 4 \ 10^{9}$ | 9,9 | $1,2 \ 10^{-11}$ | $1,1 \ 10^{-1}$ |
| Danone 1 | 40 | | | $4,0.10^{-11}$ | 0,35 |
| Danone 1 | 45 | | | $7,8.10^{-11}$ | 0,68 |
| Danone 1 | 50 | | | $1,0.10^{-11}$ | 87 |
| Danone 2 | 5 | | | - | |
| Danone 2 | 20 | $3,7 \pm 1,9 \ 10^{9}$ | 9,6 | - | |
| Danone 2 | 30 | | | $1,0 \ 10^{-12}$ | $3,7 \ 10^{-3}$ |
| Danone 2 | 35 | | | $1,1.10^{-11}$ | $4,2 \ 10^{-2}$ |

(suite)

| Poudre | T(°C) | <Co> $\pm$ ecart-type | Log(Co) | <k> $\pm$ écart-type | Produit k.co |
|---|---|---|---|---|---|
| Danone 3 | 5 | | | - | |
| Danone 3 | 20 | $5,8 \pm 3 \cdot 10^9$ | 9,9 | - | |
| Danone 3 | 30 | | | $9,5 \cdot 10^{-12}$ | $5,5 \cdot 10^{-12}$ |
| Danone 3 | 35 | | | $3,1 \cdot 10^{-11}$ | $1,8 \cdot 10^{-1}$ |

Les populations initiales ont déjà été montrées dans la figure 5 et discutées en exemple 12. Les constantes de vitesse reflètent la vitesse de disparition des germes vivants ou viables, donc la cinétique de mortalité. Le facteur dictant cette cinétique est le produit $kxCo$, qui est multiplicatif du temps dans l'équation (2). La figure 7 montre l'évolution de ce produit en fonction de la température de stockage et pour différentes poudres commerciales et selon l'invention. On retrouve sur la figure 7 que les stabilités des poudres selon l'invention sont bien supérieures à celles des poudres de l'art antérieur. En particulier, la stabilité à 35°C des poudres selon l'invention est (quasiment) comparable à celles des poudres de l'art antérieur entre 5°C et 20°C, donc dans des conditions de conservations jugées optimales pour l'homme de l'art.

Plus précisément, la vitesse de mortalité augmente avec la température de manière quasi exponentielle, jusqu'à une température critique où la mortalité augmente de manière beaucoup plus importante. Avec les poudres selon l'invention, cette température critique est comprise entre 45°C et 50°C, et est donc plus élevée de celles de poudres disponibles sur le marché, comme celles du fournisseur Dr Süwelack (température critique entre 30°C et 35°C).

Les poudres selon l'invention montrent donc à la fois une bonne stabilité dans le temps à température ambiante mais également une bonne stabilité thermique, qui les rendent aptes à l'utilisation dans des produits alimentaires dans des conditions de stockage à température ambiante, ou proches de la température ambiante.

De fait, les résultats obtenus sur une poudre seule sont suffisamment comparables à ceux obtenus sur cette même poudre incorporée dans le fourrage ; c'est pourquoi les deux types de résultats sont, lorsqu'ils sont disponibles, présentés en un seul et même groupe de résultat.

Ces résultats apportent deux commentaires :

**• On constate une forte différence dans les populations initiales de ferments :**

Les concentrations mesurées dans les poudres du commerce sont au moins 100 fois plus faibles que celles mesurées dans une poudre selon l'invention dans les mêmes conditions. La figure 5 illustre les différences de population initiale en ferments (dans cette figure, DANONE 1, DANONE 2 et DANONE 3 sont des poudres de la présente invention, tandis que « Dr. Süwelack », « EPI PY48 » sont des poudres de l'art antérieur).

**• Les constantes de vitesse sont également très différentes :**

Avec les poudres de l'art antérieur, la décroissance des populations de ferments est détectable à l'échelle du mois pour des températures de 5°C à 20°C. A 35°C, pour les poudres M/A 5.4 Active de Dr Süwelack, on observe une décroissance quasi-totale des ferments en 2 semaines.

La figure 6 illustre ce point en montrant l'évolution des populations à 20°C dans les 3 poudres selon l'invention. Les barres d'erreur correspondent à l'incertitude de la mesure qui est de 0,3 log. Une situation similaire est observable à 5°C.

A 30°C et 35°C, une légère décroissance des populations contenues dans la poudre selon l'invention est mesurable à l'échelle de la semaine. Les valeurs de constante de vitesse restent néanmoins largement inférieures à celles observées pour les poudres de l'art antérieur, ce qui montre la stabilité très supérieure des ferments dans les poudres générées par l'invention.

Ces résultats sont illustrés par la figure 7. En figure 7, DANONE 1, DANONE 2 et DANONE 3 sont des poudres selon l'invention, tandis que « Suwelack » et « EPI » sont des poudres de l'art antérieur.

La différence de stabilité thermique des flores lactiques peut être quantifiée en considérant le produit de la constante de vitesse k et de la population initiale Co (tableau 11) : en effet, dans le modèle cinétique, le temps est multiplié par le produit $kxC_o$, qui reflète donc bien la vitesse avec laquelle la flore meurt au cours du temps du stockage. La figure 7 montre l'évolution du produit $kxC_o$ en fonction de la température de stockage pour les différentes poudres : on observe en particulier que la vitesse de mortalité des ferments dans les poudres Danone à 35°C est quasiment équivalente à celle des poudres commerciales à 5°C (pourtant considérées comme d'excellentes conditions de conservation par l'homme de l'art).

On voit qu'à une température équivalente, les poudres selon l'invention présentent une conservation nettement meilleure que celle des poudres de l'art antérieur.

Les figures 8A et 8B présentent l'évolution de la population "normalisée" (c'est-à-dire le rapport entre la population à un instant t sur la population initale) en ferments lactiques au cours du temps pour des poudres de l'invention, et pour des poudres selon l'invention. L'échelle de temps correspond aux données des poudres du Dr. Süwelack de l'art antérieur (carrés rouges), ainsi que l'ajustement selon le modèle d'ordre 2 (ligne continue épaisse).

Pour toutes les autres séries de points, les données ont été translatées sur l'échelle de temps des données de l'art antérieur à l'aide d'un facteur multiplicatif : par exemple, quand la température augmente, la flore lactique décroît plus rapidement, ce qui peut être compensé graphiquement par l'utilisation d'un facteur multiplicatif supérieur à 1 (exemple, si la population décroît 2 fois plus vite, le facteur "a" vaut 2). Ce facteur multiplicatif est corrélé au produit kxCo montré sur la figure 7. Les données ainsi superposées forment des "courbes maîtresses". On voit ainsi que, quelle que soit la vitesse de décroissance des populations, toutes les séries de données suivent la même évolution cinétique d'ordre 2.

## Revendications

1. Procédé de production d'une poudre de lait fermenté ou de yoghourt, permettant d'obtenir une poudre à haute densité en ferments lactiques Streptococcus thermophilus et Lactobacillus bulgaricus, sans avoir à ajouter de bactéries lactiques S. thermophilus et L. bulgaricus autres que celles ayant participé à la fermentation lactique, ladite poudre présentant en outre de très bonnes propriétés de conservation des ferments Streptococcus thermophilus et Lactobacillus bulgaricus qu'elle contient,
**caractérisé en ce que** le procédé comprend :

   - l'ensemencement d'un substrat laitier, qui a éventuellement subi un traitement thermique au moins équivalent à la pasteurisation, par inoculation d'au moins une souche de Streptococcus thermophilus à une concentration d'au moins $5.10^8$ ufc/g, et d'au moins une souche de Lactobacillus bulgaricus à une concentration d'au moins $1.10^6$ ufc/g, pour obtenir un substrat laitier ensemencé,
   - la fermentation lactique du substrat laitier ainsi ensemencé, de sorte à produire un lait fermenté ou un yoghourt,
   - la pulvérisation du lait fermenté ou yoghourt ainsi produit, en veillant à ce que la(les) valeur(s) de température(s) appliquée(s) lors de la pulvérisation soient suffisamment favorables à la survie desdites souches de S. thermophilus et L. bulgaricus pour que la poudre obtenue contienne ladite au moins une souche de S. thermophilus et ladite au moins une souche de L. bulgaricus, sous forme vivante ou viable, à une concentration d'au moins $5.10^8$ ufc/g et d'au moins $1.10^4$ ufc/g, respectivement, et le séchage des granules de poudre sur lit vibrant, à une température de 25°C à 40°C, préférentiellement de 30°C, jusqu'à obtenir une poudre de lait fermenté ou yoghourt qui présente une Aw (activité de l'eau) inférieure ou égale à 0,25.

2. Procédé selon la revendication 1, **caractérisé en ce que** ladite au moins une souche de S. thermophilus est inoculée dans le substrat laitier à une concentration d'au moins $1.10^9$ ufc/g, préférentiellement d'au moins $2.10^9$ ufc/g, plus préférentiellement de plus de $2,7.10^9$ ufc/g, et **en ce que** ladite au moins une souche de L. bulgaricus est inoculée dans le substrat laitier à une concentration d'au moins $1.10^7$ ufc/g, préférentiellement d'au moins $1,4.10^7$ ufc/g.

3. Procédé selon l'une quelconque des revendications précédentes, **caractérisé en ce que** ladite poudre de lait fermenté ou yoghourt obtenue comprend ladite au moins une souche de S. thermophilus sous forme vivante ou viable, à une concentration d'au moins $1.10^9$ ufc/g, et **en ce que** ladite poudre de lait fermenté ou yoghourt obtenue comprend ladite au moins une souche de L. bulgaricus sous forme vivante ou viable, à une concentration d'au moins $2.10^4$ ufc/g, préférentiellement au moins $3.10^4$ ufc/g, plus préférentiellement au moins $4.10^4$, plus préférentiellement au moins $8.10^4$ ufc/g, très préférentiellement au moins $1.10^5$ ufc/g, encore plus préférentiellement au moins $3.10^5$ ufc/g.

4. Procédé selon l'une quelconque des revendications 1-3, **caractérisé en ce que** ladite pulvérisation du lait fermenté ou yoghourt comprend le séchage et la granulation du lait fermenté ou yoghourt par atomisation.

5. Procédé selon l'une quelconque des revendications 1-3, **caractérisé en ce que** ladite pulvérisation du lait fermenté ou yoghourt comprend la lyophilisation du lait fermenté ou yoghourt, et la granulation du gâteau de lyophilisation.

6. Procédé selon l'une quelconque des revendications 4-5, **caractérisé en ce qu'**en sus desdits séchage et granulation par atomisation, ou, le cas échéant, en sus dudit séchage par lyophilisation et de ladite granulation du gâteau obtenu, ladite pulvérisation comprend au moins un séchage complémentaire.

7. Procédé selon la revendication 6, **caractérisé en ce que** ledit au moins un séchage complémentaire est un séchage sur lit fluidisé, réalisé avec un flux gazeux dont la température est inférieure à 80°C.

8. Procédé selon l'une quelconque des revendications 6-7, **caractérisé en ce que** ledit au moins un séchage complémentaire est réalisé après granulation, et à une température de 25°C à 80°C.

9. Procédé selon l'une quelconque des revendications 6-8, **caractérisé en ce que** ladite pulvérisation du lait fermenté ou yoghourt comprend le séchage et la granulation du lait fermenté ou yoghourt par atomisation, et au moins un séchage complémentaire sur lit fluidisé, et ledit séchage sur lit vibrant.

10. Procédé selon l'une quelconque des revendications précédentes, **caractérisé en ce que** ladite Aw est inférieure ou égale à 0,2, préférentiellement de 0,09 à 0,19.

11. Procédé selon l'une quelconque des revendications précédentes, **caractérisé en ce que** ladite au moins une souche de S. thermophilus est une souche de S. thermophilus dite de type cassante, qui ne produit pas d'exopolysaccharides (EPS), ou qui n'en produit qu'à des teneurs tellement faibles qu'un milieu pour lait fermenté modèle composé de 120 grammes de poudre de lait écrémé, 1 gramme de peptide N3, et eau permutée QSP 1L, après culture de cette souche à une température de 40°C jusqu'à un pH de 4,7, présente une viscosité de Casson à 4°C qui est inférieure ou égale à 500 mPa.s, préférentiellement inférieure ou égale à 400 mPa.s.

12. Procédé selon l'une quelconque des revendications précédentes, **caractérisé en ce que** ladite au moins une souche de S. thermophilus est la souche de S. thermophilus disponible auprès de la C.N.C.M. sous le numéro de dépôt I-2130.

13. Procédé selon l'une quelconque des revendications précédentes, **caractérisé en ce que** lors de l'ensemencement desdites souches de S. thermophilus et L. bulgaricus, ledit substrat laitier présente une teneur en matières sèches de 25 à 60%, préférentiellement de 28 à 55%, plus préférentiellement de 38 à 45%.

14. Produit intermédiaire susceptible d'être produit au cours de la mise en oeuvre du procédé selon l'une quelconque des revendications 1 à 13, **caractérisé en ce qu'**il est constitué d'un lait fermenté ou yoghourt qui contient au moins une souche de S. thermophilus à une concentration d'au moins $5.10^8$ ufc/g, sous forme vivante ou viable, et au moins une souche de L. bulgaricus à une concentration d'au moins $1.10^7$ ufc/g, sous forme vivante ou viable, et **en ce que** ladite au moins une souche de L. bulgaricus est contenue dans un rapport de 1 ufc pour 40 à 60 ufc de ladite souche de S. thermophilus.

15. Produit intermédiaire susceptible d'être produit au cours de la mise en oeuvre du procédé selon la revendication 13, **caractérisé en ce qu'**il est constitué :

    - de substrat laitier ensemencé par au moins une souche de S. thermophilus à une concentration d'au moins $5.10^8$ ufc/g, et par au moins une souche de L. bulgaricus à une concentration d'au moins $1.10^6$ ufc/g, de sorte à être apte à produire par fermentation lactique un produit répondant à l'appellation de lait fermenté ou yoghourt, destiné à l'alimentation humaine, ou
    - d'un lait fermenté ou yoghourt qui contient au moins une souche de S. thermophilus à une concentration d'au moins $5.10^8$ ufc/g, sous forme vivante ou viable, et au moins une souche de L. bulgaricus à une concentration d'au moins $1.10^7$ ufc/g, sous forme vivante ou viable, et

    **en ce que** ledit substrat laitier ensemencé, ou, le cas échéant, ledit lait fermenté ou yoghourt, présente une teneur en matières sèches de 25 à 60%, préférentiellement de 28 à 55%, plus préférentiellement de 38 à 45%.

16. Procédé de production de lait fermenté ou de yoghourt contenant S. thermophilus à une concentration d'au moins $5.10^8$ ufc/g et L. bulgaricus à une concentration d'au moins $1.10^7$ ufc/g, qui comprend :

    - l'ensemencement d'un substrat laitier, qui a éventuellement subi un traitement thermique au moins équivalent à la pasteurisation, par inoculation d'au moins une souche de Streptococcus thermophilus, et d'au moins une souche de Lactobacillus bulgaricus, pour obtenir un substrat laitier ensemencé,
    - la fermentation lactique du substrat laitier ainsi ensemencé, de sorte à produire un lait fermenté ou un yoghourt contenant lesdites souches de Streptococcus thermophilus et de Lactobacillus bulgaricus sous forme vivante ou viable, **caractérisé en ce que** ladite au moins une souche de Streptococcus thermophilus est inoculée à une concentration d'au moins $5.10^8$ ufc/g, et **en ce que** ladite au moins une souche de Lactobacillus bulgaricus est inoculée à une concentration d'au moins $1.10^6$ ufc/g.

17. Poudre de lait fermenté ou de yoghourt, susceptible d'être obtenue par le procédé selon l'une quelconque des revendications 1 à 13, **caractérisée en ce qu'**elle contient au moins une souche de S. thermophilus sous forme vivante ou viable à une concentration d'au moins $5.10^8$ ufc/g, préférentiellement à une concentration d'au moins $1.10^9$ ufc/g, encore plus préférentiellement d'au moins $2.10^9$ ufc/g, et au moins une souche de L. bulgaricus sous forme vivante ou viable à une concentration d'au moins $1.10^4$ ufc/g, préférentiellement à une concentration d'au moins $2.10^4$ ufc/g, encore plus préférentiellement d'au moins $3.10^4$ ufc/g, et ce qu'elle présente une Aw (activité de l'eau) inférieure ou égale à 0,25.

18. Poudre de lait fermenté ou de yoghourt selon la revendication 17, **caractérisée en ce que** ladite au moins une souche de S. thermophilus est une souche de S. thermophilus dite de type cassante, qui ne produit pas d'exopolysaccharides (EPS), ou qui n'en produit qu'à des teneurs tellement faibles qu'un milieu pour lait fermenté modèle composé de 120 grammes de poudre de lait écrémé, 1 gramme de peptide N3, et eau permutée QSP 1L, après culture de cette souche à une température de 40°C jusqu'à un pH de 4,7, présente une viscosité de Casson à 4°C qui est inférieure ou égale à 500 mPa.s, préférentiellement inférieure ou égale à 400 mPa.s.

19. Poudre de lait fermenté ou de yoghourt selon la revendication 17 ou 18, **caractérisée en ce qu'**elle présente une Aw (activité de l'eau) inférieure ou égale à 0,2, de préférence de 0,09 à 0,19.

20. Fourrage alimentaire, **caractérisé en ce qu'**il contient une poudre selon l'une quelconque des revendications 17 à 19, ladite poudre étant à l'état dispersé et la teneur en eau dudit fourrage alimentaire étant inférieure à 3%, mais non totalement nulle.

21. Biscuit, **caractérisé en ce qu'**il contient une poudre selon l'une quelconque des revendications 17 à 19 dans un fourrage, ladite poudre étant à l'état dispersé et la teneur en eau dudit fourrage étant inférieure à 3%, mais non totalement nulle.

22. Utilisation d'une poudre selon l'une quelconque des revendications 17 à 19 pour la préparation d'un produit alimentaire.

23. Utilisation selon la revendication 22, **caractérisée en ce que** ledit produit alimentaire est un fourrage alimentaire, ou un biscuit comprenant ladite poudre dans un fourrage.

**Patentansprüche**

1. Verfahren zur Herstellung eines Pulvers aus fermentierter Milch oder Joghurt, das Erhalten eines Pulvers mit hoher Dichte an Streptococcus thermophilus- und Lactobacillus bulgaricus-Milchsäurefermenten ermöglicht, ohne dass S. thermophilus- und L. bulgaricus-Milchsäurebakterien außer denen, die an der Milchsäurefermentation teilgenommen haben, zugegeben werden müssen, wobei das Pulver außerdem sehr gute Lagerungseigenschaften der Streptococcus thermophilus- und Lactobacillus bulgaricus-Fermente aufweist, die es enthält, **dadurch gekennzeichnet, dass** das Verfahren umfasst:

    - Animpfen eines Milchsubstrats, das gegebenenfalls eine thermische Behandlung mindestens gleichwertig zur Pasteurisierung durchlaufen hat, durch Animpfen von mindestens einem Stamm von Streptococcus thermophilus bei einer Konzentration von mindestens $5.10^8$ KBE/g, und mindestens einem Stamm von Lactobacillus bulgaricus bei einer Konzentration von mindestens $1.10^6$ KBE/g, um ein angeimpftes Milchsubstrat zu erhalten,
    - Milchsäurefermentation des so angeimpften Milchsubstrats, um eine fermentierte Milch oder ein Joghurt herzustellen,
    - Pulverisierung der so hergestellten fermentierten Milch oder des Joghurts, wobei dafür gesorgt wird, dass die Höhe(n) der angewendeten Temperatur(en) während der Pulverisierung ausreichend geeignet für das Überleben der Stämme von Streptococcus thermophilus und Lactobacillus bulgaricus sind, damit das erhaltene Pulver diesen mindestens einen Stamm von S. thermophilus und diesen mindestens einen Stamm von L. bulgaricus in einer lebenden oder lebensfähigen Form in einer Konzentration von mindestens $5.10^8$ KBE/g beziehungsweise mindestens $1.10^4$ KBE/g enthält, und Trocknung der Pulverkörnchen auf einem Vibrationsbett bei einer Temperatur von 25°C bis 40°C, bevorzugt von 30°C, bis zum Erhalten eines Pulvers aus fermentierter Milch oder Joghurt, das eine Aw (Wasseraktivität) geringer als oder gleich 0,25 aufweist.

2. Verfahren nach Anspruch 1, **dadurch gekennzeichnet, dass** der mindestens eine Stamm von S. thermophilus im Milchsubstrat in einer Konzentration von mindestens $1.10^9$ KBE/g, bevorzugt von mindestens $2.10^9$ KBE/g, stärker bevorzugt von mehr als $2,7.10^9$ KBE/g angeimpft wird, und dadurch, dass der mindestens eine Stamm von L. bulgaricus im Milchsubstrat in einer Konzentration von mindestens $1.10^7$ KBE/g, bevorzugt von mindestens $1,4.10^7$ KBE/g angeimpft wird.

3. Verfahren nach einem beliebigen der voranstehenden Ansprüche, **dadurch gekennzeichnet, dass** das erhaltene Pulver aus fermentierter Mich oder Joghurt den mindestens einen Stamm von S. thermophilus in einer lebenden oder lebensfähigen Form in einer Konzentration von mindestens $1.10^9$ KBE/g umfasst, und dadurch, dass das erhaltene Pulver aus fermentierter Mich oder Joghurt den mindestens einen Stamm von L. bulgaricus in einer lebenden oder lebensfähigen Form in einer Konzentration von mindestens $2.10^4$ KBE/g umfasst, bevorzugt mindestens $3.10^4$ KBE/g, stärker bevorzugt mindestens $4.10^4$, stärker bevorzugt mindestens $8.10^4$ KBE/g, sehr bevorzugt mindestens $1.10^5$ KBE/g, noch stärker bevorzugt mindestens $3.10^5$ KBE/g.

4. Verfahren nach einem beliebigen der Ansprüche 1-3, **dadurch gekennzeichnet, dass** die Pulverisierung der fermentierten Milch oder des Joghurts die Trocknung und die Granulierung der fermentierten Milch oder des Joghurts durch Sprühtrocknung umfasst.

5. Verfahren nach einem beliebigen der Ansprüche 1-3, **dadurch gekennzeichnet, dass** die Pulverisierung der fermentierten Milch oder des Joghurts die Lyophilisierung der fermentierten Milch oder des Joghurts, und die Granulierung des Lyophilisationskuchens umfasst.

6. Verfahren nach einem beliebigen der Ansprüche 4-5, **dadurch gekennzeichnet, dass** zusätzlich zur Trocknung und Granulierung durch Sprühtrocknung, oder, wenn nötig, zusätzlich zur Trocknung durch Lyphilisierung und der Granulierung des erhaltenen Kuchens, die Pulverisierung mindestens eine zusätzliche Trocknung umfasst.

7. Verfahren nach Anspruch 6, **dadurch gekennzeichnet, dass** die mindestens eine zusätzliche Trocknung eine Trocknung auf einem Wirbelbett ist, durchgeführt mit einem Gasfluss, dessen Temperatur geringer als 80°C ist.

8. Verfahren nach einem beliebigen der Ansprüche 6-7, **dadurch gekennzeichnet, dass** die mindestens eine zusätzliche Trocknung nach der Granulierung und bei einer Temperatur von 25°C bis 80°C durchgeführt wird.

9. Verfahren nach einem beliebigen der Ansprüche 6-8, **dadurch gekennzeichnet, dass** die Pulverisierung der fermentierten Milch oder des Joghurts die Trocknung und die Granulierung der fermentierten Milch oder des Joghurts durch Sprühtrocknung, und mindestens eine zusätzliche Trocknung auf einem Wirbelbett, und die Trocknung auf einem Vibrationsbett umfasst.

10. Verfahren nach einem beliebigen der voranstehenden Ansprüche, **dadurch gekennzeichnet, dass** der Aw geringer oder gleich 0,2 beträgt, bevorzugt von 0,09 bis 0,19.

11. Verfahren nach einem beliebigen der voranstehenden Ansprüche, **dadurch gekennzeichnet, dass** mindestens ein Stamm von S. thermophilus ein Stamm von S. thermophilus vom sogenannten spröden Typ ist, der keine Exopolysaccharide (EPS) herstellt, oder der davon nur solch geringe Gehalte herstellt, dass ein Standardmedium für fermentierte Milch, das aus 120 Gramm entrahmtem Milchpulver, 1 Gramm N3-Peptid und permutiertem Wasser qs für 1L zusammengesetzt ist, nach Kultur dieses Stammes bei einer Temperatur von 40°C bis zu einem pH von 4,7, eine Casson-Viskosität bei 4°C aufweist, die geringer oder gleich 500 mPa.s ist, bevorzugt geringer oder gleich 400 mPa.s.

12. Verfahren nach einem beliebigen der voranstehenden Ansprüche, **dadurch gekennzeichnet, dass** der mindestens eine Stamm von S. thermophilus der Stamm von S. thermophilus ist, der beim C.N.C.M. unter der Hinterlegungsnummer I-2130 hinterlegt ist.

13. Verfahren nach einem beliebigen der voranstehenden Ansprüche, **dadurch gekennzeichnet, dass** während des Animpfens der Stämme von S. thermophilus und L. bulgaricus das Milchsubstrat einen Gehalt an Trockenmasse von 25 bis 60%, bevorzugt von 28 bis 55%, stärker bevorzugt von 38 bis 45% aufweist.

14. Intermediat, das im Verlauf der Ausführung des Verfahrens gemäß einem beliebigen der Ansprüche 1 bis 13 hergestellt werden kann, **dadurch gekennzeichnet, dass** es aus einer fermentierten Milch oder einem Joghurt besteht, die/das mindestens einen Stamm von S. thermophilus in einer Konzentration von mindestens $5.10^8$ KBE/g in einer lebenden oder lebensfähigen Form, und einen Stamm von L. bulgaricus in einer Konzentration von mindestens $1.10^7$ KBE/g in einer lebenden oder lebensfähigen Form enthält, und dadurch, dass der mindestens eine Stamm von L. bulgaricus in einem Verhältnis von 1 KBE pro 40 bis 60 KBE des Stammes von S. thermophilus enthalten ist.

15. Intermediat, das im Verlauf der Ausführung des Verfahrens nach Anspruch 13 hergestellt werden kann, **dadurch gekennzeichnet, dass** es besteht:

    - aus Milchsubstrat, das durch mindestens einen Stamm von S. thermophilus bei einer Konzentration von mindestens $5.10^8$ KBE/g, und durch mindestens einen Stamm von L. bulgaricus bei einer Konzentration von mindestens $1.10^6$ KBE/g angeimpft ist, so dass es fähig ist, durch Milchsäurefermentation ein Produkt herzustellen, das dem Begriff von fermentierter Milch oder Joghurt entspricht, die/das für menschliche Ernährung bestimmt ist, oder
    - aus einer fermentierten Milch oder einem Joghurt, das mindestens einen Stamm von S. thermophilus in einer Konzentration von mindestens $5.10^8$ KBE/g in einer lebenden oder lebensfähigen Form, und mindestens einen Stamm von L. bulgaricus in einer Konzentration von mindestens $1.10^7$ KBE/g in einer lebenden oder lebensfähigen Form enthält, und

dadurch, dass das angeimpfte Milchsubstrat, oder, wenn nötig, die fermentierte Milch oder das Joghurt, einen Gehalt an Trockenmasse von 25 bis 60%, bevorzugt von 28 bis 55%, stärker bevorzugt von 38 bis 45% aufweist.

16. Verfahren zur Herstellung von fermentierter Milch oder Joghurt, die/das S. thermophilus in einer Konzentration von mindestens $5.10^8$ KBE/g und L. bulgaricus in einer Konzentration von mindestens $1.10^7$ KBE/g enthält, das umfasst:

    - das Animpfen eines Milchsubstrats, das gegebenenfalls eine thermische Behandlung mindestens gleichwertig zur Pasteurisierung durchlaufen hat, durch Animpfen von mindestens einem Stamm von Streptococcus thermophilus und mindestens einem Stamm von Lactobacillus bulgaricus, um ein angeimpftes Milchsubstrat zu erhalten,
    - die Milchsäurefermentation des so angeimpften Milchsubstrats, um eine fermentierte Milch oder ein Joghurt herzustellen, die/das die Stämme von Streptococcus thermophilus und Lactobacillus bulgaricus in einer lebenden oder lebensfähigen Form enthält,

**dadurch gekennzeichnet, dass** der mindestens eine Stamm von Streptococcus thermophilus in einer Konzentration von mindestens $5.10^8$ KBE/g angeimpft wird, und der mindestens eine Stamm von Lactobacillus bulgaricus in einer Konzentration von mindestens $1.10^6$ KBE/g angeimpft wird.

17. Pulver aus fermentierter Milch oder Joghurt, das durch das Verfahren gemäß einem beliebigen der Ansprüche 1 bis 13 hergestellt werden kann, **dadurch gekennzeichnet, dass** es mindestens einen Stamm von S. thermophilus in einer lebenden oder lebensfähigen Form in einer Konzentration von mindestens $5.10^8$ KBE/g, bevorzugt in einer Konzentration von mindestens $1.10^9$ KBE/g, noch stärker bevorzugt von mindestens $2.10^9$ KBE/g, und mindestens ein Stamm von L. bulgaricus in einer lebenden oder lebensfähigen Form in einer Konzentration von mindestens $1.10^4$ KBE/g, bevorzugt in einer Konzentration von mindestens $2.10^4$ KBE/g, noch stärker bevorzugt von mindestens $3.10^4$ KBE/g enthält, und dadurch, dass es eine Aw (Wasseraktivität) geringer als oder gleich 0,25 aufweist.

18. Pulver aus fermentierter Milch oder Joghurt nach Anspruch 17, **dadurch gekennzeichnet, dass** mindestens ein Stamm von S. thermophilus ein Stamm von S. thermophilus vom sogenannten spröden Typ ist, der keine Exopolysaccharide (EPS) herstellt, oder der davon nur solch geringe Gehalte herstellt, dass ein Standardmedium für fermentierte Milch, das aus 120 Gramm entrahmtem Milchpulver, 1 Gramm N3-Peptid und permutiertem Wasser qs für 1L zusammengesetzt ist, nach Kultur des Stammes bei einer Temperatur von 40°C bis zu einem pH von 4,7, eine Casson-Viskosität bei 4°C aufweist, die geringer oder gleich 500 mPa ist, bevorzugt geringer oder gleich 400 mPa.s.

19. Pulver aus fermentierter Milch oder Joghurt nach Anspruch 17 oder 18, **dadurch gekennzeichnet, dass** es eine Aw (Wasseraktivität) geringer als oder gleich 0,2, bevorzugt von 0,09 bis 0,19 aufweist.

20. Futtermittel, **dadurch gekennzeichnet, dass** es ein Pulver gemäß einem beliebigen der Ansprüche 17 bis 19 enthält, wobei das Pulver sich in einem verteilten Zustand befindet und der Wassergehalt des Futtermittels weniger als 3%, aber nicht ganz Null beträgt.

21. Gebäck, **dadurch gekennzeichnet, dass** es ein Pulver gemäß einem beliebigen der Ansprüche 17 bis 19 in einem Futtermittel enthält, wobei das Pulver sich in einem verteilten Zustand befindet und der Wassergehalt des Futtermittels weniger als 3%, aber nicht ganz Null beträgt.

22. Verwendung eines Pulvers gemäß einem beliebigen der Ansprüche 17 bis 19 zur Herstellung eines Nahrungsmittels.

23. Verwendung nach Anspruch 22, **dadurch gekennzeichnet, dass** das Nahrungsmittel ein Futtermittel oder ein das Pulver umfassendes Gebäck in einem Futtermittel ist.

**Claims**

1. A process for producing a powder of fermented milk or of yogurt, in order to obtain a powder with a high density of Streptococcus thermophilus and Lactobacillus bulgaricus lactic ferments without having to add S. thermophilus and L. bulgaricus lactic bacteria other than those which have participated in lactic fermentation, said powder also having very good properties as regards storage of the Streptococcus thermophilus and Lactobacillus bulgaricus ferments it contains, **characterized in that** the process comprises:

   • inoculating a dairy substrate, which may have undergone a heat treatment at least equivalent to pasteurization, by inoculation with at least one strain of Streptococcus thermophilus at a concentration of at least $5 \times 10^8$ cfu/g and at least one strain of Lactobacillus bulgaricus at a concentration of at least $1 \times 10^6$ cfu/g, in order to obtain an inoculated dairy substrate;
   • lactic fermentation of the thus-inoculated dairy substrate in order to obtain a fermented milk or a yogurt;
   • powderizing the fermented milk or yogurt obtained thereby, ensuring that the temperature(s) applied during powderization are sufficiently favourable to the survival of said strains of S. thermophilus and L. bulgaricus such that the powder obtained contains said at least one strain of S. thermophilus and said at least one strain of L. bulgaricus in a live or viable form at a concentration of at least $5 \times 10^8$ cfu/g and at least $1 \times 10^4$ cfu/g respectively, and drying the granules of powder on a vibrating bed at a temperature of 25°C to 40°C, preferably 30°C, until a powder of fermented milk or yogurt which has an Aw (water activity) of 0.25 or less is obtained.

2. A process according to claim 1, **characterized in that** said at least one strain of S. thermophilus is inoculated into the dairy substrate at a concentration of at least $1 \times 10^9$ cfu/g, preferably at least $2 \times 10^9$ cfu/g, more preferably more than $2.7 \times 10^9$ cfu/g, and **in that** said at least one strain of L. bulgaricus is inoculated into the dairy substrate at a concentration of at least $1 \times 10^7$ cfu/g, preferably at least $1.4 \times 10^7$ cfu/g.

3. A process according to any one of the preceding claims, **characterized in that** said powder of fermented milk or of yogurt obtained comprises said at least one strain of S. thermophilus in a live or viable form, at a concentration of at least $1 \times 10^9$ cfu/g, and **in that** said powder of fermented milk or of yogurt obtained comprises said at least one strain of L. bulgaricus in a live or viable form, at a concentration of at least $2 \times 10^4$ cfu/g, preferably at least $3 \times 10^4$ cfu/g, more preferably at least $4 \times 10^4$, more preferably at least $8 \times 10^4$ cfu/g, highly preferably at least $1 \times 10^5$ cfu/g, still more preferably at least $3 \times 10^5$ cfu/g.

4. A process according to any one of claims 1 to 3, **characterized in that** said powderizing of the fermented milk or yogurt comprises drying and granulation of the fermented milk or yogurt by atomization.

5. A process according to any one of claims 1 to 3, **characterized in that** said powderizing of the fermented milk or yogurt comprises freeze drying the fermented milk or yogurt and granulation of the freeze dried cake.

6. A process according to claim 4 or claim 5, **characterized in that** in addition to said steps of drying and granulation by atomization or, if appropriate, in addition to said drying by freeze drying and said granulation of the cake obtained, said powderizing comprises at least one complementary drying step.

7. A process according to claim 6, **characterized in that** said at least one complementary drying step is a step for drying on a fluidized bed produced using a gas stream with a temperature of less than 80°C.

8. A process according to any one of claims 6 to 7, **characterized in that** said at least one complementary drying step is carried out after granulation, and at a temperature of 25°C to 80°C.

**9.** A process according to any one of claims 6 to 8, **characterized in that** said powderizing of fermented milk or of yogurt comprises drying and granulation of the fermented milk or yogurt by atomization, and at least one complementary drying step on a fluidized bed, and said drying on a vibrating bed.

**10.** A process according to any one of the preceding claims, **characterized in that** said Aw is 0.2 or less, preferably 0.09 to 0.19.

**11.** A process according to any one of the preceding claims, **characterized in that** said at least one strain of S. thermophilus is a strain of S. thermophilus of the type known as the brittle type, which does not produce exopolysaccharides (EPS) or which produces them in such small quantities that a standard medium for milk fermentation composed of 120 grams of skimmed milk powder, 1 gram of N3 peptide, and permutated water up to a qs of 1 L, after culture of said strain at a temperature of 40°C to a pH of 4.7, has a Casson viscosity at 4°C of 500 mPa.s or less, preferably 400 mPa.s or less.

**12.** A process according to any one of the preceding claims, **characterized in that** said at least one strain of S. thermophilus is the S. thermophilus strain deposited at the CNCM with accession number 1-2130.

**13.** A process according to any one of the preceding claims, **characterized in that** during inoculation of said strains of S. thermophilus and L. bulgaricus, said dairy substrate has a dry matter content of 25% to 60%, preferably 28% to 55%, more preferably 38% to 45%.

**14.** An intermediate product which can be produced during implementation of the process according to any one of claims 1 to 13, **characterized in that** it is constituted by a fermented milk or yogurt which contains at least one strain of S. thermophilus at a concentration of at least $5 \times 10^8$ cfu/g, in a live or viable form, and at least one strain of L. bulgaricus at a concentration of at least $1 \times 10^7$ cfu/g, in a live or viable form, and **in that** said at least one strain of L. bulgaricus is contained in a ratio of 1 cfu per 40 to 60 cfu of said strain of S. thermophilus.

**15.** An intermediate product which is capable of being produced during implementation of the process according to claim 13, **characterized in that** it is constituted:

  • by a dairy substrate inoculated with at least one strain of S. thermophilus at a concentration of at least $5 \times 10^8$ cfu/g and with at least one strain of L. bulgaricus at a concentration of at least $1 \times 10^6$ cfu/g, so as to be suitable for producing, by lactic fermentation, a product which can be designated as a fermented milk or yogurt, intended for human foodstuffs; or
  • by a fermented milk or yogurt which contains at least one strain of S. thermophilus at a concentration of at least $5 \times 10^8$ cfu/g, in a live or viable form, and at least one strain of L. bulgaricus at a concentration of at least $1 \times 10^7$ cfu/g, in a live or viable form; and

**in that** said inoculated dairy substrate or, as appropriate, said fermented milk or yogurt, has a dry matter content of 25% to 60%, preferably 28% to 55%, more preferably 38% to 45%.

**16.** A process for producing fermented milk or yogurt containing S. thermophilus in a concentration of at least $5 \times 10^8$ cfu/g and L. bulgaricus in a concentration of at least $1 \times 10^7$ cfu/g, which comprises:

  • inoculating a dairy substrate, which may have undergone a heat treatment at least equivalent to pasteurization, by inoculation with at least one strain of Streptococcus thermophilus and at least one strain of Lactobacillus bulgaricus, in order to obtain an inoculated dairy substrate;
  • lactic fermentation of the thus-inoculated dairy substrate in order to produce a fermented milk or a yogurt containing said strains of Streptococcus thermophilus and Lactobacillus bulgaricus in a live or viable form;

**characterized in that** said at least one strain of Streptococcus thermophilus is inoculated at a concentration of at least $5 \times 10^8$ cfu/g, and **in that** said at least one strain of Lactobacillus bulgaricus is inoculated at a concentration of at least $1 \times 10^6$ cfu/g.

**17.** A powder of fermented milk or of yogurt which is obtainable by the process according to any one of claims 1 to 13, **characterized in that** it contains at least one strain of S. thermophilus in a live or viable form at a concentration of at least $5 \times 10^8$ cfu/g, preferably at a concentration of at least $1 \times 10^9$ cfu/g, more preferably at least $2 \times 10^9$ cfu/g, and at least one strain of L. bulgaricus in a live or viable form at a concentration of at least $1 \times 10^4$ cfu/g, preferably

at a concentration of at least $2 \times 10^4$ cfu/g, more preferably at a concentration of at least $3 \times 10^4$ cfu/g, and **in that** it has an Aw (water activity) of 0.25 or less.

18. A powder of fermented milk or of yogurt according to claim 17, **characterized in that** said at least one strain of S. thermophilus is a strain of S. thermophiles said to be of the brittle type, which does not produce exopolysaccharides (EPS), or which produces them in such small quantities that a standard medium for milk fermentation composed of 120 grams of skimmed milk powder, 1 gram of N3 peptide, and permutated water up to a qs of 1 L, after culture of said strain at a temperature of 40°C to a pH of 4.7, has a Casson viscosity at 4°C of 500 mPa.s or less, preferably 400 mPa.s or less.

19. A powder of fermented milk or of yogurt according to claim 17 or claim 18, **characterized in that** it has an Aw (water activity) of 0.2 or less, preferably 0.09 to 0.19.

20. A food filling, **characterized in that** it contains a powder according to any one of claims 17 to 19, said powder being in the dispersed state and the water content of said food filling being less than 3%, but not completely zero.

21. A biscuit, **characterized in that** it contains a powder according to any one of claims 17 to 19 in a filling, said powder being in the dispersed state and the water content of said filling being less than 3%, but not completely zero.

22. Use of a powder according to any one of claims 17 to 19, for the preparation of a food product.

23. Use according to claim 22, **characterized in that** said food product is a food filling or a biscuit comprising said powder in a filling.

**FIGURE 1**

**FIGURE 2**

**FIGURE 3**

pH

Ensemencement :

Inoculation conforme à l'invention
ST : $2,7.10^9$ ufc/g
LB : $1,4.10^7$ ufc/g
Inoculation à des doses inférieures à celles de l'invention
ST : $1.10^7$ ufc/g
LB : $5.10^4$ ufc/g

Au décaillage, les cinétiques amorcent toutes deux la phase stationnaire

pH = 4,75 en 5h de fermentation
ST : $5.10^8$ ufc/g
LB : $5.10^6$ ufc/g

Yaourt de l'invention
pH = 4,75 en 2h30
ST : $2,9.10^9$ ufc/g
LB : $5,9.10^7$ ufc/g

Temps (min)

**FIGURE 4**

**FIGURE 5**

**FIGURE 6**

**FIGURE 7**

**FIGURE 8A**

**FIGURE 8B**

Taux cumulatif de survie de Streptococcus thermophilus, en % de la
dose initiale après passage dans l'estomac et le petit intestin

poudre de l'invention dans
fourrage gras

autre poudre de l'invention
dans fourrage gras

poudre de l'invention
(poudre « nue »)

yoghourt de référence (doses
d'inoculation inférieures à
celles de l'invention)

Temps (minutes)

**FIGURE 9**

Taux cumulatif de survie de Lactobacillus bulgaricus, en % de la dose
initiale après passage dans l'estomac et le petit intestin

poudre de l'invention
(poudre « nue »)

yoghourt de référence
(doses d'inoculation
inférieures à celles
de l'invention)

Temps (minutes)

**FIGURE 10**

**FIGURE 11**

EP 1 971 209 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0924993 B1
- EP 0818529 B1
- WO 9409895 A
- US 5525305 A

**Littérature non-brevet citée dans la description**

- **BIELECKA et al.** *Polish Journal of Food and Nutrition Sciences,* 1998, vol. 7 (2), 267-274
- **CRAVEN ; STEERS ; ANFINSEN.** *Journal of Biological Chemistry,* 1965, vol. 240, 2468-2477